(19) Europäisches Patentamt / European Patent Office / Office européen des brevets

(11) EP 1 910 454 B2

(12) # NEUE EUROPÄISCHE PATENTSCHRIFT

Nach dem Einspruchsverfahren

(45) Veröffentlichungstag und Bekanntmachung des Hinweises auf die Entscheidung über den Einspruch:
**30.11.2016 Patentblatt 2016/48**

(45) Hinweis auf die Patenterteilung:
**21.10.2009 Patentblatt 2009/43**

(21) Anmeldenummer: **05755095.6**

(22) Anmeldetag: **23.06.2005**

(51) Int Cl.:
***C08K 5/00*** *(2006.01)*

(86) Internationale Anmeldenummer:
**PCT/EP2005/006798**

(87) Internationale Veröffentlichungsnummer:
**WO 2006/136191 (28.12.2006 Gazette 2006/52)**

(54) **KOORDINATIONSPOLYMERE TRIETHANOLAMINPERCHLORATO (TRIFLATO)-METALL-INNERKOMPLEXE ALS ADDITIVE FÜR SYNTHETISCHE POLYMERE**

TRIETHANOLAMINE PERCHLORATO (TRIFLATO) METAL INNER COMPLEX COORDINATION POLYMERS AS ADDITIVES FOR SYNTHETIC POLYMERS

COMPLEXES INTERNES DE TRIETHANOLAMINOPERCHLORATO(TRIFLATO)-METAL POLYMERES DE COORDINATION UTILISES EN TANT QU'ADDITIFS POUR DES POLYMERES DE SYNTHESE

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**16.04.2008 Patentblatt 2008/16**

(73) Patentinhaber:
- **CATENA Additives GmbH & Co. KG**
  **04107 Leipzig (DE)**
  Benannte Vertragsstaaten:
  **BG CH CY CZ DK EE ES FI GR HU IE IS LI LT LU MC NL PL PT RO SE SI SK**
- **IKA Innovative Kunststoffaufbereitung Gmbh & Co.Kg**
  **06766 Wolfen (DE)**
  Benannte Vertragsstaaten:
  **AT BE DE FR GB IT TR**

(72) Erfinder:
- **WEHNER, Wolfgang**
  **64673 Zwingenberg (DE)**
- **DAVE, Trupti**
  **64673 Zwingenberg (DE)**
- **WANNEMACHER, Thomas**
  **82024 Taufkirchen (DE)**

(74) Vertreter: **Büchel, Edwin et al**
**Isenbruck Bösl Hörschler LLP**
**Patentanwälte**
**Eastsite One**
**Seckenheimer Landstraße 4**
**68163 Mannheim (DE)**

(56) Entgegenhaltungen:

| | |
|---|---|
| **EP-A- 1 466 941** | **EP-A1- 0 990 729** |
| **WO-A2-02/48249** | **JP-A- 53 016 750** |
| **JP-A- 61 009 451** | **US-A- 5 004 776** |
| **US-A- 5 204 473** | **US-A1- 2004 054 043** |
| **US-A1- 2004 204 522** | **US-A1- 2005 095 420** |
| **US-B1- 6 699 945** | **US-B2- 7 741 390** |

- **NAIINI A A ET AL: "Triethanolamine Complexes of H+, Li+, Na+, Sr2+, and Ba2+ Perchlorates" INORGANIC CHEMISTRY, AMERICAN CHEMICAL SOCIETY, EASTON, US, Bd. 33, 1994, Seiten 2137-2141, XP002277520 ISSN: 0020-1669**
- **JANIAK, CHRISTOPH: 'ENGINEERING COORDINATION POLYMERS TOWARDS APPLICATIONS' Nr. 14, 01 Januar 2003, ISSN 1477-9226 Seite 2781, XP055002438 DOI: 10.1039/B305705B**

EP 1 910 454 B2

## Beschreibung

Die vorliegende Erfindung betrifft Zusammensetzungen aus synthetischen Polymeren und dem koordinationspolymeren Triethanolaminperchlorato-Natrium-Innerkomplex sowie Stabilisatorsysteme den Innerkomplex enthaltend.

Halogenhaltige Kunststoffe oder daraus hergestellte Formmassen neigen bekanntermaßen zu Abbau- beziehungsweise Zersetzungsreaktionen, wenn sie thermischer Belastung ausgesetzt sind oder mit energiereicher Strahlung, zum Beispiel Ultraviolettlicht, in Kontakt kommen.

Zur Stabilisierung von z.B. PVC vor der Verarbeitung werden bisher in der Praxis schwermetallhaltige Stabilisatoren auf Basis von Cd, Pb, Sn und Zn oder toxikologisch weniger bedenkliche Metalle, wie Barium, eingesetzt. In diesen Fällen wird die ohnehin schädliche Wirkung - im Hinblick auf eine verbesserte Resorbierbarkeit und Verträglichkeit im Warmblüterorganismus - durch eine Überführung in organische Metallverbindungen auf Fettsäurebasis, z.B. Laurate, Stearate und Oleate, oder durch Transformation in Organoderivate (Organometallverbindungen oder Metallorganyle), insbesondere beim Zinn, noch zusätzlich erhöht. Speziell im letzten Falle wird durch die Alkylierung des Metalles unter Ausbildung einer, auch unter metabolischen Bedingungen, hydrolysestabilen Metallkohlenstoffbindung ein magensaftresistentes System geschaffen, welches Fähigkeiten besitzt, die Blut-Hirn-Schranke zu überwinden, um ein eventuelles neurotoxisches Potential zu entfalten.

Diese Problematik betrifft nicht nur die Anwender von PVC-Fertigartikeln, sondern auch deren Hersteller, die solche schwermetallhaltige Stabilisatoren im PVC-Substrat einarbeiten. Betroffen sind auch die Produzenten dieser Stabilisatoren selbst, die schwermetallhaltige Vorstufen in eben diese Stabilisatoren überführen.

Neben der toxischen Wirkung auf den Warmblüterorganismus besitzen diese Metalle und deren (organische) Verbindungen oder Organoverbindungen "Ökotoxwirkung", d.h. eine schädliche Wirkung auf Fische, Krebse und andere Meer- und Süßwasserorganismen; siehe "List of Priority Hazardous Substances", verabschiedet auf der dritten NordseeKonferenz (Den Haag, 3/1990). In dieser Liste ist Zink neben Blei, Cadmium, Arsen und Quecksilber aufgeführt. Siehe ebenso Richtlinie 2000/60/EG (Festlegung der Liste prioritärer Stoffe im Bereich der Wasserpolitik - letzte Aktualisierung 11/2001) und "Progress Report" der fünften Nordseekonferenz (Bergen, 3/2002), der festhält, dass u.a. die Zielsetzungswerte für Zink nicht erfüllt wurden. Ferner werden in der Klärschlammverordnung des Umweltbundesamtes (BGB1. I S. 1492, letzte Aktualisierung v. 25.04.2002) für Schwermetalle, nämlich Pb, Cd, Cr, Cu, Ni, Hg und Zn, Höchstmengen festgelegt. Auch können anorganische Schwermetallsalze über den in der Natur vorhandenen Mechanismus der Biomethylierung in hochgiftige neurotoxische Verbindungen umgewandelt werden. Hier ist insbesondere an Trimethylblei- und Trimethylzinnverbindungen zu denken. Organische Stabilisatoren auf Basis der Elemente C, H, N, O werden bei der Müllverbrennung in $CO_2$, $H_2O$ und Ammoniumverbindungen überfährt, die allesamt bioverträglich sind. Schwermetallverbindungen werden hingegen nicht abgebaut, sind also persistent und bioakkumulieren somit.

Die Substitution schwermetallhaltiger Stabilisatoren durch organische Verbindungen sollte daher ein wichtiger Beitrag zu dieser Zielerreichung sein. In Grossbritannien und Dänemark wurde die Verwendung von Pb-Stabilisatoren in PVC-Trinkwasserrohren mit Ablauf von 2002 bzw. 2003 verboten. In Dänemark ist dieses Verbot zusätzlich mit der Auflage verbunden, anstelle von Pb-, keine Sn-Stabilisatoren einzusetzen. Andere Länder, wie Schweden, Norwegen oder Finnland wollen diesem Verbot folgen. Ein Pb-Verbot EUweit ist derzeit bei den zuständigen Behörden in Verhandlung.

Es besteht also Bedarf nach organischen ("grünen") Stabilisatoren, die frei von Schwermetall(verbindung)en oder anderen toxikologisch bedenklichen Metall(verbindung)en, insbesondere vollständig frei von Blei, Zinn und Barium sind.

Alkali- oder Erdalkaliperchloratsalze in Gegenwart von Metallseifen sind seit langem bekannte Costabilisatoren für Weich-PVC, speziell im KFZ-Bereich, wobei dieser Zusatz die PVC-Verfärbung in PUR-hinterschäumten Formteilen retardieren soll (JP 59184240, JP 6219732, JP 03097748, US 4957954, EP 273766 A, JP 03126745).

Später wurde gefunden, dass der Zusatz von anorganischen Perchloratsalzen zu einer Verbesserung der Wirksamkeit von organisch stabilisiertem (schwermetallfreiem = Zn- und Pb-frei) Hart-PVC führt (EP 768336 A2).

Ein weiterer anorganischer perchloratsalzhaltiger Stabilisator ist ebenfalls aus Japan bekannt. Hierbei handelt es sich um einen anionmodifizierten Hydrotalcit. Er wird ebenfalls schwerpunktmäßig in Weich-PVC eingesetzt (EP 522810 A2).

In neuerer Zeit erschienen zwei Anmeldungen, die beschreiben, anorganische Perchloratsalze durch Onium-, speziell Ammoniumperchloratsalze zu ersetzen (DE 10160662 A1, DE 10214152 A1). Zwei weitere Anmeldungen für Anwendungen im PVC-Bereich stammen ebenfalls aus Japan; sie enthalten u. a. auch das Triethanolammonium(TEA)-Perchlorat (JP 61009451) bzw. tensidische Trialkylethanolammonium-Perchlorate (JP 1090242), die als Antistatika Verwendung finden können. Daneben existiert noch eine größere Gruppe von japanischen Patenten, die tensidische Tetraalkylammoniumperchlorate als Antistatikumkomponenten in PVC beanspruchen. Erwähnenswert ist in diesem Zusammenhang auch DE 2540655 A und die Publikation von S. RIETHMAYER in Gummi, Asbest, Kunststoffe (GAK), [4], 298-308 (1973).

Eine weitere Modifikation (auf anorganischer Basis) von Alkaliperchloratsalzen wird durch Calciumhydroxidzusatz bewerkstelligt (DE 10124734 A1). Diese Trockenmischung wird nach einem "in situ"-Verfahren aus wäßriger Perchloratsalzlösung und gebranntem Kalk gewonnen.

Ferner ist bekannt, Melamin und Hydantoin mit Perchloratsalzen abzumischen und diese Mischungen als PVC-Thermostabilisatoren zu verwenden (JP 53016750). Die dort genannten Beispiele gebrauchen aber meist große Mengen an Weichmacher oder immens hohe Anteile an Calciumstearat bzw. große Mengen an anorganischen Füllstoffen. Für die Stabilisierung von Hart-PVC sind diese Systeme aber ungeeignet.

Weiterhin ist bekannt, primäre Alkanolamine mit Zinkglutamat oder -sulfat zu komplexieren. Ausserdem sind in EP 394547 A2 Stabilisatorsysteme für PVC beschrieben, die flüssige Alkali- oder Erdalkaliperchlorat-Komplexe mit Polyolen als Komponenten beinhalten. N-haltige Polyole als Komplexliganden und Komplexe in fester Form werden nicht beansprucht. Außerdem ist bekannt, Alkanolamine zusammen mit Perchloratsalzen als PVC-Thermostabilisatoren einzusetzen (WO 02/48249). Feste Lösungen (solid solutions) oder Komplexe oder gar Innerkomplexe werden dort nicht beschrieben. Des Weiteren werden Lösungen von Metallperchloratsalzen in Glykolen oder Glykolethern als Stabilisatorbestandteile geclaimt (WO 94/24200). Zusätzlich sind Absorbate von Alkali- oder Erdalkaliperchloraten auf Zeolithen oder Calciumsilikat in Patenten mehrfach vorbeschrieben, wie in EP 768336 A2 und US 5034443 sowie in US 5225108. Diese werden jedoch in EP 1404756 A1 speziell als Stabilisatorkomponenten erwähnt.

Alle diese Publikationen sind durch weitere zahlreiche Nachteile gekennzeichnet:

1. Nahezu alle anorganischen Perchloratsalze schmelzen über 250°C meist über 300°C und dann unter Zersetzung. Sie sind deshalb im Polymersubstrat schwer homogen zu dispergieren und schwer aufschließbar. Außerdem bilden sie im fertigen Formartikel oftmals aufgrund ihrer Körnung Stippen und Einschlüsse. Eine Feinvermahlung der Perchloratsalze, die Abhilfe schaffen könnte, ist technologisch schwierig durchführbar.

2. Anorganische Perchloratsalze sind in den meisten Fällen hygroskopisch und verbacken bzw. agglomerieren bei der Lagerung. Dies wird dadurch gezeigt, dass Magnesiumperchlorat sogar als Trockenmittel eingesetzt wird.

3. Anorganische Perchloratsalze auf Trägern, wie Calciumsilikat oder Zeolithen, sind nicht universell einsetzbar. Transparente Hart-PVC-Produkte sind mit diesen Zusätzen nicht herstellbar.

4. Wäßrige Lösungen oder Lösungen dieser Salze in einem organischen Solvens sind prinzipiell zwar einsetzbar, aber zum einen führt Wasser im Stabilisatorsystem zu Unverträglichkeit und Interreaktion im Polymeren sowie zur Blasenbildung. Zum anderen führt ein Zusatz von organischen Lösemitteln bei Hart-PVC zu einer Erniedrigung des Vicat-Wertes (80°C) sowie bei der Extrusion und Kalandrierung zu flüchtigen organischen Dämpfen (VOC-Problematik).

5. Bestimmte organische Perchloratsalze, nämlich primäre, sekundäre und tertiäre Aminperchlorate sind aufgrund ihrer Neigung zur spontanen Zersetzung als NH-Perchlorate gefährlich zu handhaben, wobei Ammoniumperchlorat als letztes Glied in dieser Reihe sogar als Raketentreibstoffkomponente eingesetzt wird. Ferner sind Aminperchlorate in Bezug auf ihre Schmelzpunkte nicht optimal. Quaternäre Ammoniumperchlorate sind als Thermostabilisatoren für PVC nicht vorbeschrieben, weisen aber als solche nur eine bescheidene Performance auf.

6. Die den Aminperchloraten zugrunde liegenden Amine wirken im allgemeinen in PVC stark degradierend (z.B. Nicotinsäureester, Formamid und Trioctylamin).

Quaternäre Ammoniumperchlorate, die als PVC-Antistatika vorgeschlagen wurden und deren thermostabilisierende Wirkung in PVC erwähnt wird, sind mit Skepsis zu betrachten, da festgestellt wurde, dass ebendiese Verbindungsklasse in PVC thermodegradierend wirkt.

Die Aufgabe der vorliegenden Erfindung liegt daher darin, Zusammensetzungen und Stabilisatorsysteme bereitzustellen, die zumindest teilweise die Nachteile des Standes der Technik beheben.

Die Aufgabe wurde gelöst durch eine Zusammensetzung enthaltend mindestens ein synthetisches Polymer und mindestens den koordinationspolymeren Triethanolaminperchlorato-Natrium-Innerkomplex mit der Monomereinheit der Formel **(A-1):**

[(TEA)NaPc] **(A-1)**

wobei

TEA = Triethanolamin und Pc = perchlorato ist.

Weiterhin wurde die Aufgabe gelöst durch ein Stabilisatorsystem zur Thermostabilisierung synthetischer Polymere enthaltend den koordinationspolymeren Triethanolaminperchlorato-Natrium-Innerkomplex mit der Monomereinheit der Formel **(A-1):**

[(TEA)NaPc] **(A-1)**

wobei

TEA = Triethanolamin und Pc = perchlorato ist und wobei zusätzlich ein Linear- und Cycloureid (substituierter Cyanacetylharnstoff, substituierte Iminobarbitursäure, substituiertes Aminouracil, Hydantoin) und/oder ein 3-Aminocrotonsäureester und/oder ein Dihydropyridin-dicarbonsäureester der Formel **(B-1), (B-2), (C-1)** und **(C-2)** enthalten ist

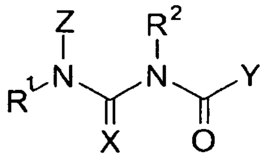

**(B-1)** und

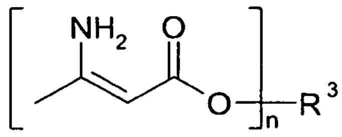

**(B-2)**

sowie

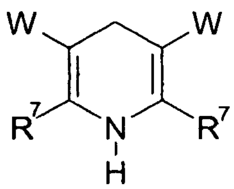

**(C-1)**

und

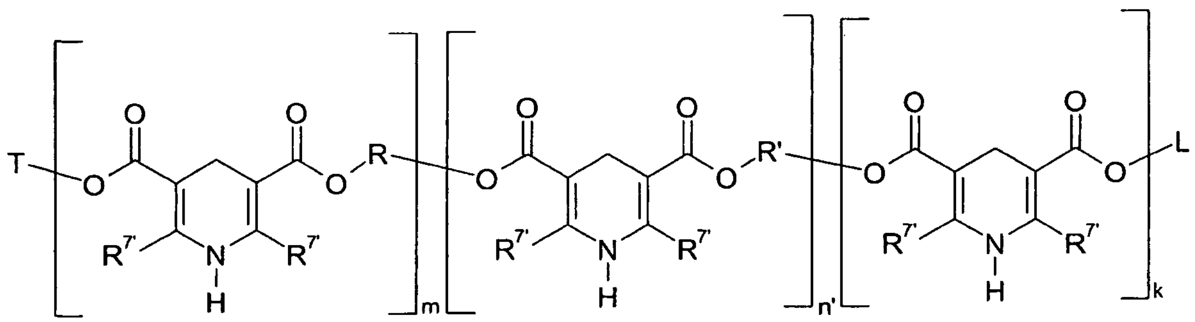

**(C-2)**

mit

**X** = O oder S; **Y** = $CH_2CN$, **Z** = H oder **Y** und **Z** bilden das Brückenglied $CH_2$-C=NH, $CR^5$=C-$NHR^6$ oder $R^1R^2C$.

**$R^1$, $R^2$** unabhängig voneinander H, $C_1$ - $C_{22}$-Alkyl, Cyclohexyl, (Meth)allyl, Oleyl, Phenyl, Benzyl, Phenethyl, (Tetrahydro)naphthyl, Meth(oder Eth)oxypropyl(oder ethyl), $CH_2$-CHOH-$R^{1a}$, $CH_2$-CHOH-$CH_2X'R^{1a}$ ;

**X'** = O oder S;

**$R^{1a}$** = H, $C_{1-22}$-alkyl, Cyclohexyl, (Meth)allyl, Oleyl, Phenyl, Benzyl, Phenethyl, (Tetrahydro)naphtyl oder

Meth(oder Eth)oxypropyl(oder ethyl);

**$R^3$** = unverzweigtes oder verzweigtes $C_2$ - $C_{20}$ -Alkylen, das durch 1 bis 4 O - oder S-Atome unterbrochen oder/und durch 1 bis 4 OH-Gruppen substituiert sein kann, oder Dimethylol-cyclohexan-1,4-diyl, Polyethylen( oder-propylen)glykol-$\alpha,\omega$-diyl (vorzugsweise ist Poly = Tetra bis Deka), Polyglyceryl -$\alpha,\omega$-diyl (vorzugsweise ist Poly = Tetra bis Deka) oder Glycerin-triyl, Trimethylolethan(oder-propan)-triyl, Pentaerythrittri(oder-tetra)yl, Bis-trimethylolethan(oder-propan)-tri(oder-tetra)yl, Diglycerin-tri(oder-tetra)yl, Tetrit-tetrayl, Triglycerin-tri(oder-tetra,-penta)yl, Pentit-pentayl, Dipentaerythritpenta(oder-hexa)yl und Hexit-hexayl;

**n** = 2, 3, 4, 5 oder 6.

**$R^5$**= H oder ($C_3$ - $C_{10}$-Alkyliden)$_{1/2}$; wobei dieses Alkyliden durch bis zu 2 O Atomen unterbrochen sein oder bis zu 2 Substituenten unabhängig ausgewählt aus der Gruppe bestehend aus OH, Phenyl und Hydroxyphenyl aufweisen kann;

**$R^6$** = H, Hydroxy-$C_2$ - $C_4$-alkyl, 3-$C_1$ - $C_{10}$-Alkoxy-2-hydroxypropyl oder Mono- bis Trihydroxy-, Mono- bis Tri-$C_1$ - $C_4$-alkyl- oder/und Mono- bis Tri- $C_1$-$C_4$-alkoxyphenyl, Allyl, mono- bis trisubstituiertes Phenyl;

**$R^7$,$R^{7'}$** unabhängig voneinander = verzweigtes und unverzweigtes $C_1$ - $C_4$-Alkyl, Phenyl, Cyclohexyl;

**W** = $CO_2CH_3$, $CO_2C_2H_5$, $CO_2{}^nC_{12}H_{25}$ oder $CO_2C_2H_4$-S-$^nC_{12}H_{25}$;

**L**, **T** = unsubstituiertes $C_{1-12}$-Alkyl;
sowie
**m** und **n'** ganze Zahlen von 0 bis 20 bedeuten,

**k** 0 oder 1 ist und

**R** und **R'** unabhängig voneinander Ethylen, Propylen, Butylen oder eine Alkylen- oder Cycloalkylenbismethylengruppe des Typ -($C_pH_{2p}$-X"-)$_t$$C_pH_2$p- sind, wobei **p** eine ganze Zahl von 2 bis 8 ist, t eine ganze Zahl von 0 bis 10 ist und **X"** für Sauerstoff oder Schwefel steht.

Es wurde gefunden, dass der Innerkomplex **(A-1)**, die in den Punkten 1-6 geschilderten Nachteile zumindest teilweise nicht aufweist. So zeigt die Verbindung einen scharfen Fp., schmilzt dann auch niedriger und ohne Zersetzung. Der Schmelzpunkt liegt höher als 80°C, aber unter 200°C, d.h. sie beeinträchtigt den Vicat (80°C)-Wert des fertigen Formteils nicht negativ und schmilzt bei den Verarbeitungstemperaturen homogen, wodurch eine Stippenbildung und ein Festpartikeleinschluß vermieden wird. Transparente PVC-Artikel sind somit herstellbar. Eine homogene Produktverteilung wird beim Heißmischen gewährleistet. Die Pulverabmischungen sind aufgrund der fehlenden Hygroskopizität nicht klebend, nicht verbackend, nicht agglomerierend und frei fließend. Die Produkte können ohne Qualitätseinbußen an Luft gelagert werden. Die Feststoffe besitzen keine scharfkantigen Kristallite, wirken also bei der Verarbeitung nicht abrasiv. Durch die Einbindung in eine stabile Käfigstruktur (Metallatrankäfig oder Aza-Cage) wird die Perchloratgruppe phlegmatisiert. Die thermostabilisierende Wirkung dieses Innerkomplexes, besonders in Form von Zweier- und Dreierkombinationen mit Anfangsfarbenverbesserern **(AFV)**, und Chlorwasserstoffscavengern **(SCV)** ist wesentlich gesteigert gegenüber derjenigen, die im Stand der Technik (SdT) genannt ist. Diese Produkteigenschaften waren überraschend. Perchlorato-TEA-Innerkomplexe (TEA = Triethanolamin) von Lithium, Natrium, Strontium und Barium sind vorbeschrieben in J.G. VERKADE et.al., Inorg. Chem. 33, 2137 (1994). Für einen Teil dieser Innerkomplexe wurde auch eine Röntgenstrukturanalyse (RSA) durchgeführt. Für die Natrium- und Barium-Innerkomplexe ergibt sich folgende Stöchiometrie: $[(TEA)NaOClO_3]_n$ und $[(TEA)_2Ba(OClO_3)_2]_2$, wobei der Oligo- oder Polymerisationsgrad aus der RSA ersichtlich ist. Die Innerkomplexe sind wasserfrei. Im Falle des Natrium-Innerkomplexes[1)] mit dem Fp. von 129-130°C zeigt die RSA folgendes Bild: das Na-Kation weist in der Koordinationssphäre vier Liganden auf, eine TEA-Gruppe wirkt als vierzähniger, nicht verbrückender $\kappa$-N $O^3$-Ligand, zwei verbrückende, nichtchelatisierende TEA-Gruppen ($\mu$-Liganden) und ein einzähnigbindendes Perchloratanion. Damit ergibt sich für Natrium eine Gesamtkoordinationszahl von sieben. Da das Perchloratanion als Perchlorato- Ligand fungiert, sind diese Substanzen zur Klasse der Innerkomplexverbindungen zu zählen. Überraschenderweise eignen sich solche Innerkomplexe in Stabilisatorsystemen für synthetische Polymere und in Zusammensetzungen mit diesen. Vorzugsweise handelt es sich bei dem synthetischen Polymer um ein halogenhaltiges Polymer, insbesondere PVC. Aufgrund der besonderen Eignung für halogenhaltige Polymere wird nachfolgend bei der Beschreibung der Erfindung auf diese Bezug genommen. Es sei jedoch betont, dass im Rahmen der vorliegenden Erfindung auch nicht-halogenhaltige synthetische Polymere stabilisiert werden können.

Die Eignung einer solchen Komplexstruktur ist auch deshalb überraschend, da der Stand der Technik (D.S.VAN ES in Catalytic Heat Stabilisers: Fact or Fiction? - 9th. Intern. PVC Conf., Brighton, Apr. 2005) besagt, dass Perchloratsalze nur dann wirksam PVC stabilisieren, wenn ein "nacktes" Perchloratanion und damit ein ebenfalls "nacktes" Metallkation vorliegen. Dies ist gleichzusetzen mit einem nichtkoordinierenden Perchloratanion und einem nichtkoordinierenden Metallkation, was wiederum mit den geschilderten Strukturmekrmalen von **(A-1)** nicht in Einklang zu bringen ist. Die erfindungsgemäße Verbindung ist ein Feststoff und enthält TEA als tertiäres Alkanolamin als Komplexliganden.

Weiterhin war überraschend, dass diese spezielle Ligandeigenschaft von TEA, da die Einführung von zusätzlichen Methylgruppen (Übergang vom tertiären Alkanolamin TEA zum tertiären Alkanolamin TIPA) dieses Komplexierungsmerkmal so verändert, dass ein Versuch zur Herstellung und Isolierung von festen homologen TIPA-Komplexen scheitert. Ebenso unmöglich ist auch die Einführung einer einzigen Methylgruppe bzw. eines langkettigen (tensidischen) Restes in den TEA-Liganden, da auch hier die stabile Innerkomplex(Käfig)struktur gestört wird.

[1] in dieser PS-Schrift mit TEAP abgekürzt.

Der Innerkomplex **(A-1)** wird vorzugsweise im halogenhaltigen Polymer zweckmäßig von 0,001 bis 5 phr, bevorzugt von 0,01 bis 3 phr und ganz besonders von 0,01 bis 2 phr eingesetzt.

Der Innerkomplex **(A-1)** kann, wie folgt, mit weiteren Substanzgruppen kombiniert werden:

Linear- oder Cycloureid und/oder Polyaminocrotonsäureester und/oder Cyanamide der Formeln **(B-1)** und **(B-2)** und/oder Dihydropyridine der Formeln **(C-1)** und **(C-2)**:

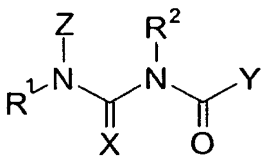

**(B-1)** und

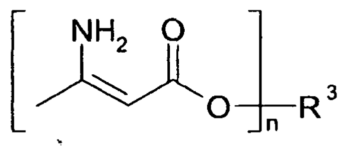

**(B-2)**

sowie

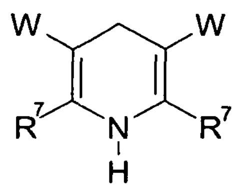

**(C-1)**

und

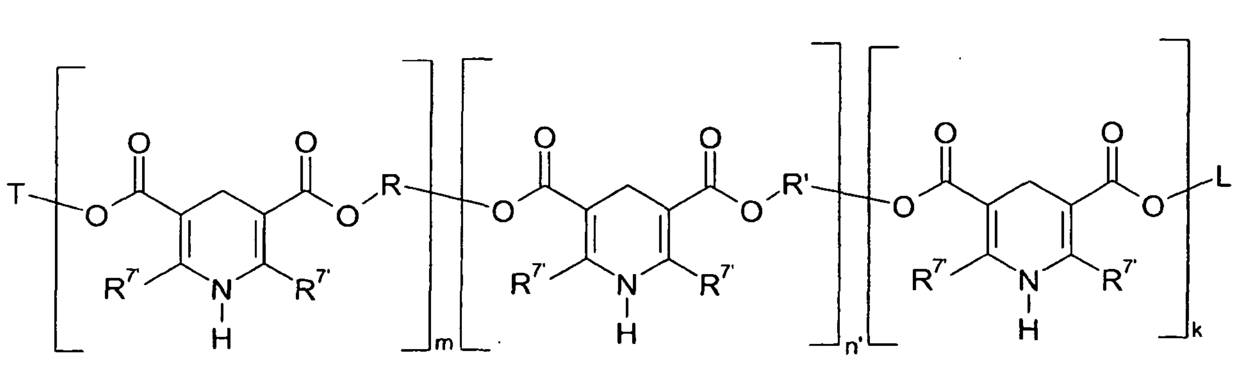

**(C-2)**

mit

**X** = O oder S; **Y** = $CH_2CN$, **Z = H** oder **Y** und **Z** bilden das Brückenglied $CH_2$-C=NH, $CR^5$=C-$NHR^6$ oder $R^1R^2C$.

**$R^1$**, **$R^2$** unabhängig voneinander = H, $C_1$ - $C_{22}$-Alkyl, Cyclohexyl, (Meth)allyl, Oleyl, Phenyl, Benzyl, Phenethyl, (Tetrahydro)naphthyl, Meth(oder Eth)oxypropyl(oder ethyl), $CH_2$-CHOH-$R^{1a}$, $CH_2$-CHOH-$CH_2X'R^{1a}$ ;

**X'** = O oder S;

**$R^{1a}$** = H, $C_{1-22}$-alkyl, Cyclohexyl, (Meth)allyl, Oleyl, Phenyl, Benzyl, Phenethyl, (Tetrahydro)naphtyl oder Meth(oder Eth)oxypropyl(oder ethyl);

**$R^3$** = unverzweigtes oder verzweigtes $C_2$ - $C_{20}$ -Alkylen, das durch 1 bis 4 O - oder S-Atome unterbrochen oder/und durch 1 bis 4 OH-Gruppen substituiert sein kann, oder Dimethylol-cyclohexan-1,4-diyl, Polyethylen(oder -propylen)glykol-$\alpha$, $\omega$-diyl (vorzugsweise ist Poly = Tetra bis Deka), Polyglyceryl -$\alpha$,$\omega$-diyl (vorzugsweise ist Poly = Tetra bis Deka) oder Glycerin-triyl, Trimethylolethan(oder -propan)-triyl, Pentaerythrit-tri(oder -tetra)yl, Bis-trimethylolethan(oder -propan)-tri(oder -tetra)yl, Diglycerin-tri(oder tetra)yl, Tetrit-tetrayl, Triglycerin-tri(oder -tetra, -penta)yl, Pentit-pentayl, Dipentaerythritpenta(oder -hexa)yl und Hexit-hexayl;

**n** = 2, 3, 4, 5 oder 6;

**$R^5$**= H oder ($C_3$ - $C_{10}$-Alkyliden)$_{1/2}$; wobei dieses Alkyliden durch bis zu 2 O Atomen unterbrochen sein oder bis zu 2 Substituenten unabhängig ausgewählt aus der Gruppe bestehend aus OH, Phenyl und Hydroxyphenyl aufweisen kann;

**$R^6$** = H, Hydroxy-$C_2$-$C_4$-alkyl, 3-$C_1$-$C_{10}$-Alkoxy-2-hydroxypropyl oder Mono- bis Trihydroxy-, Mono- bis Tri- $C_1$ - $C_4$-alkyl- oder/und Mono- bis Tri- $C_1$-$C_4$-alkoxyphenyl, Allyl, mono- bis trisubstituiertes Phenyl;

**$R^7$**, **$R^{7'}$** unabhängig voneinander verzweigtes und unverzweigtes $C_1$-$C_4$-Alkyl, Phenyl, Cyclohexyl;

**W** = $CO_2CH_3$, $CO_2C_2H_5$, $CO_2{}^nC_{12}H_{25}$ oder $CO_2C_2H_4$-S-$^nC_{12}H_{25}$;

**L, T** = unsubstituiertes $C_{1-12}$-Alkyl steht; sowie

**m und n**' ganze Zahlen von 0 bis 20 bedeuten

**k** 0 oder 1 ist; und

**R** und **R**' unabhängig voneinander Ethylen, Propylen, Butylen oder eine Alkylen- oder Cycloalkylenbismethylengruppe des Typ -($C_pH_{2p}$-X"-)$_t$$C_pH_{2p}$- sind, wobei **p** eine ganze Zahl von 2 bis 8 ist, t eine ganze Zahl von 0 bis 10 ist und **X"** für Sauerstoff oder Schwefel steht. Die in Klammern angegebenen Reste sind weitere alternative Reste, so bedeutet Polyethylen(oder propylen)glykol Polyethylenglykol oder Polypropylenglykol. Dies gilt auch nachfolgend.

Ebenso überraschend war der Befund dass durch die Kombination von Innerkomplex (**A-1**) mit Aminocrotonaten oder Dihydropyridinen (**B-2, C-1**, **C-2**) das Transparenzverhalten verbessert wird. So lassen sich bei Verwendung von ansonst transparenzgebenden Rezepturbestandteilen Transparenzgrade von mehr als 90% erzielen.

Bevorzugte Definitionen der Substituenten, Kurzformeln und Indizes sind die nachfolgenden:

Bei (**B-1**) gilt in allen Fällen **X** = O oder S. Bei Linearureiden ist **Y** = $CH_2CN$ und **Z** = **H**. Bei Cycloureiden gilt im Falle der 6(4)-Iminobarbitursäuren für das Brückenglied **Y-Z** = $CH_2$-C=NH, im Falle der Aminouracile ist das Brückenglied **Y-Z** = $CR^5$=C-$NHR^6$ und im Falle der Hydantoine ist das Brückenglied **Y-Z** = $R^1R^2C$. Bei (**B-2**) gilt für **n** = 2,3,4,5 oder 6.

Die Substituenten **$R^1$** und **$R^2$** können $C_1$-$C_{22}$-Alkyl sein, nämlich Methyl, Ethyl, Propyl, Butyl, Pentyl, Hexyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Eicosyl, Heneicosyl und Docosyl, wobei diese Reste verzweigt oder unverzweigt sein können. Bevorzugt werden $C_1$ - $C_8$- alkyl, wobei besonders bevorzugt sind methyl, ethyl, propyl und butyl. Desweiteren können **$R^1$** und **$R^2$** Cyclohexyl, (Meth)allyl, Oleyl, Phenyl, Benzyl, Phenethyl, Methoxyethyl, Ethoxyethyl, Methoxypropyl und Ethoxypropyl sein. Bevorzugt sind Allyl und Phenethyl, Cyclohexyl, Benzyl, Methoxypropyl und Ethoxypropyl, besonderes bevorzugt sind Cyclohexyl, Benzyl, Methoxypropyl und Ethoxypropyl.

Bevorzugt ist **X** = O und besonders bevorzugt sind $\mathbf{R^1}$ = $CH_3$ und $\mathbf{R^2}$ = $CH_2$-CHOH-$R^{1a}$ wobei $\mathbf{R^{1a}}$ bevorzugt = H, $CH_3$, $C_2H_5$ oder $\mathbf{R^2}$ = $CH_2$-CHOH-$CH_2OR^{1a}$, wobei $\mathbf{R^{1a}}$ bevorzugt = H oder $C_1$ - $C_{10}$-Alkyl und Allyl.

$C_1$ - $C_{10}$-Alkyl enthält beispielsweise Methyl, Ethyl, n-Propyl, iso-Propyl, n-Butyl, isoButyl, sec-Butyl, tert-Butyl, Hexyl, Heptyl, Octyl, 2-Ethyl-hexyl, Nonyl, Decyl, Neodecyl.

$\mathbf{R^5}$ bedeutet Wasserstoff oder ($C_3$ - $C_{10}$-alkyliden)$_{1/2}$ - der Index ½ sagt, dass es sich hierbei um Bis-Produkte handelt, also um Alkyliden-bis-6-Aminouracile. Als Alkyliden-Gruppen seien genannt Ethyliden, Propyliden, Butyliden, Pentyliden, Hexyliden, Heptyliden, Octyliden, Nonyliden und Decyliden sowie Salicyliden und Cinnamyliden. Die Benennung gilt für lineare und verzweigte Vertreter. Bevorzugt sind Propyliden, Hexyliden, Heptyliden und Octyliden besonders bevorzugt sind Hexyliden und Heptyliden.

Der Substituent $\mathbf{R^6}$ benennt Wasserstoff und Hydroxy- $C_2$ - $C_4$-Alkyl. Letztere Gruppe enthält 2-Hydroxyethyl, 2- und 3-Hydroxypropyl sowie 2-, 3- und 4-Hydroxybutyl. Bevorzugt ist 2-Hydroxyethyl sowie 2- und 3- Hydroxypropyl. Besonders bevorzugt ist Wasserstoff.

Des Weiteren gilt für $\mathbf{R^6}$ Allyl oder 3-$C_1$ - $C_{10}$-Alkoxy-2-hydroxypropyl. Hierunter fallen 3-Methoxy-, 3-Ethoxy-, 3-Propoxy-, 3-Butoxy-, 3-Pentoxy-, 3-Hexoxy-, 3-Heptoxy-,3-Octoxy-, 3-Nonoxy- und 3-Decoxy-2-hydroxypropyl. Bevorzugt sind Allyloxy-, 3-Butoxy-, 3-Octoxy- und 3-Decoxy-2-hydroxypropyl.

Für den Substituenten $\mathbf{R^6}$ gilt außerdem mono-bis trisubstituiertes Phenyl, wobei die Substituenten Hydroxy, oder/und $C_1$ - $C_4$-alkyl oder/und $C_1$ - $C_4$-alkoxy sein können sowie die Kombination Hydroxy mit Methyl, Ethyl, Propyl und Butyl sowie Hydroxy mit Methoxy, Ethoxy, Propoxy und Butoxy. Bevorzugt sind der Hydroxy-, Methyl-, Butyl-, Methoxy- und Ethoxy-Rest als Substituent. Besonders bevorzugt ist die Hydroxy- und Methoxygruppe. Bevorzugt sind die Mono- und Disubstitution. Besonders bevorzugt ist aber die Monosubstitution. Besonders bevorzugt sind ebenfalls bei der Mehrfachsubstitution die Kombinationen Hydroxy mit Meth(eth)oxy oder Hydroxy mit Monomethyl oder Dimethyl sowie die Kombinationen von Methyl, Ethyl, Propyl und Butyl mit Methoxy, Ethoxy, Propoxy und Butoxy. Konkret seien genannt: 2-, 3- und 4-Hydroxyphenyl; 2-Hydroxy-4-methylphenyl; 2-Hydroxy-5-methylphenyl; 2-Hydroxy-5-t-Butylphenyl; sowie 2-, 3- und 4-Meth(eth)oxyphenyl.

Die Verbindungen **(B-1)** können auch als Hydrate vorliegen. Bevorzugt ist dies der Fall, bei **Y** und **Z** $CR^5$=C-$NR^6$ ; besonders bevorzugt bei $R^1$ oder/und $R^2 \neq$ Methyl. Die Hydrate können beispielsweise als Hemi-, Sesqui- oder Dihydrat vorliegen. Hochschmelzende Cycloureide (Fp.: >180°C) werden bevorzugt in mikronisierter Form eingesetzt (Partikelgröße < 50$\mu$m).

Für **(B-2)** enthaltend $\mathbf{R^3}$ als $C_2$ - $C_{20}$-Alkylen, das durch 1 bis 4 O- oder S-Atome unterbrochen oder/und durch 1 bis 4 OH-Gruppen substituiert sein kann, ist bevorzugt Ethandiyl-1,2, Propandiyl-1,2 Propandiyl-1,3, Butandiyl-2,3, Butandiyl-1,4, $CH_2CH_2OCH_2CH_2$, $CH_2CH_2OCH_2CH_2OCH_2CH_2$, $CH_2CH_2SCH_2CH_2$, $CH_2CH_2OCH_2CH_2$ $OCH_2CH_2OCH_2CH_2$, $CH_2CH_2SCH_2CH_2SCH_2CH_2$, $C_3H_6OC_3H_6$, $C_3H_6OC_3H_6OC_3H_6C_3H_6OC_3H_6OC_3H_6OC_3H_6$ $CH_2CHOHCH_2OCH_2CHOHCH_2$, $CH_2CHOHCH_2OCH_2CHOHCH_2OCH_2CHOHCH_2$ Besonders bevorzugt sind $CH_2CH_2CH_2CH_2$ und $CH_2CH_2SCH_2CH_2$ Tetrit bedeutet bevorzugt Erythrit, Arabinit und Xylit, Hexit bevorzugt Mannit und Sorbit.

Bevorzugte Vertreter der einzelnen Stoffgruppen seien nachfolgend aufgeführt. Die Benennung ist nicht begrenzend sondern auswahlhaft.

**(B-1)-** Linear-Acylureide (lineare Ureide, Acylcarbamide, Acylharnstoffe) wie [1] N,N'-Dimethyl-, [2] N, N'- Diethyl-, [3] N, N'-Dipropyl-, [4] N, N'-Diallyl-, [5] N, N'-Dibutyl-, [6] N, N'-Dioctyl- [7] N, N'-Didodecyl- und [8] N, N'-Dibenzylcyanacetureid. [9] N- oder N'- Monomethyl-, [10] N- oder N'-Monoethyl-, [1]] N- oder N'-Monopropyl-, [12] N-oder N'-Monoallyl-, [13] N- oder N'-Monobutyl-, [14] N- oder N'-Monopentyl-, [15] N-oder N'-Monohexyl-, [16] N- oder N'-Monoheptyl- und [17] N- oder N'-Monooctyl-, [18] N,N'-Monocyclohexyl- [19] N,N'-Monobenzyl- und [20] N,N'-Monophenylcyanacetureid. Bevorzugt sind [1], [2], [3], [4], [5], [8], [9], [10], [11], [12], [13], [18], [19] und [20]. Besonders bevorzugt sind [1], [4], [8], [12], [18], [19] und [20]. Ganz besonders bevorzugt ist [1].

**(B-1)**-Cyclo-Acylureide (Cycloureide, 6(4)-Iminobarbitursäuren bzw. 6-Iminohydrouracile oder 6-Imino-dihydropyrimidindione-2,4) wie [21 (CAS-Nr. 17743-04-3) N,N'-Dimethyl-, [22] N, N'- Diethyl-, [23] N, N'-Dipropyl-, [24] N, N'-Diallyl-, [25] N, N'-Dibutyl-, [26] N, N'-Dioctyl- und [27] N, N'-Didodecyl, [28] N,N'-Dibenzyl-6(4)-Iminobarbitursäure. [29] (CAS-Nr.17743-03-2 und 17743-02-1) N- oder N'- Monomethyl-, [30] N- oder N'-Monoethyl-, [31] N- oder N'-Monopropyl-, [32] N- oder N'- Monoallyl-, [33] N- oder N'-Monobutyl-, [34] N- oder N'-Monopentyl-, [35] N- oder N'-Monohexyl-, [36] N- oder N'-Monoheptyl- [37] N- oder N'-Monooctyl-, [38] N oder N'-Monocyclohexyl- oder [39] N oder N'-Monophenyl- und [40] N,N'-Monobenzyl-6(4)-Iminobarbitursäure. Bevorzugt sind [21], [22], [23], [24], [25], [28], [29], [30], [31] [32], [33], [37], [38], [39] und [40]. Besonders bevorzugt sind [21], [24], [28], [32], [37], [38], [39] und [40]. Ganz beonders bevorzugt ist [21].

**(B-1)**- Cyclo-Acylureide (Aminouracile oder Aminopyrimidindione-2,4) wie [41] N,N'-Dimethyl-, [42] N, N'- Diethyl-, [43] N, N'-Dipropyl-, [44] N, N'-Diallyl-, [45] N, N'-Dibutyl-, [46] N, N'-Dioctyl- und [47] N, N'-Didodecyl-, [48] N,N'-Dibenzyl-Aminouracil. [49] N- oder N'- Monomethyl-, [50] N- oder N'- Monoethyl-, [51] N- oder N'-Monopropyl-, [52] N- oder N'- Monoallyl-, [53] N- oder N'-Monobutyl-, [54] N- oder N'-Monopentyl-, [55] N- oder N'-Monohexyl-, [56] N- oder N'-Monoheptyl-, [57] N- oder N'-Monooctyl-, [58] N- oder N'- Monocyclohexyl,

N oder N'-Monobenzyl- und [60] N oder N'-Monophenyl-Aminouracil. Bevorzugt sind [41], [42], [43], [44], [45], [48], [49], [50], [51], [52], [53], [57], [58], [59] und [60]. Besonders bevorzugt sind [41], [44], [48], [52], [57], [58], [59] und [60]. Ganz besonders bevorzugt ist [41].

Als Hydrate werden bevorzugt das Hemi- und Monohydrat von [42], [43], [44] und [45].

Ferner gehören in diese Kategorie die am exocyclischen N-Atom substituierten 6-Aminouracile wie Hydroxyethylamino- und Hydroxypropylamino- Derivate oder Hydroxyanilino-, Methoxyanilino- und Ethoxyanilinouracile. Desweiteren seien genannt [61,62,63] N-2-,-3- und -4-Hydroxyphenyl-1,3-dimethyl-6-aminouracil sowie [64] N-2-Hydroxy-4-methylphenyl-, [65] N-2-Hydroxy-5-methylphenyl-, [65] N-2-Hydroxy-5-t-butylphenyl-, [66,67,68] N-2-,-3- und -4-methoxyphenyl-, [69,70,71] N-2-,-3- und -4-Ethoxyphenyl-1,3-dimethyl-6-aminouracil, [72] N-2-Hydroxyethylamino-, [73] N-2-Hydroxypropylamino-, [74] N-3-Hydroxypropylamino-, [75] N-2-Hydroxybutylamino-, [76] N-3-Hydroxybutylamino- und [77] N-4-Hydroxybutylamino-1,3-dimethyl-6-aminouracil. Bevorzugt sind [61], [64], [65], [66], [69], [72], [73] und [74]. Besonders bevorzugt sind [61], [64], [65], [66] und [69]. Ganz besonders bevorzugt sind [61], [66] und [69]. Ebenfalls müssen hier genannt werden: in 5-Position substituierte 6-Aminouracile wie Alkyliden-bis-6-Aminouracile. Angeführt seien [78] 5-Ethyliden-, [79] 5-Propyliden-, [80] 5-(2-Ethyl-butyliden)-, [81] 5-Hexyliden-, [82] 5-Heptyliden-, [83] 5-Octyliden-, [84] 5-Benzyliden-, [85] 5-Salicyliden-, [86] 5-(3-Hydroxy)-benzyliden-, [87] 5-(4-Hydroxy)-benzyliden- und [88] 5-(2-Hydroxy)-3-Methoxy)-benzyliden- und [89] 5-Pentyliden-bis-1,3-dimethyl-6-aminouracil. Bevorzugt sind [80], [81], [82], [83] und [89]. Besonders bevorzugt sind [81], [82], [83] und [89]. Ganz besonders bevorzugt sind [81] und [82].

Durch Umsetzung von N-monosubstituierten 6-Aminouracilen mit C-Glycidyl-Verbindungen und Glycidyl(thio)ethern oder Estern entstehen N,N'-disubstituierte 6-Aminouracile. Namentlich seien genannt: [90] 1-Methyl-3-(3-isopropoxy-2-hydroxypropyl), [91] 1-Phenyl-3-(3-isopropoxy-2-hydroxypropyl)-, [92] 1-Methyl-3-(3-tert.butoxy-2-hydroxypropyl)-, [93] 1-Benzyl-3-(3-isopropoxy-2-hydroxypropyl)-, [94] 1-Methyl-3-(3-neononyl-carboxy-2-hydroxypropyl)-, [95] 1-Methyl-3-(2-hydroxypropyl)-, [96] 1-Methyl-3-(3-(2-ethylhexoxy)-2-hydroxypropyl)-, [97] 1-Methyl-3-(2-hydroxyhexyl)-, [98] 1-Benzyl-(2-hydroxypropyl)-, [99] 1-Methyl-(2-hydroxybutyl)-, [100] 1-Benzyl-(2-hydroxybutyl)-, [101] 1-Benzyl-(3-isopropoxy-2-hydroxypropyl)-, [102] 1-Methyl-3-(2-hydroxyethyl)- und [103] 1-Methyl-3-(3-allyloxy-2-hydroxypropyl)-6-aminouracil. Bevorzugt sind [90], [92], [94], [95], [96], [97], [99], [102] und [103]. Besonders bevorzugt sind [90], [92], [95], [99], und [103]. Ganz besonders bevorzugt sind [95], [99], und [103].

Gewisse Aminouracile sind im Chemikalienhandel erhältlich: [1], [9] und [41] stellen "Commodities" dar und finden als "Bulk"-Chemikalien bei der technischen Coffein- bzw. Theobrominsynthese Verwendung. Für 6(4)-Iminobarbitursäuren liegen einschlägige Literatursynthesen vor.

**(B-1)** - Hydantoine (Imidazolidindione), Hydantoin [103a], 2-Thiohydantoin [103b], 5-Methylhydantoin [103c], 5-Phenylhydantoin [103d], 5-Methyl-2-thiohydantoin [103e], 5-Phenyl-2-thiohyantoin [103f], 5,5-Dimethylhydantoin [103g], 5,5-Dimethyl-2-thiohydantoin [103h], 5-Methyl-5-Phenylhydantoin [103i] und 5-Methyl-5-Phenyl-2-thiohydantoin [103j]. Bevorzugt sind [103a] und [103b]. Ganz besonders bevorzugt ist [103a].

**(B-2)** Bis-aminocrotonsäureester von [104] Ethylen- und [105] Propylenglykol sowie von Polyethylen- und Polypropylenglykolen sowie von [106] Glycerin und Polyglycerinen. Tris-aminocrotonsäureester von [107] Glycerin, [108,109] Trimethylolethan(propan), [110] Triethylolisocyanurat. Tetrakis-aminocrotonsäureester von [111] Pentaerythrit, [112,113] Bis-trimethylolethan(propan), Hexakis-aminocrotonsäureester von [114] Dipentaerythrit und [115] Sorbit, sowie [116] Butandiyl-1,4- und [117] Thio-bis-ethandiylaminocrotonat. Bevorzugt sind [104], [105], [108], [109], [111], [113], [116] und [117].

Besonders bevorzugt sind [104], [105], [116] und [117]. Ganz besonders bevorzugt sind [116] und [117]. Beide Verbindungen werden in technischen Maßstab produziert.

**(C-1)** Monomere Dihydropyridine, wie Dimethyl-dihydropyridindicarbonsäuremethylester [118], -bis-dicarbonsäureethylester [119] und -bisdicarbonsäuredilaurylester[120] (eine Verbindung, die im technischen Maßstab produziert wird).

**(C-2)** Oligo- und Polydihydropyridine, die sich vom Butandiol-1,4-bis-3-aminocrotonat, bzw. Thiodiglykol-bis-3-aminocrotonat und den Endgliedem 3-Aminocrotonsäuremethyl- bzw. -ethylester ableiten, nämlich die Bis-Dihydropyridine [121] und [122] (schwefel frei) sowie [123] und [124] (schwefelhaltig). Sowie die Polydihydropyridine [125] und [126] (schwefelfrei) sowie [127] und [128] (schwefelhaltig). [127] und [128] sind Handelsprodukte.

Bevorzugte Zweier- oder Mehrfachkombinationen aus mindestens einem Anfangsfarbenverbesserer **(AFV)** + einem Booster **(A-1)** sind:

(**B**-1)**: $R^1$ oder $R^2$** = Methyl, Ethyl, Propyl, Butyl, Cyclohexyl, Allyl, Benzyl oder Wasserstoff und **(A-1)**.

**(B-2)**: Bisaminocrotonsäureester des Butandiols-1,4 oder/und des Thiodiglykols und **(A-1)**.

Benannte bevorzugte Zweier- oder Mehrfachkombinationen sind:

1. Zweier- oder Mehrfachkombinationen aus mindestens einer Verbindung **(B-1)** mit einem Booster **(A-1)**, nämlich:

**(B-1)**-Komponente - Linear-Acylureide:
mit **[A-1]**.

**(B-1)**-Komponente - Cyclo-Acylureide (6(4)-Iminobarbitursäuren):
mit **[A-1].**

**(B-1)**-Komponente - Cyclo-Acylureide (Aminouracile):
[41] mit **[1A-1]**
[61] mit **[A-1]**
[66] mit **[A-1]**
[69] mit **[A-1]**
[81] mit **[A-1**]
[82] mit **[A-1]**
[95] mit **[A-1]**
[99] mit **[A-1]**
[103] mit **[A-1]**

wobei die Kombination von [41] mit **[A-1]** ganz besonders bevorzugt ist.

**(B-1) -** Komponente - Cyclo-Acylureide( Hydantoine)
[103a] mit **[A-1]**
[103b] mit **[A-1]**

wobei die Kombination von [103a] mit **[A-1]** ganz besonders bevorzugt ist.

2. Zweier- oder Mehrfachkombinationen aus mindestens einer Verbindung **(B-2)** mit einem Booster **(A-1),** nämlich:

[116] mit **[A-1]**
[117] mit **[A-1]**.

3. Zweier- oder Mehrfachkombinationen aus mindestens einer Verbindung **(C-1)** mit einem Booster **(A-1)**, nämlich:

[118] mit **[A-1]**
[120] mit [**A-1]**.

4. Zweier- oder Mehrfachkombinationen aus mindestens einer Verbindung **(C-2)** mit einem Booster **(A-1),** nämlich:

[127] mit **[A-1]**
[128] mit **[A-1]**.

Selbstverständlich können auch die Verbindungen der Klassen **(B-1)**, **(B-2)**, **(C-1)** und **(C-2)** miteinander kombiniert werden.

Die Verbindungen aus den Gruppen **(A-1)**und **(B)** werden im halogenhaltigen Polymer zweckmäßig von 0,01 bis 10 phr, vorzugsweise von 0,05 bis 5 und insbesondere von 0,1 bis 3 phr verwendet, wobei für **(A-1)** Werte im unteren Schwellenbereich bevorzugt werden.
Weiterhin können Kombinationen mit diversen HCl-Fängern (Scavengem) eingesetzt werden, wie:

**Alkali- und Erdalkali-Verbindungen**

Darunter versteht man vornehmlich die Carboxylate der im Kapitel Zinkverbindungen beschriebenen Säuren, aber auch entsprechende Oxide bzw. Hydroxide oder Carbonate. Es kommen auch deren Gemische mit organischen

Säuren in Frage. Beispiele sind LiOH, NaOH, KOH, CaO, $Ca(OH_2)$, MgO, $Mg(OH)_2$, $Sr(OH)_2$, $Al(OH)_3$, $CaCO_3$ und $MgCO_3$ (auch basische Carbonate, wie beispielsweise Magnesia, Alba und Huntit), sowie fettsaure Na- und K-Salze. Bei Erdalkali- und Zn-carboxylaten können auch deren Addukte mit MO oder $M(OH)_2$ (M = Ca, Mg, Sr oder Zn), sogenannte "overbased" Verbindungen, zum Einsatz kommen. Bevorzugt werden zusätzlich zu den erfindungsgemäßen Stabilisatoren Alkali-, Erdalkali- und/oder Aluminiumcarboxylate eingesetzt.

Bevorzugt sind Magnesiumhydroxid, Mg-acetylacetonat, Ca-acetylacetonat sowie ungecoatetes und gecoatetes Calciumhydroxid. Ganz besonders bevorzugt ist gecoatetes Calciumhydroxid (Coating mit Fettsäuren z.B. Palmitin- und Stearinsäuren bzw. deren Gemischen).

**Metallseifen**

Metallseifen sind in der Hauptsache Metallcarboxylate, bevorzugt längerkettiger Carbonsäuren. Geläufige Beispiele sind Stearate und Laurate, auch Oleate und Salze kürzerkettiger aliphatischer oder aromatischer Carbonsäuren wie Essigsäure, Propionsäure, Buttersäure, Valeriansäure, Hexansäure, Sorbinsäure; Oxalsäure, Malonsäure, Bernsteinsäure, Glutarsäure, Adipinsäure, Fumarsäure, Citronensäure, Benzoesäure, Salicylsäure, Phthalsäuren, Hemimellitsäure, Trimellitsäure, Pyromellitsäure.

Als Metalle seien genannt: Li, Na, K, Mg, Ca, Sr, Ba, Zn, A1, La, Ce und Seltenerdmetalle. Oft verwendet man sogenannte synergistische Mischungen wie Barium/Zink-, Magnesium/Zink-, Calcium/Zink- oder Calcium/Magnesium/Zink-Stabilisatoren. Die Metallseifen können einzeln oder in Mischungen eingesetzt werden. Eine Übersicht über gebräuchliche Metallseifen findet sich in Ullmanns Encyclopedia of Industrial Chemistry, 5th Ed., Vol. A16 (1985), S. 361 ff.). Bevorzugt sind Magnesium-, Kalium- und Zinkseifen.

Bevorzugt sind Magnesium- und Calciumseifen. Ganz besonders bevorzugt ist Magnesium- und Calciumlaurat bzw. -stearat.

**Zinkverbindungen:**

Bei den organischen Zinkverbindungen mit einer Zn-O-Bindung handelt es sich um Zinkenolate, Zinkphenolate oder/und Zinkcarboxylate. Letztere sind Verbindungen aus der Reihe der aliphatischen gesättigten und ungesättigten $C_{1-22}$-Carboxylate, der aliphatischen gesättigten oder ungesättigten $C_{2-22}$-Carboxylate, die mit wenigstens einer OH-Gruppe substituiert sind oder deren Kette wenigstens durch ein oder mehrere O-Atome unterbrochen ist (Oxasäuren), der cyclischen und bicyclischen Carboxylate mit 5-22 C-Atomen, der unsubstituierten, mit wenigstens einer OH-Gruppe substituierten und/oder $C_{1-16}$-alkylsubstituierten Phenylcarboxylate, der Phenyl-$C_{1-16}$-alkylcarboxylate, oder der gegebenenfalls mit $C_{1-12}$-alkylsubstituierten Phenolate, oder der Abietinsäure. Zn-S-Verbindungen sind beispielsweise Zn-Merkaptide, Zn-Mercaptocarboxylate und Zn-Mercaptocarbonsäureester.

Namentlich zu erwähnen sind, als Beispiele, die Zinksalze der monovalenten Carbonsäuren, wie Ameisensäure, Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristinsäure, Palmitinsäure, Laurinsäure, Isostearinsäure, Stearinsäure, 12-Hydroxystearinsäure, 9,10-Dihydroxystearinsäure, Ölsäure, Rizinolsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, und Sorbinsäure, Zimtsäure, Mandelsäure, Glykolsäure; Zinksalze der divalenten Carbonsäuren bzw. deren Monoester, wie Oxalsäure, Malonsäure, Bernsteinsäure, Glutarsäure, Adipinsäure, Fumarsäure, Pentan-1,5-dicarbonsäure, Hexan-1,6-dicarbonsäure, Heptan-1,7-dicarbonsäure, Octan-1,8-dicarbonsäure, 3,6,9-Trioxadecan-1,10-dicarbonsäure, Milchsäure, Malonsäure, Maleinsäure, Weinsäure, Äpfelsäure, Salicylsäure, Polyglykol-dicarbonsäure (n=10-12), Phthalsäure, Isophthalsäure, Terephthalsäure und Hydroxyphthalsäure; und der Di- oder Triester der tri- oder tetravalenten Carbonsäuren, wie Hemimellithsäure, Trimellithsäure, Pyromellithsäure, Zitronensäure sowie ferner sog. überbasische (overbased) Zinkcarboxylate oder Zinklaurylmerkaptid, Zinkthioglykolat, Zinkthiosalicylat, Zink-bis-i-octylthioglykolat, Zinkmercaptopropionat, Zinkthiolactat, Zinkthiomalat, Zink-bis-octylmercaptopropionat, Zink-bis-isooctylthiolaktat und Zink-bis-laurylthiomalat.

Bei den Zinkenolaten handelt es sich bevorzugt um Enolate des Acetylacetacetons, des Benzoylacetacetons, des Dibenzoylmethans sowie um Enolate der AcetAcetessig- und Benzoylessigester sowie der Dehydracetsäure. Ausserdem können auch anorganische Zinkverbindungen wie Zinkoxid, Zinkhydroxid, Zinkcarbonat, basisches Zinkcarbonat oder Zinksulfid zum Einsatz kommen.

Bevorzugt sind neutrale oder basische Zinkcarboxylate einer Carbonsäure mit 1 bis 22 C-Atomen (Zinkseifen), wie beispielsweise Benzoate oder Alkanoate, bevorzugt $C_8$-Alkanoate, Stearat, Oleat, Laurat, Palmitat, Behenat, Versatat, Hydroxystearate und - oleate, Dihydroxystearate, p-tert-Butylbenzoat, oder (Iso)octanoat. Besonders bevorzugt sind Stearat, Oleat, Versatat, Benzoat, p-tert-Butylbenzoat und 2-Ethylhexanoat.

Die Metallseifen bzw. deren Mischungen können in einer Menge von beispielsweise 0,001 bis 10 Gew.-Teilen,

zweckmäßig 0,01 bis 8 Gew.-Teilen, besonders bevorzugt 0,05 bis 5 Gew.-Teilen, bezogen auf 100 Gew.-Teile PVC, angewandt werden.

**Hydrotalcite**

Die chemische Zusammensetzung dieser Verbindungen ist dem Fachmann bekannt, z.B. aus den Druckschriften PS - DE 38.43.581 A1, US 4.000.100, EP 0.062.813 A1 und WO 93/20135. Diese können Al/Mg/Carbonat-, Al/Mg/Ti/Carbonat-, Li/Mg/Carbonat- oder Li/Al/Mg/Carbonat basiert sein, wie beschrieben in PS - DE 102.17.364 A1 (Fa. SüdChemie), PS - DE 44.25266 A1 (Fa. Metallgesellschaft), PS - EP 0.549.340 A1 (Fa. Mizusawa Ind. Chem) und PS - JP 0.761.756 A1 (Fuji Chem. Ind.).Verbindungen aus der Reihe der Hydrotalcite können durch die folgende allgemeine Formel:

$$M^{2+}{}_{1-x}M^{3+}{}_x(OH)_2\ (A^n)_{x/b} * d\ H_2O$$

beschrieben werden, wobei

$M^{2+}$ = als Kation eines oder mehrere der Metalle aus der Gruppe Mg, Ca, Sr,
Zn oder Sn ist, $M^{3+}$ = als Kation A1 oder B ist, $A^n$ ein Anion mit der Valenz -n darstellt, b = n eine Zahl von 1-2 ist, $0 < x < 0{,}5$ ist, d eine Zahl von 0-20 ist. Bevorzugt sind Verbindungen mit
$A^n$ = $OH^-$, $ClO_4^-$, $HCO_3^-$, $CH_3COO^-$, $C_6H_5COO^-$, $CO_3^{2-}$, $(CHOHCOO)_2^{2-}$, $(CH_2COO)_2^{2-}$, $CH_3CHOHCOO^-$, $HPO_3^-$ oder $HPO_4^{2-}$.

Beispiele für Hydrotalcite sind
$Al_2O_3$ * 6MgO *CO* 12 $H_2O$ $Mg_{4,5}Al_2(OH)_{13}$ * $CO_3$* 3,5 $H_2O$, 4MgO * $Al_2O_3$ * $CO_2$ * 9 $H_2O$, 4MgO * $Al_2O_3$ * $CO_2$ * 6 $H_2O$, ZnO*3MgO*$Al_2O_3$*$CO_2$*8-9 $H_2O$ und ZnO * 3MgO * $Al_2O_3$ * $CO_2$ * 5-6 $H_2O$

Besonders bevorzugt sind die Typen Alkamizer 1 und 2, Alkamizer P 93-2 (Hersteller Kyowa Chemical Ind. Co., JP) und L-CAM (Lithium-modifizierter Hydrotalcit = Lithium/Carbonat/Aluminium/Magnesium, Hersteller Fuji Chem. Ind. Co. Ltd., JP: PS - EP 0761 756 A1 bzw. Mizusawa Industrial Chemicals, Ltd.,: PS - EP 0549 340 A1 und Metallgesellschaft AG,: PS - DE 4425266 C1). Ganz besonders bevorzugt werden entwässerte Hydrotalcite eingesetzt.

**Titanhaltige Hydrotalcite**

Titanhaltige Hydrotalcite sind in PS - WO 95/21127 beschrieben. Verbindungen dieser Art mit der allgemeinen Formel $Al_aMg_bTi_c(OH)_d(CO_3)_e$ * m $H_2O$ wobei a:b = 1:1 bis 1:10; $2 \leq b \leq 10$;
$0<c<5$; $0 \leq m<5$ betragen und d und e so gewählt sind dass ein basisches, ladungsfreies Molekül entsteht, können ebenfalls mit verwendet werden.

**Lithium-Schichtgitterverbindungen** (Lithium-Hydrotalcite)

Lithium-Aluminium-Schichtgitterverbindungen haben die allgemeine Formel:

$$Li_aM^{11}{}_{(b-2a)}Al_{(2+a)}OH_{(4+2b)}(A^{n-})_{(2/n)} * m\ H_2O$$

worin

$M^{11}$ Mg, Ca oder Zn und
$A^n$ ein ausgewähltes Anion der Wertigkeit n oder ein Gemisch von Anionen ist und die Indizes im Bereich von

$$0 < a < (b-2)/2,$$

$$1<b<6$$

und
m = 0 bis 30
liegen mit der Einschränkung, dass (b-2a) >2 ist oder

die allgemeine Formel:

$$[Al_2(Li_{(1-x)}\,.M^{11}{}_x)(OH)_6]_n(A^{n-})_{(1+x)} * m\ H_2O$$

worin

$M^{11}$, A, m und n die obige Bedeutung haben und
x die Bedingung erfüllt $0{,}01 \leq x < 1$

Die Herstellung der genannten Schichtgitterverbindungen ist dadurch gekennzeichnet, dass man im wässrigen Medium Lithiumhydroxid, -oxid und/oder dessen in Hydroxid umwandelbare Verbindungen, Metall-(II)-hydroxide, -oxide und/oder deren in Hydroxide umwandelbare Verbindungen der genannten Metalle und Aluminiumhydroxide und/oder deren in Hydroxide umwandelbare Verbindungen sowie Säuren und/oder deren Salze bzw. Gemische davon bei einem pH-Wert von 8 bis 10 und bei Temperaturen von 20 bis 250°C miteinander umsetzt und das erhaltene feste Reaktionsprodukt abtrennt.

Die Reaktionszeit beträgt vorzugsweise 0,5 bis 40 Stunden, insbesondere 3 bis 15 Stunden. Das aus der oben beschriebenen Umsetzung direkt anfallende Reaktionsprodukt kann nach bekannten Verfahren vom wässrigen Reaktionsmedium abgetrennt werden, vorzugsweise durch Filtration. Die Aufarbeitung des abgetrennten Reaktionsproduktes erfolgt ebenfalls in an sich bekannter Weise, beispielsweise durch Waschen des Filterkuchens mit wasser und Trocknen des gewaschenen Rückstands bei Temperaturen von beispielsweise 60 bis 150°C, vorzugsweise bei 90 bis 120°C.

Für die Umsetzung mit Aluminium kann sowohl feinteiliges, aktives Metall-(III)-hydroxid in Kombination mit Natriumhydroxid, als auch ein $NaAlO_2$ eingesetzt werden. Lithium bzw. eine der genannten Metall-(II)-verbindungen kann in Form von feinteiligem Lithiumoxid oder-hydroxid oder Mischungen daraus bzw. von feinteiligem Metall-(II)-oxid oder-hydroxid oder Mischungen daraus verwendet werden. Die entsprechenden Säureanionen können in unterschiedlich konzentrierter Form z.B. direkt als Säure oder aber als Salz eingesetzt werden.

Die Umsetzungstemperaturen liegen vorzugsweise zwischen etwa 20 und 250°C, weiter im besonderen zwischen etwa 60 und 180°C. Katalysatoren oder Beschleuniger sind nicht erforderlich. Bei den Substanzen kann als Kristallwasser ganz oder teilweise durch Behandlung entfernt werden. Bei ihrer Anwendung als Stabilisatoren spalten die getrockneten Schichtgitterverbindungen bei den für PVC üblichen Verarbeitungstemperaturen von 160 bis 220°C kein Wasser oder ein anderes Gas ab, so dass in den Formteilen keine störende Blasenbildung auftritt.

Das Anionen $A^n$ in der obigen allgeminen Formel kann Sulfat, Sulfit, Sulfid, Thiosulfat, Peroxosulfat, Peroxodisulfat, Hydrogenphosphat, Hydrogenphosphit, Carbonat, Halogenide, Nitrat, Nitrit, Hydrogensulfat, Hydrogencarbonat, Hydrogensulfit, Hydrogensulfid, Dihydrogenphosphat, Dihydrogenphosphit, Monocarbonsäureanionen wie Acetat und Benzoat, Amid, Azid, Hydroxid, Hydroxylamin, Hydroazid, Acetylacetonat, Phenolat, Pseudohalogenide, Halogenite, Halogenate, Perhalogenate, $I_3^-$ , Permanganat, Dianionen von Dicarbonsäuren wie Phthalat, Oxalat, Maleat oder Fumarat, Bisphenolate, Phosphat, Pyrophosphat, Phosphit, Pyrophosphit Trianionen von Tricarbonsäuren wie Citrat, Trisphenolate u.v.m., sowie Gemische daraus sein. Unter diesen sind Hydroxid, Carbonat, Phosphit und Maleat bevorzugt. Zur Verbesserung der Dispergierbarkeit der Substanzen in halogenhaltigen thermoplastischen Polymermassen können dieselben mit einer höheren Fettsäure, z.B. Stearinsäure, einem anionischen oberflächenaktiven Agens, einem Silankuppler, einem Titanat-Kuppler oder einem Glycerinfettsäureester oberflächenbehandelt sein.

**Calcium- Aluminium-Hydroxo-Hydrogenphosphite**

Für die erfindungsgemässen Stabilisatorkombinationen geeignete Verbindungen aus der Gruppe der basischen Calcium-Aluminium-Hydroxy-Hydrogenphosphite der allgemeinen Formel

$$Ca_xAl_2(OH)_{2(x+2)}HPO_3 *H_2O,$$

wobei x = 2 - 8 und

$$Ca_xAl_2(OH)_{2(x+3-y)}(HPO_3)_y *mH_2O,$$

wobei x = 2 - 12,

$$\frac{2x+5}{2} > y > 0$$

und m = 0 - 12 bedeuten, ausgenommen y = 1, wenn x = 2 - 8 ist,
können beispielweise mittels einem Verfahren hergestellt werden, bei dem man Mischungen aus Calciumhydroxid und/oder Calciumoxid, Aluminiumhydroxid und Natriumoxid oder aus Calciumhydroxid und/oder Calciumoxid und Natriumaluminat mit phosphoriger Säure in zur Herstellung der erwünschten Calcium-Aluminium-Hydroxy-Hydrogenphosphite entsprechenden Mengen in wässrigen Medium umsetzt und das Reaktionsprodukt in an sich bekannter Weise abtrennt und gewinnt. Das aus der oben beschriebenen Umsetzung direkt anfallende Reaktionsprodukt kann nach bekannten Verfahren vom wässrigen Reaktionsmedium abgetrennt werden, vorzugsweise, beispielsweise durch Waschen des Filterkuchens mit Wasser und Trockenen des gewaschenen Rückstands bei temperaturen von beispielsweise 60 - 130°C, vorzugsweise 90 - 120 °C.

Für die Umsetzung kann sowohl feinteiliges, aktives Aluminiumhydroxid in Kombination mit Natriumhydroxid als auch ein Natriumaluminat eingesetzt weden. Calcium kann in Form von feinteiligem Calciumoxid oder Calciumhydroxid oder Mischungen daraus verwendet werden. Die phosphorige Säure kann in unterschiedlicher konzentrierter Form eingesetzt werden. Die Umsetzungstemperaturen liegen vorzugsweise zwischen 50 und 100°C, weiter vorzugsweise zwischen etwa 60 unf 85°C. Katalysatoren oder Beschleuniger sind nicht erforderlich, stören aber auch nicht. bei den verbindungen kann das Kristallwasser ganz oder teilweise durch thermische Behandlung entfernt weden.

Bei ihrer Anwendung als Stabilisatoren spalten die getrockneten Calcium-Aluminium-Hydroxy-Phosphite bei den beispielsweise für Hart-PVC üblichen Verarbeitungstemperaturen von 160 - 200°C kein Wasser ab, so dass in den Formteilen keine störende Blasenbildung auftritt.

Zur Verbesserung ihrer Dispergierbarkeit in halogenhaltigen thermoplastischen Harzen können die Verbindungen in bekannter Weise mit oberflächenaktiven Mittel gecoated werden. Die Verbindungsklasse, auch CHAP- oder CAP-Verbindungen genannt, ist beschrieben in EP 0.506.831A1

Die oben beschriebenen Calcium-Aluminium-Hydroxo-Hydrogenphosphite und titanhaltige Hydrotalcite können ausser kristallin auch teilkristallin und/oder amorph vorliegen.

**Zeolithe (Alkali bzw. Erdalkalialumosilikate)**

Sie können durch die Formel $M_{x/n}[(AlO_2)_x(SiO_2)_y] * w\ H_2O$ beschrieben werden, worin n die Ladung des Kations M; M ein Element der ersten oder zweiten Hauptgruppe, wie Li, Na, K oder $NH_4$ sowie Mg, Ca, Sr oder Ba; y:x eine Zahl von 0,8 bis 15, bevorzugt von 0,8 bis 1,2; und w eine Zahl von 0 bis 300, bevorzugt von 0,5 bis 30, ist.

Beispiele für Zeolithe sind Natriumalumosilikate der Formeln

$Na_{12}Al_{12}Si_{12}O_{48*}27\ H_2O$ [Zeolith A], $Na_6Al_6Si_6C_{24}*2\ NaX*7{,}5\ H_2O$ X=OH, Halogen, $ClO_4$ [Sodalith]; $Na_6A_{16}Si_{30}O_{72}*24\ H_2O$; $Na_8Al_8Si_{40}O_{96}*24\ H_2O$; $Na_{16}Al_{16}Si_{24}O_{80},16H_2O$; $Na_{16}Al_{16}Si_{32}O_{96}*\ 16\ H_2O$; $Na_{56}Al_{56}Si_{136}O_{384*}250\ H_2O$ [Zeolith Y], $Na_{86}Al_{86}Si_{106}O_{384}*264\ H_2O$ [Zeolith X]; $Na_2O$, $Al_2O_3$,(2-5)$SiO_2$.(3,5-10)$H_2O$ [Zeolith P]; $Na_2O\ Al_2O_3$, $2SiO_{2,*}$ (3,5-10) $H_2O$ (Zeolith MAP); oder die durch teilweisen bzw. vollständigen Austausch der Na-Atome durch Li-, K-, Mg-, Ca-, Sr- oder Zn-Atome darstellbaren Zeolithe wie $(Na,K)_{10}Al_{10}Si_{22}O_{64}*\ 20\ H_2O$; $Ca_{4,5}Na_3[(AlO_2)_{12}(SiO_2)_{12}] * 30\ H_2O$; $K_9Na_3[(AlO_2)_{12}(SiO_2)_{12}] * 27\ H_2O$. Ganz besonders bevorzugt sind Na-Zeolith A und Na-Zeolith MAP (siehe auch PS - US 6,531,533). Ebenso bevorzugt sind Zeolithe mit äußerst geringer Teilchengröße, insbesondere vom Na-A- und Na-P-Typ, wie sie auch in PS - US 6.096.820 beschrieben sind.

**Dawsonite (Alkalialumocarbonate)**

Diese werden durch die allgemeine Formel

$$M[Al(OH)_2CO_3]\ (M = Na, K)$$

beschrieben. Die Herstellung von Na-Dawsonit (DASC bzw. SAC) und K-Dawsonite (DAPC) ist publiziert in PS - US 3.501.264 und US 4.221.771 sowie in PS - EP 0394.670 Al. Die Synthese kann hydrothermal oder nichthydrothermal erfolgen. Die Produkte können kristallin oder amorph vorliegen. Einbezogen in die Substanzklasse sind auch Natrium-Magnesium-Alumocarbonate (SMAC); deren Herstellung ist beschrieben PS - US 455.055.284.

Die Hydrotalcite und/oder Calcium-Aluminium-Hydroxo-Hydrogenphosphite und/oder Zeolithe und/oder Dawsonite können in Mengen von beispielsweise 0,1 bis 20, zweckmäßig 0,1 bis 10 und insbesondere 0,1 bis 5 Gew.-Teilen, bezogen auf 100 Gew.-Teile halogenhaltiges Polymer, angewandt werden.

**Glycidylverbindungen**

Sie enthalten die Glycidylgruppe,

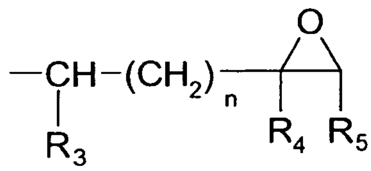

wobei diese direkt an Kohlenstoff, Sauerstoff-, Stickstoff- oder Schwefelatome gebunden ist, und worin entweder $R_3$ und $R_5$ beide Wasserstoff sind, $R_4$ Wasserstoff oder Methyl und n = 0 ist, oder worin $R_3$ und $R_5$ zusammen $-CH_2-CH_2-$ oder $-CH_2-CH_2-CH_2-$ bedeuten, $R_4$ dann Wasserstoff und n = 0 oder 1 ist.

I) Glycidyl- und β-Methylglycidylester erhältlich durch Umsetzung einer Verbindung mit mindestens einer Carboxylgruppe im Molekül und Epichlorhydrin bzw. Glycerindichlorhydrin bzw. β-Methyl-epichlorhydrin. Die Umsetzung erfolgt zweckmäßig in Gegenwart von Basen.
Als Verbindungen mit mindestens einer Carboxylgruppe im Molekül können aliphatische Carbonsäuren verwandt werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Capron-, Capryl-, Laurin-, Myristin-, Palmitin-, Stearin- und Pelargonsäure, sowie die bei den organischen Zinkverbindungen erwähnten Säuren.
Es können aber auch cycloaliphatische Carbonsäuren eingesetzt werden, wie beispielsweise Cyclohexancarbonsäure, Tetrahydrophthalsäure, 4-Methyltetrahydrophthalsäure, Hexahydrophthalsäure oder 4-Methylhexahydrophthalsäure.
Weiterhin können aromatische Carbonsäuren Verwendung finden, wie beispielsweise Benzoesäure, Phthalsäure, Isophthalsäure, Trimellithsäure oder Pyromellithsäure.
Ebenfalls können auch carboxylterminierte Addukte, z. B. von Trimellithsäure und Polyolen, wie beispielsweise Glycerin oder 2,2-Bis-(4-hydroxycyclohexyl)-propan verwandt werden.
Weitere im Rahmen dieser Erfindung verwendbare Epoxidverbindungen finden sich in EP 0 506 617.

II) Glycidyl- oder (β-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschließender Alkalibehandlung.
Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooctanol, 2-Ethylhexanol, Isodecanol sowie $C_7$-$C_9$-Alkanol- und $C_9$-$C_{11}$ -Alkanolgemischen.
Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.
Die Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.
Weitere mögliche endständige Epoxide sind beispielsweise: Glycidyl-1-naphthylether, Glycidyl-2-phenylphenylether, 2-Biphenylglycidylether, N-(2,3-epoxypropyl)-phthalimid und 2,3-Epoxypropyl-4-methoxyphenylether.

III) (N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.
Zu den (N-Glycidyl)-Verbindungen zählen aber auch N,N'-Di-, N,N',N"-Tri- und N,N',N",N"'-Tetraglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin oder Glykoluril und Triglycidylisocyanurat.

IV) S-Glycidyl-Verbindungen, wie beispielsweise Di-S-glycidylderivate, die sich von Dithiolen, wie beispielsweise Ethan-1,2-dithiol oder Bis-(4-mercaptomethylphenyl)-ether ableiten.

V) Epoxidverbindungen mit einem Rest der obigen Formel, worin $R_1$ und $R_3$ zusammen - $CH_2$-$CH_2$- bedeuten und n 0 ist, sind Bis-(2,3-epoxycyclopentyl)-ether, 2,3-Epoxycyclopentylglycidylether oder 1,2-Bis-(2,3-epoxycyclopentyloxy)-ethan. Ein Epoxidharz mit einem Rest der obigen Formel, worin $R_1$ und $R_3$ zusammen -$CH_2$-$CH_2$- sind und n 1 bedeutet, ist beispielsweise 3,4-Epoxy-6-methyl-cyclohexancarbonsäure-(3',4'-epoxy-6'-methyl-cyclohexyl)-methylester.

Geeignete endständige Epoxide sind beispielsweise:

a) flüssige Bisphenol-A-diglycidylether wie Araldit®GY 240, Araldit®GY 250, Araldit®GY 260, Araldit®GY 266, Araldit®GY 2600, Araldit®MY 790 und Epicote® 828 (BADGE);
b) feste Bisphenol-A-diglycidylether wie Araldit®GT 6071, Araldit®GT 7071, Araldit®GT 7072, Araldit®GT 6063, Araldit®GT 7203, Araldit®GT 6064, Araldlt®GT 7304, Araldit®GT 7004, Araldit®GT 6084, Araldit®GT 1999, Araldit®GT 7077, Araldit®GT 6097, Araldit®GT 7097, Araldit®GT 7008, Araldit®GT 6099, Araldit®GT 6608, Araldit®GT 6609, Araldit®GT 6610 und Epikote® 1002;
c) flüssige Bisphenol-F-diglycidylether wie Araldit®GY 281, Araldit®PY 302, Araldit®PY 306 (BFDGE);
d) feste Polyglycidylether von Tetraphenylethan wie CG Epoxy Rein®0163;
e) feste und flüssige Polyglycidylether von Phenolformaldehyd Novolak wie EPN 1138, EPN 1139, GY 1180, PY 307 (NODGE);
f) feste und flüssige Polyglycidylether von o-Cresolformaldehyd Novolak wie ECN 1235, ECN 1273, ECN 1280, ECN 1299 (NODGE);
g) flüssige Glycidylether von Alkoholen wie Shell Glycidylether® 162, Araldit®DY 0390, Araldit®DY 0391;
h) flüssige und feste Glycidylester von Carbonsäuren wie Shell Cardura® E Terephthalsäureester, Trimellithsäureester sowie deren Mischungen Araldit®PY 284 und Araldit® P811;
i) feste heterocyclische Epoxidharze (Triglycidylisocyanurat) wie Araldit® PT 810;
j) flüssige cycloaliphatische Epoxidharze wie Araldit®CY 179;
k) flüssige N,N,O-Triglycidylether von p-Aminophenol wie Araldit®MY 0510;
l) Tetraglycidyl-4-4'-methylenbenzamin oder N,N,N',N'-Tetraglycidyldiaminophenylmethan wie Araldit®MY 720, Araldit®MY 721.

Vorzugsweise finden Epoxidverbindungen mit zwei funktionellen Gruppen Verwendung. Es können aber auch prinzipiell Epoxidverbindungen mit einer, drei oder mehr funktionellen Gruppen eingesetzt werden.
Vorwiegend werden Epoxidverbindungen, vor allem Diglycidylverbindungen, mit aromatischen Gruppen eingesetzt.
Gegebenenfalls kann auch ein Gemisch verschiedener Epoxidverbindungen eingesetzt werden.
Besonders bevorzugt sind als endständige Epoxidverbindungen Diglycidylether auf der Basis von Bisphenolen, wie beispielsweise von 2,2-Bis-(4-hydroxyphenyl)-propan (Bisphenol-A), Bis-(4-hydroxyphenyl)-methan oder Mischungen von Bis-(ortho/para-hydroxyphenyl)-methan (Bisphenol-F).
Die endständigen Epoxidverbindungen können in einer Menge von vorzugsweise mindestens 0,1 Teil, beispielsweise 0,1 bis 50, zweckmäßig 1 bis 30 und insbesondere 1 bis 25 Gew.-Teilen, bezogen auf 100 Gew.-Teile PVC, eingesetzt werden.
Ganz besonders bevorzugt sind **Bisglycidylalkoholether** der Formel **(D)**

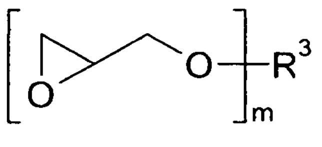

**(D)**

wobei

**$R^3$** = unverzweigtes oder verzweigtes $C_2$ - $C_{20}$ -Alkylen, das durch 1 bis 4 O oder S- Atome unterbrochen und/oder durch 1 bis 4 OH-Gruppen substituiert sein kann, oder Dimethylol-cyclohexan-1,4-diyl, Polyethylen(oder -propylen)glykol-$\alpha$, $\omega$-diyl (vorzugsweise ist Poly = Tetra bis Deka), Polyglyceryl -$\alpha$,$\omega$-diyl (vorzugsweise ist Poly = Tetra

bis Deka) oder Glycerin-triyl, Trimethylolethan(oder -propan)-triyl, Pentaerythrit-tri(oder -tetra)yl, Bis-trimethylolethan(oder -propan)-tri(oder -tetra)yl, Diglycerin-tri(oder -tetra)yl, Tetrit-tetrayl, Triglycerin-tri(oder -tetra, -penta)yl, Pentit-pentayl, Dipentaerythrit-penta(oder -hexa)yl und Hexit-hexayl; und **m** = 2, 3, 4, 5 oder 6

Weiterhin geeignet sind Bisglycidylalkoholether von Alkandiolen, Diglykolen, Tri- und Tetraglykolen (Glykol = Ethylen- oder Propylenglykol) und Polyglykolen sowie von [118a]Glycerin und Polyglycerinen als auch von 1,4-Cyclohexandimethanol [118b]. Trisepoxypropylalkoholether von [119a] Glycerin und [120a,121a] Trimethylolethan(propan) sowie von [121b, 121c] Triethylol (-isopropylol)isocyanurat (THEIC) und Tetrakisepoxypropylalkoholether von [122a,123a] Bis-Trimethylolethan(propan) und Hexakisepoxypropylalkoholether von [124a] Dipentaerythrit und [125a] Sorbit. Besonders zu erwähnen sind [126a] Hexandiol- und [127a] Neopentylglykol-diglycidylether sowie [128a] Ethylenglykol-diglycidylether, [129] Diethylenglykol- und [130] Dipropyleneglykol- sowie Polyglycerin-, [131] Diglycerin-, [132] Triglycerin-, [133] Tetraglycerin- und [134] Pentaglycerin-diglycidylether, [135] Butandiol-1,4-diglycidylether, [136, 137] Trimethylolethan(propan)diglycidylether sowie [138, 139] Pentaerythrit-tri- und -tetraglycidylether sowie Polyglycerin-triglycidylether. Bevorzugt sind [118a], [118b], [119a], [120a], [121a], [126a], [127a], [128a], [129], [130], [131], [132], [133], [134] [135], [136], [137], [138] und [139]. Besonders bevorzugt sind [118a], [118b], [119a], [120a], [121a], [126a], [127a], [128a], [129], [130], [135], [136], [137], [138] und [139]. Ganz besonders bevorzugt sind [118a], [118b], [119a], [120a], [121a], [126a], [135], [136], [137], [138] und [139]. Viele Verbindungen dieser Reihe werden als "Bulk"-Chemikalien produziert.

**Epoxidierte Fettsäureester und andere Epoxidverbindungen**

Die erfindungsgemäße Stablisatorkombination kann zusätzlich vorzugsweise mindestens einen epoxidierten Fettsäureester enthalten. Es kommen dafür vor allem Ester von Fettsäuren aus natürlichen Quellen (Fettsäureglyzeride), wie Sojaöl oder Rapsöl, in Frage. Es können aber auch synthetische Produkte wie epoxidiertes Butyloleat zum Einsatz kommen. Ebenso verwendet werden können epoxidiertes Polybutadien und Polyisopren, gegebenenfalls auch in partiell hydroxylierter Form, oder Glycidylacrylat und Glycidylmethacrylat als Homo- bzw. Copolymer. Diese Epoxyverbindungen können auch auf eine Alumosalz-Verbindung aufgebracht sein; siehe hierzu auch DE 4.031.818 A1.

Flüssige oder hochviskose Glycidyl- oder Epoxidverbindungen können auch auf kieselsäure- oder silikathaltigen Trägern aufgezogen und in einer festen, nicht verklebenden Form eingesetzt werden.

**Phenolverbindungen**

In diese Kategorie gehören Phenole und Aminophenole wie Resorcin, Resorcinmonomethylether, Phloroglucin, 2-Naphthol, 3-Hydroxyanilin und 3-Hydroxydiphenylamin.

Bevorzugt enthalten erfindungsgemäße Stabilisatorsysteme

**Cyanamidverbindungen** der Formel **(E)**

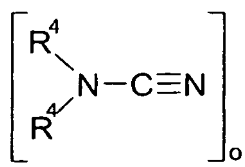

**(E)**

wobei

**$R^4$** unabhängig voneinander = H, Nitril, Carbamoyl, $R^1$, $R^2$, $R^1$CO, $R^2$CO, Na, K, $Mg_{1/2}$ und $Ca_{1/2}$ oder **$R_2^4$** = Tetra-, Penta- oder Hexamethylen und o = 1, 2 oder 3 ist.

**(E)** Monomere Cyanamide: [140] Cyanamid und seine Salze, insbesondere [141] Calciumcyanamid, [142] Monomethyl-, [143] Monoethyl-, [144] Monopropyl-, [145] Monobutyl-, [146] Monopentyl-, [147] Monohexyl-, [148] Monoheptyl-, [149] Monooctyl-, [150] Monophenyl- und [151] Monobenzylcyanamid sowie [152] Monoallylcyanamid. [153]

1,1-Dimethyl-, [154] 1,1-Diethyl-, [155] 1,1-Dipropyl-, [156] 1,1-Dibutyl-, [157] 1,1-Dipentyl-, [158] 1,1-Dihexyl-, [159] 1,1.Diheptyl-, [160] 1,1 Dioctyl-, [161] 1,1-Diphenyl- sowie [162] 1,1-Dibenzylcyanamid und [163] 1,1-Diallylcyanamid.

[164] Acetyl-, [165] Propionyl-, [166] Butyroyl-, [167] Pentanoyl-, [168] Hexanoyl-, [169] Heptanoyl-, [170] Octanoyl-, [171] Nonanoyl- [172] Decanoyl-, [173] Undecanoyl-, [174] Dodecanoyl-, [175] Tridecanoyl-, [176] Tetradecanoyl-, [177] Pentadecanoyl-, [178] Hexadecanoyl-, [179] Heptadecanoyl-, [180] Octadecanoyl-, [181] Nonadecanoyl-, [182] Eikosanoylcyanamid, [183] Benzoylcyanamid sowie [184] Tetradecyl-, [185] Hexadecyl- und [186] Octadecylcyanamid. Da Cyanamid(derivat)e bei der PVC-Verarbeitungen u.U. zu Zersetzung neigen, empfiehlt sich bei reaktiven Vertretern die VorabCompoundierung in einem Heißmischer.

**(E)** Dimere: [187] Dicyandiamid und seine Substitutionsprodukte sowie deren Salze. Bevorzugt ist das unsubstituierte Dicyandiamid.

**(E)** Trimere: Melamin(salz)e, wie [188] Melamin, [189] Melaminperchlorat, [190] -oxalat, [191] -sulfat, [192] -nitrat, [193] -(pyro, poly)phosphat, -borat und [194] - isocyanurat. Bevorzugt sind [188], [189], [193] und [194].

N-substituierte Melamine, wie [195] N-Monobutyl-, [196] N-Monooctyl-, [197] N-Monodecyl-, [198] N-Monododecyl-, [199] N-Monotetradecyl-, [200] N-Monohexadecyl-, [201] N-Monooctadecyl-, [202] N-Monophenylmelamin. Sowie [203] N-Monoacetyl-, [204] N-Monopropionyl- und [205] N-Monobutyroylmelamin, [206] N-Monophenyl-, [207] N-Monoallyl und [208] N-Monobenzylmelamin, [209] o-Hydroxyphenylmelamin und [210,211] 2-Hydroxyethyl(propyl)-melamin.

N,N'- substituierte Melamine, wie [212] N,N'-Dibutyl-, [213] N,N'-Dioctyl-, [214] N,N'-Didecyl-, [215] N,N'-Dihexadecyl- sowie [216] N,N'-Dioctadecylmelamin und [217,218] N,N'-bis-2-hydroxyethyl(propyl)melamin.

N,N',N"-substituierte Melamine, wie [219] N,N',N"-Tributyl-, [220] N,N',N"-Trioctyl-, [221] N,N',N"-Tridecyl-, [222] N,N',N"-Tetradecyl, [223] N,N',N"-Trihexadecyl- und [224] N,N',N"-Trioctadecylmelamin sowie [225] N,N',N"-Phenyl-bis-hydroxyethyl- und [226] N,N',N"-Tris-hydroxyethylmelamin, [227] N,N',N"-Triacetyl-, [228] N,N',N"-Tripropionyl, [229] N,N',N''-Tribenzoylmelamin sowie [230] N,N',N"-Triallyl- und [231] N,N',N"-Tribenzylmelamin. [232] N,N',N''-Triphenylmelamin und [233] N,N,N"-Tricyclohexylmelamin, [234] N,N',N"-Tris-hydroxypropylmelamin sowie [235] N,N',N"-Phenyl-bis-hydroxypropylmelamin.

Bevorzugt sind die Substanzen [141], [142], [143], [144], [150], [151], [153], [154], [155], [159], [162], [163], [164], [176], [178], [184], [185] und [186J, [187]sowie [188]. Weiterhin sind bevorzugt [206], [207], [208], [209], [210], [211]. Ebenso bevorzugt sind [217,218], [226], [227], [228], [229], [230] und [231].

Besonders bevorzugt sind [187], [188], [209], [210] und [211]. Weiterhin sind besonders bevorzugt [226] [227] [228] [229] [230] und [231]. Ganz besonders bevorzugt sind [141], [187], [188] und [194] in mikronisierter Form (Partikelgröße <50μm).

Ebenso ist ganz besonders bevorzugt. das Calzium- und Magnesiumsalz von [187], [188] oder [194] stellen sogenannte "Commodities" dar. Die Ca- und Mg-Salze können auch *"in situ"* während der PVC-Verarbeitung synthetisiert oder vorher bei der Konfektionierung bzw. Compoundierung aus Magnesium- oder Calciumhydroxid hergestellt werden. Zur Schmelzpunkterniederigung von [187] sind Eutektika mit N,N'-disubstituierten (Thio)Harnstoffen oder Anilinderivaten bzw. mit Aminobenzolsulfonamiden besonders bevorzugt.

5. Bevorzugte Zweier- oder Mehrfachkombinationen aus mindestens einem HCl-Scavenger **(SCV)** + einem Booster **(A-1)** sind*:

[232] CaH( u)[5)] mit **[A-1]**
[233] CaH( c)[6)] mit **[A-1]**
[234] MgH[11)] mit **[A-1]**
[235] CaAcac[12)] mit **[A-1]**
[236] MgAcac[13)] mit **[A-1**
[237] CaSt[38)] mit **[A-1]**
[238] MgSt[37)] mit **[A-1]**
[239] Hytal[7)] mit **[A-1]**
[240] NaZA[10)] mit **[A-1]**
[241HEXDGE[29)] mit **[A-1]**
[241a] c-HEXDGE[29a)] mit **[A-1]**
[242] BADGE[25)] mit **[A-1]**
[243] BFDGE[26)] mit **[A-1]**
[244] Glydi[30)] mit **[A-1]**
[245] Glytri[31)] mit **[A-1]**
[246] ESBO[57)] mit **[A-1]**
[247] DCN[20)] mit **[A-1]**
[248] Mel[23)]mit **[A-1]**
[249] ACEGA[24)] mit **[A-1]**

[250] TEPC[32)] mit **[A-1]**
[251] Cardura [35)] mit **[A-1]**

wobei die Kombinationen bei [232], [233], [241], [241a] und [248] jeweils mit **[A-1]** ganz besonders bevorzugt sind.
* Fußnoten und Abkürzungen siehe Patentbeispiele Anwendungstechnik

6. Ebenfalls bevorzugt sind Dreier- oder Mehrfachkombinationen aus mindestens zwei verschiedenen Scavengern **(SCV)** und einem Booster **(A-1):**

[232a] CaH( u)[5)] mit Mel[23)] und **[A-1]**
[233a] CaH( c)[6)] mit Mel[23)] und **[A-1]**
[233b] CaH( c)[6)] mit CaSt[38)] und **[A-1]**

wobei die Kombination bei [232a] mit **[A-1]** ganz besonders bevorzugt ist.

7. Besonders bevorzugt sind Dreier- oder Mehrfachkombinationen aus mindestens einem Anfangsfarbenverbesserer **(AFV)** aus den Verbindungsklassen **(B-1)**,**(B-2)**, **(C-1)**, **(C-2)** mit mindestens einem Scavenger **(SCV)** und einem Booster **(A-1):**

[252] CADMU[44)] mit CaH(u)[5)] und **[A-1]**
[253] CADMU[44)] mit CaH(c)[6)] und **[A-1]**
[254] CADMU[44)] mit Mg[11)] und **[A-1]**
[255] CADMU[44)] mit CaAcac[12)] und **[A-1]**
[256] CADMU[44)] mit MgAcac[13)] und **[A-1]**
[257] CADMU[44)] mit CaSt[38)] und **[A-1]**
[258] CADMU[44)] mit MgSt[37)] und **[A-1]**
[259] CADMU[44)] mit Hytal[7)] und **[A-1]**
[260] CADMU[44)] mit NaZA[10)] und **[A-1]**
[261] CADMU[44)] mit HEXDGE[29)] und **[A-1]**
[261a] CADMU[44)] mit c-HEXDGE[29a)] und **[A-1]**
[262] CADMU[44)] mit BADGE[25)] und **[A-1]**
[263] CADMU[44)] mit BFDGE[26)] und **[A-1]**
[264] CADMU[44)] mit Glydi[30)] und **[A-1]**
[265] CADMU[44)] mit Glytri[31)] und **[A-1]**
[266] CADMU[44)] mit ESBO[57)] und **[A-1]**
[267] CADMU[44)] mit DCN[20)] und **[A-1]**
[268] CADMU[44)] mit Mel[23)] und **[A-1]**
[269] CADMU[44)] mit ACEGA[24)] und **[A-1]**
[270] CADMU[44)] mit TEPC[32)] und **[A-1]**
[271] CADMU[44)] mit Cardura[35)] und **[A-1]**

wobei [252], [253], [261], [261a] und [268] ganz besonders bevorzugt sind.

[272] DMAU[43)] mit CaH(u)[5)] und **[A-1]**
[273] DMAU[43)] mit CaH(c)[6)] und **[A-1]**
[274] DMAU[43)] mit MgH[11)] und **[A-1]**
[275] DMAU[43)] mit CaAcac[12)] und **[A-1]**
[276] DMAU[43)] mit MgAcac[13)] und **[A-1]**
[277] DMAU[43)] mit CaSt[38)] und **[A-1]**
[278] DMAU[43)] mit MgSt[37)] und **[A-1]**
[279] DMAU[43)] mit Hytal[7)] und **[A-1]**
[280] DMAU[43)] mit NaZA[10)] und **[A-1]**
[281] DMAU[43)] mit HEXDGE[29)] und **[A-1]**
[281a] DMAU[43)] mit c-HEXDGE[29a)] und **[A-1]**
[282] DMAU[43)] mit BADGE[25)] und **[A-1]**
[283] DMAU[43)] mit BFDGE[26)] und **[A-1]**
[284] DMAU[43)] mit Glydi[30)] und **[A-1]**
[285] DMAU[43)] mit Glytri[31)] und **[A-1]**

[286] DMAU[43)] mit ESBO[57)] und **[A-1]**
[287] DMAU[43)] mit DCN[20)] und **[A-1]**
[288] DMAU[43)] mit Mel[23)] und **[A-1]**
[289] DMAU[43)] mit ACEGA[24)] und **[A-1]**
[290] DMAU[43)] mit TEPC[32)] und **[A-1]**
[291] DMAU[43)] mit Cardura[35)] und **[A-1]**

wobei [272], [273], [281], [281 a] und [288] ganz besonders bevorzugt sind.

[292] AC-1[41)] mit CaH(u)[5)] und **[A-1]**
[293] AC-1[41)] mit CaH(c)[6)] und **[A-1]**
[294] AC-1[41)] mit MgH[11)] und **[A-1]**
[295] AC-1[41)] mit CaAcac[12]) und **[A-1]**
[296] AC-1[41]) mit MgAcac[13)] und **[A-1]**
[297] AC-1[41)] mit CaSt[38)] und **[A-1]**
[298] AC-1[41)] mit MgSt[37)] und **[A-1]**
[299] AC-1[41)] mit Hytal[7)] und **[A-1]**
[300] AC-1[41)] mit NaZA[10)] und **[A-1]**
[301] AC-1[41)] mit HEXDGE[29)] und **[A-1]**
[301a] AC-1[41)] mit c-HEXDGE[29a)] und **[A-1]**
[302] AC-1[41)] mit BADGE[25)] und **[A-1]**
[303] AC-1[41)] mit BFDGE[26)] und **[A-1]**
[304] AC-1[41)] mit Glydi[30)] und **[A-1]**
[305] AC-1[41)] mit Glytri[31)] und **[A-1]**
[306] AC-1[41)] mit ESBO[57)] und **[A-1]**
[307] AC-1[41)] mit DCN[20)] und **[A-1]**
[308] AC-1[41)] mit Mel[23)] und **[A-1]**
[309] AC-1[41)] mit ACEGA[24)] und **[A-1]**
[310] AC-1[41)] mit TEPC[32)] und **[A-1]**
[311] AC-1[41)] mit Cardura[35)] und **[A-1]**

wobei [292], [293], [301], [301a] und [308] ganz besonders bevorzugt sind.

[312] AC-2[42)] mit CaH(u)[5)] und **[A-1]**
[313] AC-2[42)] mit CaH(c)[6)] und **[A-1]**
[314] AC-2[42)] mit MgH[11)] und **[A-1]**
[315] AC-2[42)] mit CaAcac[12]) und **[A-1]**
[316] AC-2[42)] mit MgAcac[13)] und **[A-1]**
[317] AC-2[42)] mit CaSt[38)] und **[A-1]**
[318] AC-2[42)] mit MgSt[37)] und **[A-1]**
[319] AC-2[42)] mit Hytal[7)] und **[A-1]**
[320] AC-2[42)] mit NaZA[10)] und **[A-1]**
[321] AC-2[42)] mit HEXDGE[29)] und **[A-1]**
[321a] AC-2[42)] mit c-HEXDGE[29a)] und **[A-1]**
[322] AC-2[42)] mit BADGE[25)] und **[A-1]**
[323] AC-1[42)] mit BFDGE[26)] und **[A-1]**
[324] AC-2[42)] mit Glydi[30)] und **[A-1]**
[325] AC-1[42)] mit Glytri[31)] und **[A-1]**
[326] AC-1[42)] mit ESBO[57]) und **[A-1]**
[327] AC-2[42)] mit DCN[20)] und **[A-1]**
[328] AC-1[41)] mit Mel[23)] und **[A-1]**
[329] AC-2[42)] mit ACEGA[24)] und **[A-1]**
[330] AC-2[42)] mit TEPC[32)] und **[A-1]**
[331] AC-2[42)] mit Cardura[35)] und **[A-1]**

wobei [312], [313], [321], [321 a] und [328] ganz besonders bevorzugt sind.

[332] M-DHP-1 mit CaH(u)[5)] und **[A-1]**]

[333] M-DHP-1[46] mit CaH(c)[6] und **[A-1]**
[334] M-DHP-1[46] mit MgH[11] und **[A-1]**
[335] M-DHP-1[46] mit CaAcac[12] und **[A-1]**
[336] M-DHP-1[46] mit MgAcac[13] und **[A-1]**
[337] M-DHP-1[46] mit CaSt[38] und **[A-1]**
[338] M-DHP-1[46] mit MgSt[37] und **[A-1]**
[339] M-DHP-1[46] mit Hytal[7] und **[A-1]**
[340] M-DHP-1[46] mit NaZA[10] und **[A-1]**
[341] M-DHP-1[46] mit HEXDGE[29] und **[A-1]**
[341a] M-DHP-1[46] mit c-HEXDGE[29a] und **[A-1]**
[342] M-DHP-1[46] mit BADGE[25] und **[A-1]**
[343] M-DHP-1[46] mit BFDGE[26] und **[A-1]**
[344] M-DHP-1[46] mit Glydi[30] und **[A-1]**
[345] M-DHP-1[46] mit Glytri[31] und **[A-1]**
[346] M-DHP-1[46] mit ESBO[57] und **[A-1]**
[347] M-DHP-1[46] mit DCN[20] und **[A-1]**
[348] M-DHP-1[46] mit Mel[23] und **[A-1]**
[349] M-DHP-1[46] mit ACEGA[24] und **[A-1]**
[350] M-DHP-1[46] mit TEPC[32] und **[A-1]**
[351] M-DHP-1[46] mit Cardura[35] und **[A-1]**

wobei [332], [333], [341], [341a] und [348] ganz besonders bevorzugt sind.

[352] M-DHP-2[47] mit CaH(u)[5] und **[A-1]**
[353] M-DHP-2[47] mit CaH(c)[6] und **[A-1]**
[354] M-DHP-2[47] mit MgH[11] und **[A-1]**
[355] M-DHP-2[47] mit CaAcac[12] und **[A-1]**
[356] M-DHP-2[47] mit MgAcac[13] und **[A-1]**
[357] M-DHP-2[47] mit CaSt[38] und **[A-1]**
[358] M-DHP-2[47] mit MgSt[37] und **[A-1]**
[359] M-DHP-2[47] mit Hytal[7] und **[A-1]**
[360] M-DHP-2[47] mit NaZA[10] und **[A-1]**
[361] M-DHP-2[47] mit HEXDGE[29] und **[A-1]**
[361a] M-DHP-2[47] mit c-HEXDGE[29a] und **[A-1]**
[362] M-DHP-2[47] mit BADGE[25] und **[A-1]**
[363] M-DHP-2[47] mit BFDGE[26] und **[A-1]**
[364] M-DHP-2[47] mit Glydi[30] und **[A-1]**
[365] M-DHP-2[47] mit Glytri[31] und **[A-1]**
[366] M-DHP-2[47] mit ESBO[57] und **[A-1]**
[367] M-DHP-2[47] mit ECN[20] und **[A-1]**
[368] M-DHP-2[47] mit Mel[23] und **[A-1]**
[369] M-DHP-2[47] mit ACEGA[24] und **[A-1]**
[370] M-DHP-2[47] mit TEPC[32] und **[A-1]**
[371] M-DHP-2[47] mit Cardura[35] und **[A-1]**

wobei [352], [353], [361], [361a] und [368] ganz besonders bevorzugt sind.

[372] P-DHP[54] mit CaH(u)[5] und **[A-1]**
[373] P-DHP[54] mit CaH(c)[6] und **[A-1]**
[374] P-DHP[54] mit MgH[11] und **[A-1]**
[375] P-DHP[54] mit CaAcac[12] und **[A-1]**
[376] P-DHP[54] mit MgAcac[13] und **[A-1]**
[377] P-DHP[54] mit CaSt[38] und **[A-1]**
[378] P-DHP[54] mit MgSt[37] und **[A-1]**
[379] P-DHP[54] mit Hytal[7] und **[A-1]**
[380] P-DHP[54] mit NaZA[10] und **[A-1]**
[381] P-DHP[54] mit HEXDGE[29] und **[A-1]**
[381a] P-DHP[54] mit c-HEXDGE[29a] und **[A-1]**

[382] P-DHP[54] mit BADGE[25] und **[A-1]**
[383] P-DHP[54] mit BFDGE[26] und **[A-1]**
[384] P-DHP[54] mit Glydi[30] und **[A-1]**
[385] P-DHP[54] mit Glytri[31] und **[A-1]**
[386] P-DHP[54] mit ESBO[57] und **[A-1]**
[387] P-DHP[54] mit DCN[20] und **[A-1]**
[388] P-DHP[54] mit Mel[23] und **[A-1]**
[389] P-DHP[54] mit ACEGA[24] und **[A-1]**
[390] P-DHP[54] mit TEPC[32] und **[A-1]**
[391] P-DHP[54] mit Cardura[35] und **[A-1]**

wobei [372], [373], [381], [381a] und [388] ganz besonders bevorzugt sind.

[392] Naf[45] mit CaH(u)[5] und **[A-1]**
[393] Naf[45] mit CaH(c)[6] und **[A-1]**
[394] Naf[45] mit MgH[11] und **[A-1]**
[395] Naf[45] mit CaAcac[12] und **[A-1]**
[396] Naf[45] mit MgAcac[13] und **[A-1]**
[397] Naf[45] mit CaSt[38] und **[A-1]**
[398] Naf[45] mit MgSt[37] und **[A-1]**
[399] Naf[45] mit Hytal[7] und **[A-1]**
[400] Naf[45] mit NaZA[10] und**[A-1]**
[401] Naf[45] mit HEXDGE[29] und **[A-1]**
[401a] Naf[45] mit c-HEXDGE[29a] und **[A-1]**
[402] Naf[45] mit BADGE[25] und **[A-1]**
[403] Naf[45] mit BFDGE[26] und **[A-1]**
[404] Naf[45] mit Glydi[30] und **[A-1]**
[405] Naf[45] mit Glytri[31] und **[A-1]**
[406] Naf[45] mit ESBO[57] und **[A-1]**
[407] Naf[45] mit DCN[20] und **[A-1]**
[408] Naf[45] mit Mel[23] und **[A-1]**
[409] Naf[45] mit ACEGA[24] und **[A-1]**
[410] Naf[45] mit TEPC[32] und **[A-1]**
[411] Naf[45] mit Cardura[35] und **[A-1]**

wobei [392], [393], [401], [401a] und [408] ganz besonders bevorzugt sind.

[412] Hyd[56] mit CaH(u)[5] und **[A-1]**
[413] Hyd[56] mit CaH(c)[6] und **[A-1]**
[414] Hyd[56] mit MgH[11] und **[A-1]**
[415] Hyd[56] mit CaAcac[12] und **[A-1]**
[416] Hyd[56] mit MgAcac[13] und **[A-1]**
[417] Hyd[56] mit CaSt[38] und **[A-1]**
[418] Hyd[56] mit MgSt[37] und **[A-1]**
[419] Hyd[56] mit Hytal[7] und **[A-1]**
[420] Hyd[56] mit NaZA[10] und **[A-1]**
[421] Hyd[56] mit HEXDGE[29] und **[A-1]**
[421 a] Hyd[56] mit c-HEXDGE[29a] und **[A-1]**
[422] Hyd[56] mit BADGE[25] und **[A-1]**
[423] Hyd[56] mit BFDGE[26] und **[A-1]**
[424] Hyd[56] mit Glydi[30] und **[A-1]**
[425] Hyd[56] mit Glytri[31] und **[A-1]**
[426] Hyd[56] mit ESBO[57] und **[A-1]**
[427] Hyd[56] mit DCN[21] und **[A-1]**
[428] Hyd[56] mit Mel[23] und **[A-1]**
[429] Hyd[56] mit ACEGA[24] und **[A-1]**
[430] Hyd[56] mit TEPC[32] und **[A-1]**
[431] Hyd[56] mit Cardura[35] und **[A-1]**

wobei [412], [413], [421], [421a] und [428] ganz besonders bevorzugt sind. Selbverständlich können auch ein oder mehrere AFV's mit einem oder mehreren SCV's und [**A**-1] kombiniert werden.
Benannt seien hierfür folgende Kombinationen, die ganz besonders bevorzugt sind:

8. Mischungen von **(B-1)**mit (**E**)/CaH oder CaSt und **[A-1]**

[432] DMAU43) mit MeI23)/CaH(u)5) und **[A-1]**
[433] DMAU43) mit MeI23)/CaH(c)6) und **[A-1]**
[434] DMAU43) mit MeI23)/CaSt38) und **[A-1]** oder
[435] M-DHP-247) mit HEXDGE29)/c-HEXDGE29a) und **[A-1]**

In Weich-PVC werden Kombinationen von TEAP mit 1,4-Cyclohexandimethanoldiglycidylether [118b] ganz besonders bevorzugt. Als Anfangsfarbenverbesserer sind hierbei Aminocrotonsäureester und Dihydropyridine ganz besonders geeignet.

**Verwendung von (A-1) als Antistatikum bzw. Antistatikum-Komponenten (AS)**

In EP 0 751 179 A1 sind Alkaliperchlorate und -triflate als Antistatikum-Komponenten beschrieben. Sie wirken in Gegenwart von Polyglykol-mono-Fettsäureestern. Ein Nachteil besteht in der begrenzten Löslichkeit dieser Salze in den genannten Estern. Überraschend wurde gefunden, dass der Innerkomplex **(A-1)** hierin eine sehr gute Löslichkeit aufweist und gute antistatische Eigenschaften entfaltet.
Als Polymersubstrate seien hierfür genannt: PVC-hart, PVC-weich, PVC-halbhart, CPVC, CPE, PVDC, HDPE, LDPE, PP, PS, HIPS, PU, PA, PC, PET, PBT, TPU, PMMA, PVA, ABS, SAN, MBS, MABS, NBR, NAR, EVA, ASA, und EPDM.
Als Zusatzkomponenten zu **(A-1)** finden hierbei folgende Systeme Verwendung: Glycerinether und/oder, -ester $R^8OCH_2CH(OH)CH_2OH$ oder $R^8CO_2CH_2CH(OH)CH_2OH$ und/oder ein DEA-derivat $R^9$-$[C(O)]_d$-$N(C_2H_4OH)_2$ oder $R^8OCH_2CH(OH)CH_2$-$[C(O)]_d$-$N(C_2H_4OH)_2$ oder $R^9N((CH_2)_2)OH)$-$(CH_2)_3$-$[C(O)]_d$-$N(C_2H_4OH)_2$ und/oder ein Paraffinsulfat(oder Sulfonat)-Salz $C_{12}$-$C_{18}$-Alkyl-$(O)_{d'}$-$SO_3$ Na, Li, K und/oder ein Polyoxyalkylen der Formel **(F)**

$$R^8\text{-}O\text{-}[CH(R^{10})\text{-}CH_2\text{-}O\text{-}]_a\text{-}[CH_2\text{-}[CH(OH)]_b\text{-}CH_2\text{-}O]_c\text{-}[C(O)]_{d''}\text{-}R^9 \qquad \textbf{(F)}$$

mit

Jedes $\mathbf{R^8}$ unabhängig = H, $C_1$ -$C_{24}$-Alkyl, $C_2$ - $C_{24}$-Alkenyl, $CH_2$=CH-C(O) oder $CH_2$=$CCH_3$-C(O);
Jedes $\mathbf{R^9}$ unabhängig = $C_1$ -$C_{24}$-Alkyl, $C_2$ - $C_{24}$-Alkenyl, $(CH_2)_2OH$, $CH_2$-COOH oder N($C_1$ - $C_8$-Alkyl)$_3$Hal;
$\mathbf{R^{10}}$ = H oder $CH_3$,
**Hal** = Cl, Br oder I;
**a** = eine ganze Zahl grösser oder gleich 2,
**b** = eine ganze Zahl von 1 bis 6, und
**c, d, d', d"** unabhängig voneinander = 0 oder 1

enthält.
Bedeuten Substituenten in den Verbindungen der Formel **(F)** Alkyl mit 1 bis 24 Kohlenstoffatomen, so kommen hierfür Reste wie Methyl, Ethyl, Propyl, Butyl, Pentyl, Hexyl, Heptyl, Octyl, Nonyl, Decyl, Undecyl, Dodecyl, Tetradecyl, Hexadecyl, Octadecyl, Eicosyl, Docosyl und Tetracosyl sowie entsprechende verzweigte Isomeren in Frage.
Bedeuten Substituenten in den Verbindungen der Formel **(F)** Alkenyl mit 1 bis 24 Kohlenstoffatomen, so leiten sich diese Reste von den genannten Alkylresten ab, wobei bevorzugt die Doppelbindung in der Mitte der Kohlenwasserstoffkette angeordnet ist. Besonders bevorzugt ist als Alkenylrest Oleyl. Wenn d 1 ist bedeutet $R^9$ als Alkenyl bevorzugt auch $CH_2$=CH- oder $CH_2$=$CCH_3$-.
In den Verbindungen der Formel **(F)** bedeutet $R^8$ bevorzugt H oder $C_1$ - $C_4$-Alkyl und ganz besonders bevorzugt H.
In den Verbindungen der Formel **(F)** bedeutet $R^9$ bevorzugt $C_6$ - $C_{20}$-Alkyl, $C_6$ - $C_{20}$-Alkenyl oder N($C_1$ - $C_8$-Alkyl)$_3$Cl und ganz besonders bevorzugt $C_6$ - $C_{20}$-Alkyl oder $C_6$ - $C_{20}$-Alkenyl.
In den Verbindungen der Formel **(F)** bedeutet Hal bevorzugt Cl.
In den Verbindungen der Formel **(F)** bedeutet a bevorzugt eine Zahl zwischen 2 und 20 und ganz besonders bevorzugt eine Zahl zwischen 2 und 14.
In den Verbindungen der Formel **(F)** bedeutet b bevorzugt eine Zahl zwischen 2 und 6 und ganz besonders bevorzugt die Zahl 4.

In den Verbindungen der Formel **(F)** bedeutet c bevorzugt die Zahl 0 oder 1 and ganz besonders bevorzugt bedeutet c die Zahl 0 und d die Zahl 1.

Besonders bevorzugt sind Polypropylenglykollaurylester, Polypropylenglykololeylester, Polypropylenglykolmethyldiethylammoniumchlorid, Polyethylenglykolmonomethylether, Polyethylenglykollaurylester, Polyethylenglykololeylester, Polyethylenglykololeylether, Polyethylenglykolsorbitanmonolaurylester, Polyethylenglykolstearylester, Polyethylenglykolpolypropylenglykollaurylether und Polyethylenglykollauryl-ethercarbonsäure.

Ganz besonders bevorzugt sind Polyethylenglykololeylether und speziell Polyethylenglykollaurylester.

Ganz besonders bevorzugt sind Verbindungen der Formel **(F)**, worin $R^8$ = H, $R^9$ = $C_6$ - $C_{20}$-Alkenyl, $R^{10}$ = H oder $CH_3$, a eine Zahl zwischen 2 und 14, c null und d eins ist.

Beispiele hierfür sind Glycerinmonolauryl-, -oleyl-, -palmityl- und -stearylether; Glycerinmonolaurat, -oleat, -palmitat und -stearat; Lauryl-, Oleyl-, Palmityl- und Stearyldiethanolamin; Polyethylenglykol(PEG)-monolaurat, -monooleat, -monopalmitat und - monostearat, PEG-monolauryl-, -myristyl-, -palmityl-, -stearyl- und -oleylether. Öl-, Palmitin- und Stearinsäure-diethanolamid. Natrium-, Kalium-, Lithium -tetra-, -hexa- und - octa-decansulfonat oder-sulfat.

Als Handelsprodukte seien aufgeführt: DEHYDAT®10, DEHYDAT®R80X, IRGASTAT® P, ATMER™, Lankrostat® LA3, Ethoduomeen® T/12, Ethomeen® HT/12, Ethomeen® T/12, Ethomeen® O/12, Ethomeen® C/12, TEGIN® R90 und NOROPLAST® 2000.

Weitere wichtige Zusatzstoffe zur Performance-Verbesserung sind Phosphite und sterisch gehinderte Amine.

**Phosphite**

Organische Phosphite sind bekannte Co-Stabilisatoren für chlorhaltige Polymere. Beispiele sind Trioctyl-, Tridecyl-, Tridodecyl-, Tritridecyl-, Tripentadecyl-, Trioleyl, Tristearyl-, Triphenyl-, Trilauryl-, Trikresyl-, Tris-nonylphenyl-, Tris-2,4-t-butyl-phenyl- oder Tricyclohexylphosphit. Weitere geeignete Phosphite sind verschieden gemischte Aryldialkyl- bzw. Alkyl-diarylphosphite wie Phenyldioctyl-, Phenyldidecyl-, Phenyldidodecyl-, Phenylditridecyl-, Phenylditetradecyl-, Phenyldipentadecyl-, Octyldiphenyl-, Decyldiphenyl-, Undecyldiphenyl-, Dodecyldiphenyl-, Tridecyldiphenyl-, Tetradecyldiphenyl-, Pentadecyldiphenyl-, Oleyldiphenyl-, Stearyldiphenyl- und Dodecyl-bis-2,4-di-t-butyl-phenylphosphit. Weiterhin können auch Phosphite verschiedener Di- bzw. Polyole vorteilhaft verwandt werden, z.B. Tetraphenyldipropylenglykoldiphosphit, Poly(dipropylen-glykol)phenylphosphit, Tetra-isodecyl-dipropylenglykoldiphosphit, Tris-dipropylenglykol-phosphit, Tetramethylolcyclohexanol-decyldiphosphit, Tetramethylolcyclohexanolbutoxy-ethoxy-ethyldiphosphit, Tetramethylolcyclohexanol-nonylphenyl-diphos-phit, Bis-nonyl-phenyl-di-trimethylolpropandiphosphit, Bis-2-butoxyethyl-di-trimethylolpropandiphosphit, Trishydroxyethylisocyanurathexadecyltriphosphit, Didecylpentaerythritdiphosphit, Distearylpentaerythritdiphosphit, Bis-2,4-di-t-butylphenylperrtaerythritdiphosphit, sowie Gemische dieser Phosphite und Aryl/alkylphosphit-Gemische der statistischen Zusammen-setzung $(H_{19}C_9\text{-}C_6H_4)O_{1,5}P(OC_{12,13}H_{25,27})_{1,5}$ oder $(C_8H_{17}\text{-}C_6H_4\text{-}O\text{-})_2P(i\text{-}C_8H_{17}O)$,$(H_{19}C_9\text{-}C_6H_4)O_{1,5}P(OC_{9,11}H_{19,23})_{1,5}$. Technische Beispiele sind Naugard P, Mark CH300, MarkCH301, Mark CH302 und Mark CH55 (Hersteller Crompton Corp. USA). Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewandt werden.

**Sterisch gehinderte Amine (HALS)**

Bei den sterisch gehinderten Aminen handelt es sich allgemein um Verbindungen enthaltend die Gruppe

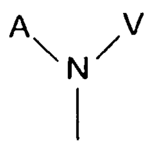

**(G-1)**

worin **A** und **V** unabhängig voneinander $C_{1\text{-}8}$Alkyl-, $C_{3\text{-}8}$ Alkenyl-, $C_{5\text{-}8}$ - Cycloalkyl-, oder $C_{7\text{-}9}$ -Phenylalkyl- sind, oder zusammen gegebenenfalls durch O, NH oder $CH_3$-N unterbrochenes $C_{2\text{-}5}$ -Alkylen bilden, oder um ein cyclisches sterisch gehindertes Amin, insbesondere eine Verbindung aus der Reihe der Alkyl- bzw. Polyalkylpiperidine, vor allem der Tetramethylpiperidine enthaltend die Gruppe

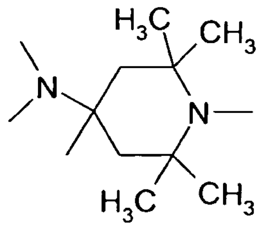

(G-2)

Beispiele für solche Polyalkylpiperidinverbindungen sind folgende (bei den oligomeren oder polymeren Verbindungen liegen n und r im Bereich 2-200, vorzugsweise im Bereich 2-10, insbesondere 3-7):

01) N,N'-Bis-(2,2,6,6-tetramethylpiperidin-4-yl)-ethylen-1,2 -di-acetamid

01a) N, N'-Bis-(2,2,6,6-tetramethylpiperidin-4-yl)-hexamethylen-1 ,6-di-acetamid
01b) N,N'-Bis-(2,2,6,6-tetramethylpiperidin-4-yl)-ethylen-1,2-di-formamid

02) N,N'-Bis-(2,2,6,6-tetramethylpiperidin-4-yl)-adipinsäurediamid
03) N, N'-Bis-(2,2,6,6-tetramethylpiperidin-4-yl)-oxamid
04) 4-Hydroxybenzoesäureamido-2,2,6,6- tetra-methylpiperidin
05)

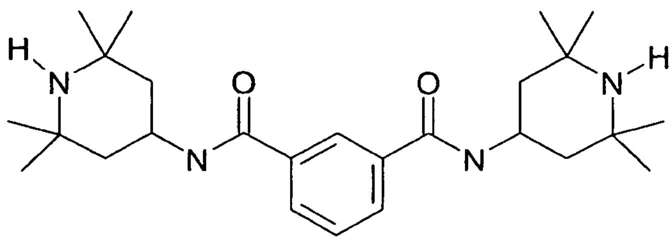

05A)

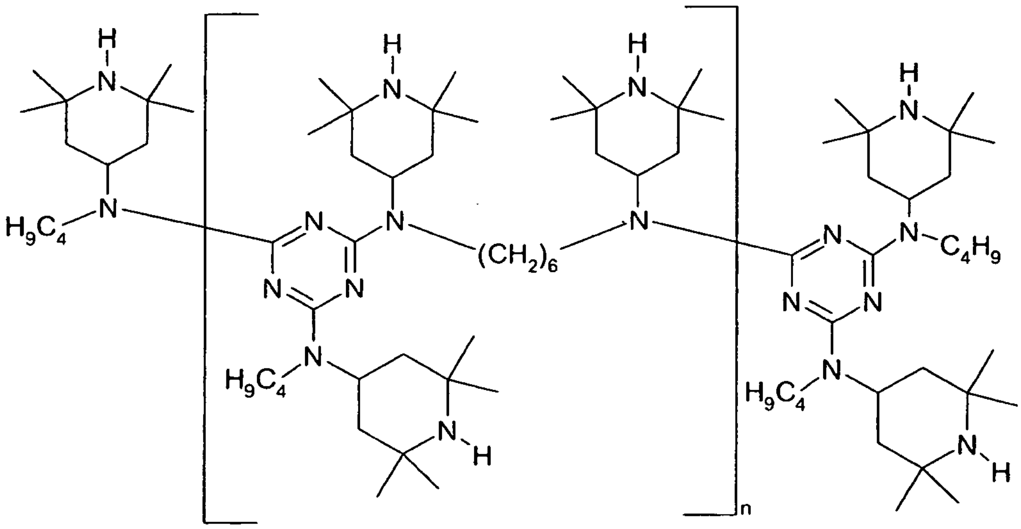

06)

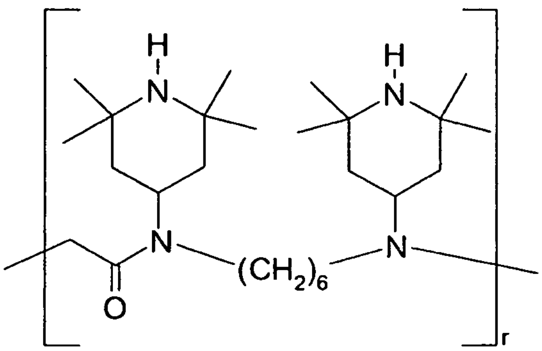

07)

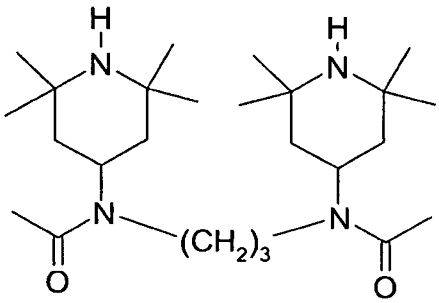

08)

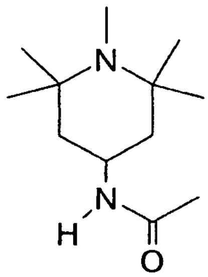

09)

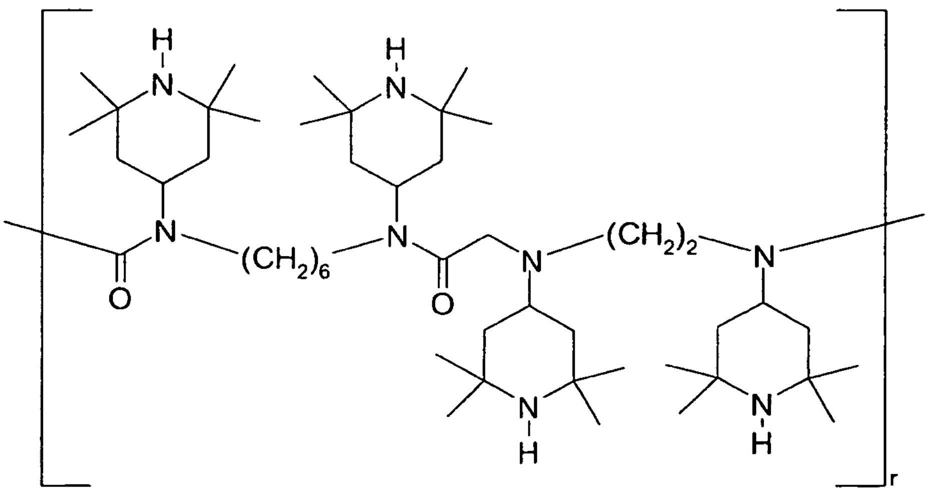

10)

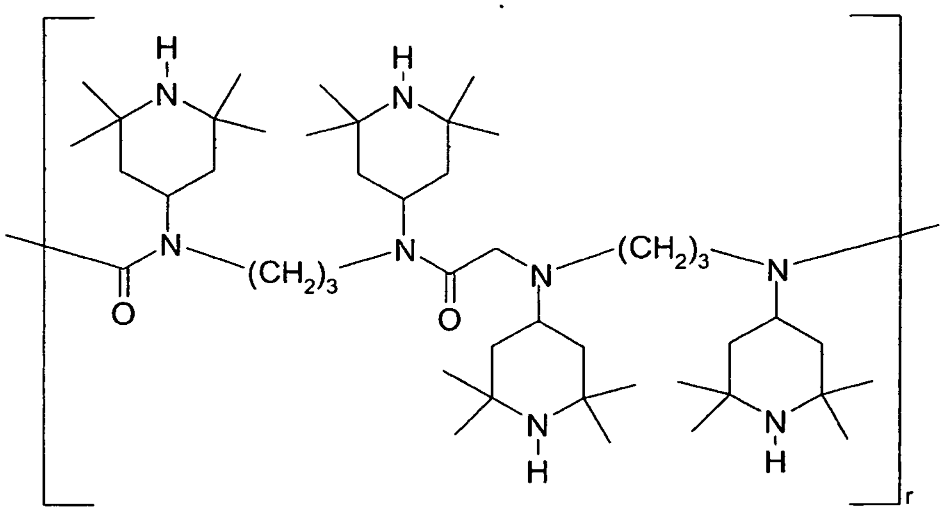

11)

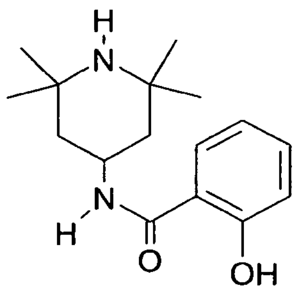

12)

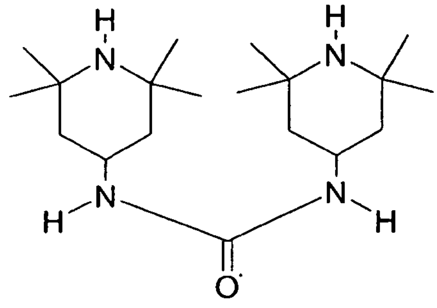

13)

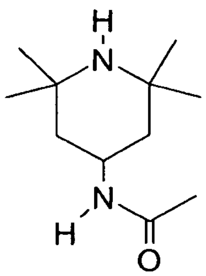

14)

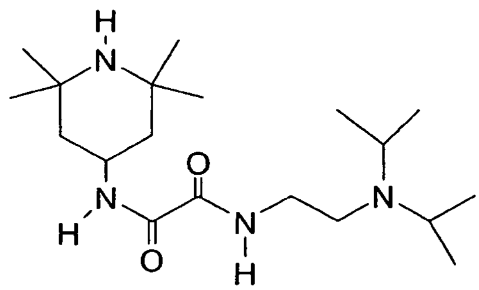

15)

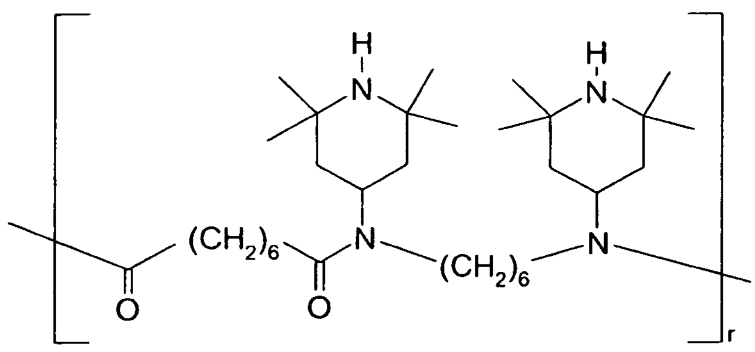

16)

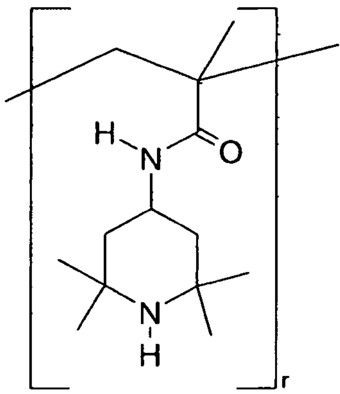

17)

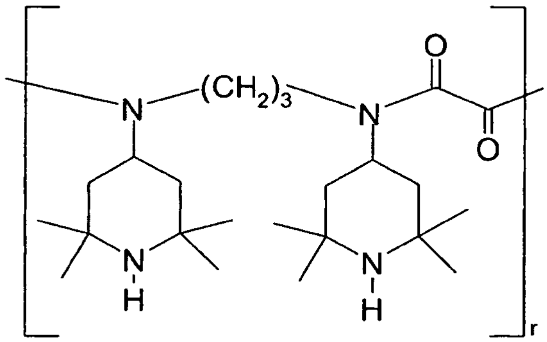

18)

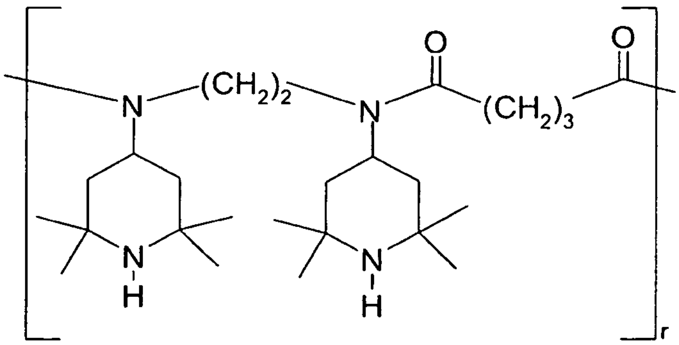

19)

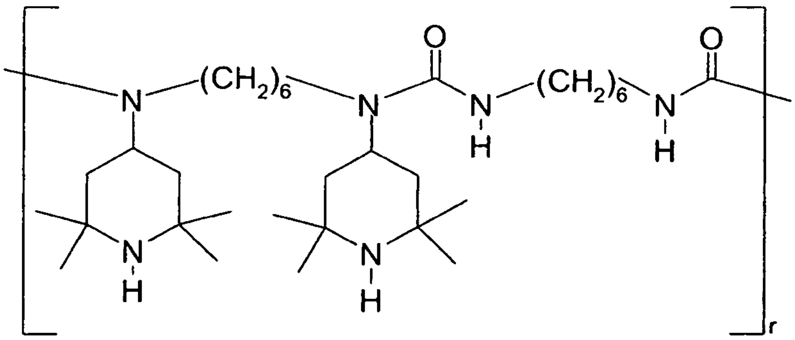

20)

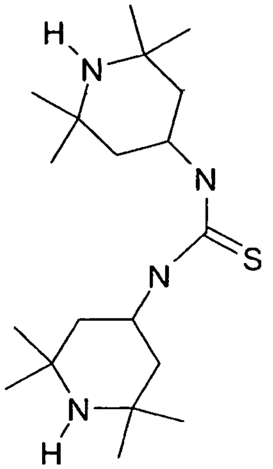

22)

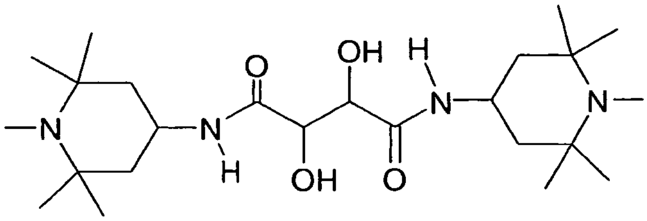

23)

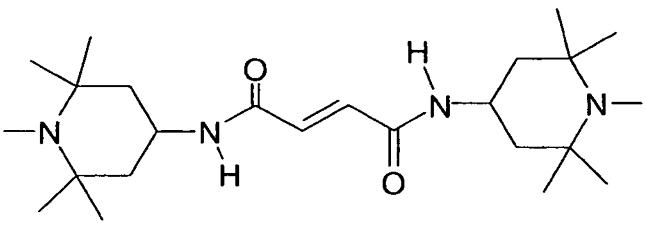

24)

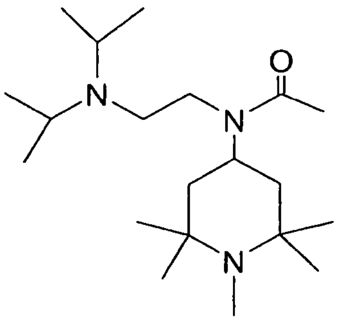

25)

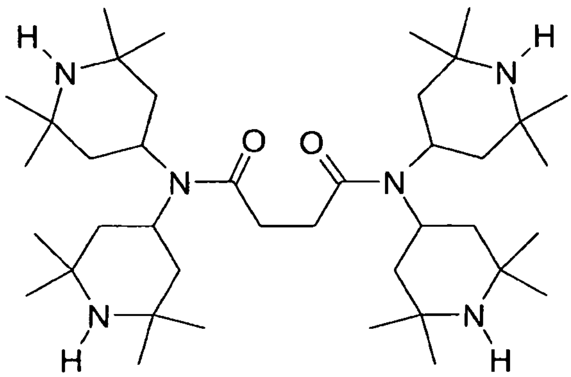

26)

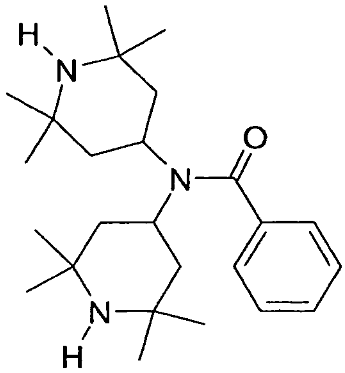

27)

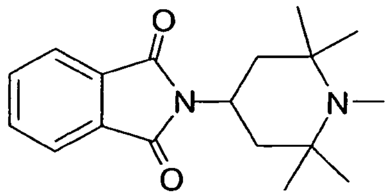

28)

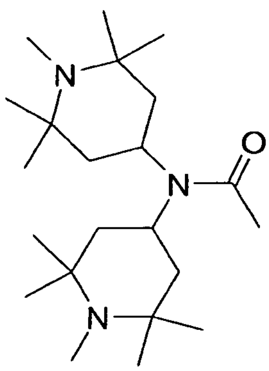

29)

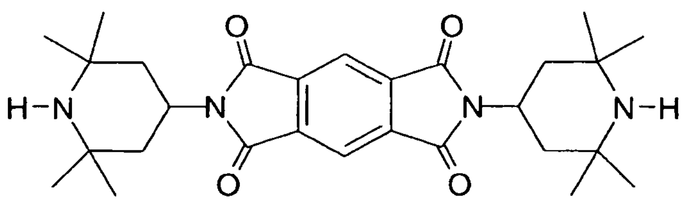

30)

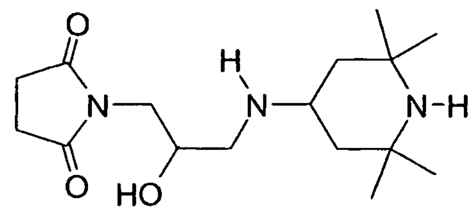

31)

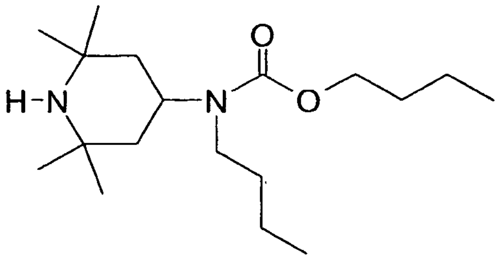

32)

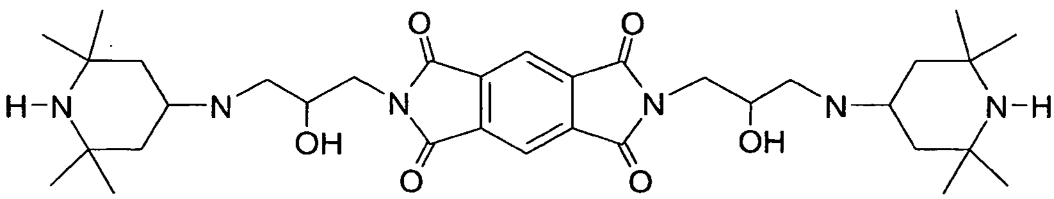

33)

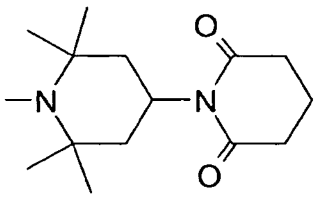

34) 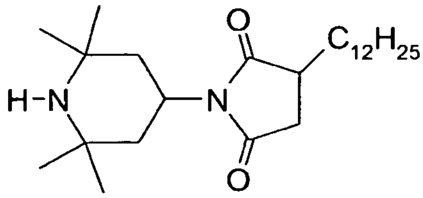

35)

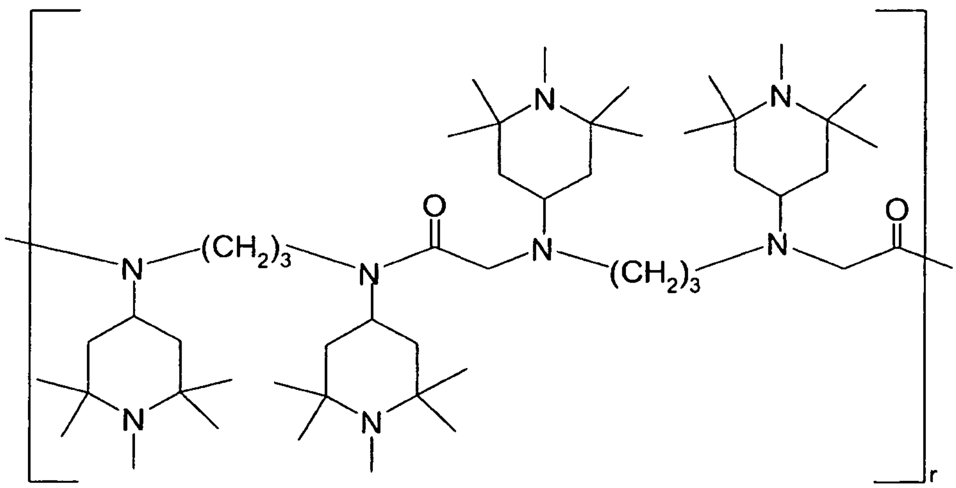

36)

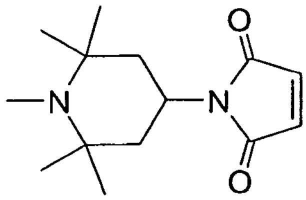

37)

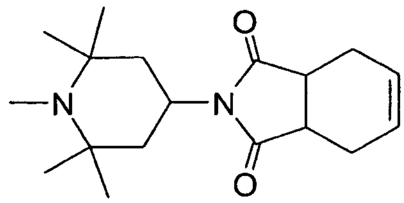

38)

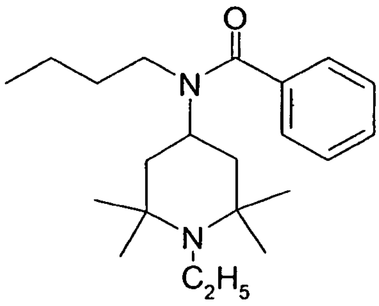

39)

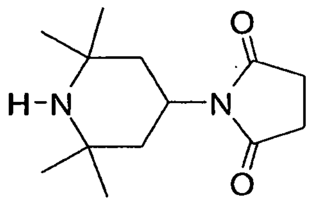

40)

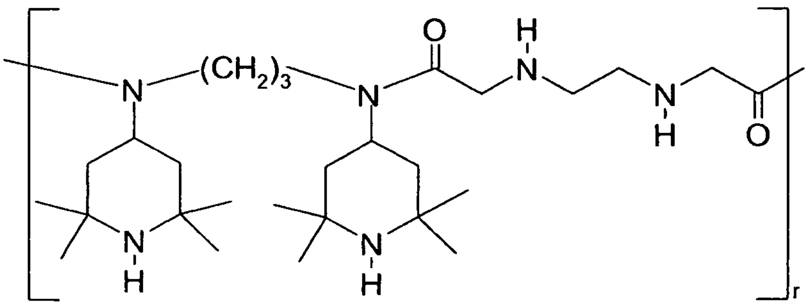

41)

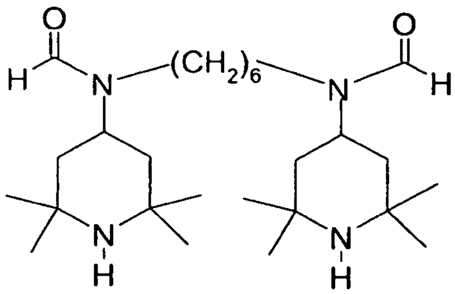

Es kommen auch Verbindungen folgender Struktur **(G-3)** in Frage:

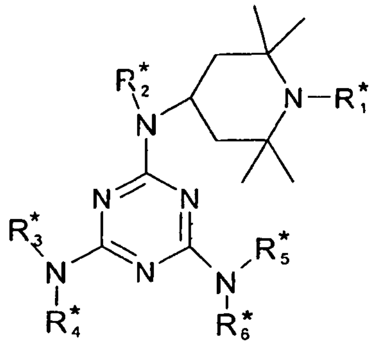

**(G-3)**

Beispiele für Verbindungen der Formel **(G-3)** sind:

| Nr | 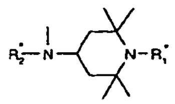 | 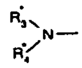 | 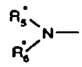 |
|---|---|---|---|
| 42) | PMP-NH- | $H_2N$- | $H_2N$- |
| 43) | TMP-NH- | TMP-NH- | $H_2N$- |
| 44) | TMP-NH- | $Me_2N$- | $Me_2N$- |
| 45) | TMP-NH- | TMP-NH- | TMP-NBu- |
| 46) | TMP-NH- | TMP-NH- | $(HO-CH_2CH_2-)_2N$- |
| 47) | TMP-NH- | $(HO-CH_2CH_2-)NH$- | TMP-NBu- |
| 48) | $(TMP)_2$-N- | $H_2N$- | $H_2N$- |
| 49) | TMP-NH- | 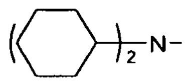 | 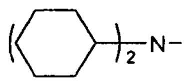 |
| 50) | $(TMP)_2N$- | $(TMP)_2N$- | $(TMP)_2N$- |
| 51) | PMP-NH- | PMP-NH- | PMP-NH- |
| 52) | $(i-Pr)_2N-C_2H_4-N(TMP)$- | $Pr_2N$- | $Pr_2N$- |
| 53) | $(i-Pr)_2N-C_2H_4-N(TMP)$- | TMP-NH | TMP-NH |
| 54) | TMP-NH- | $Et_2N$- | TMP-NH- |
| 55) | TMP-NH- | $(HOCH_2)_3C-NH$- | TMP-NH- |
| 56) | TMP-NH- | 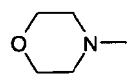 | $Et_2N-C_2H_4-NH$- |
| 57) | $TMP_2N$- | TMP-NH- | $Et_2N-C_2H_4-NH$- |
| 58) | TMP-NH- | TMP-NH- | 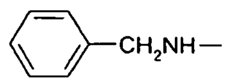 |
| 59) | TMP-NH- | 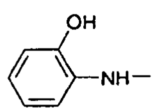 | TMP-NH- |
| 60) | TMP-NH- | 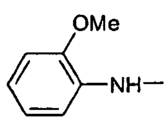 | 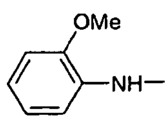 |

(fortgesetzt)

| Nr | 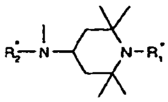 | 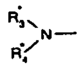 | 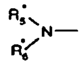 |
|---|---|---|---|
| 61) | TMP-NH- | $Et_2N-C_2H_4-NH-$ | 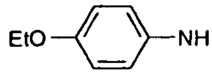 |
| 62) | TMP-N(nBu)- | $Et_2N-$ | $Et_2N-$ |
| 63) | TMP-N(Et)- | $(n-Bu)_2N-$ | TMP-N(Et)- |
| 64) | TMP-NH- | 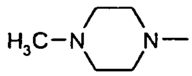 | TMP-NH- |
| 65) | TMP-NH- | 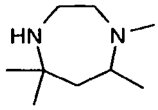 | TMP-NH- |
| 66) | 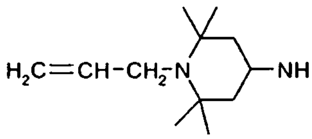 | 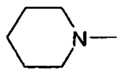 | 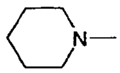 |
| 67) | 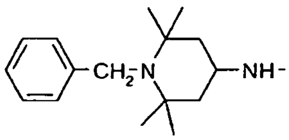 | 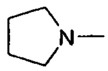 | 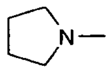 |
| 68) | 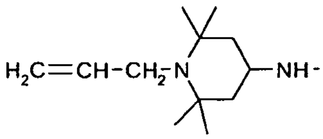 | TMP-NH- | TMP-NH- |
| 69) | TMP-NH- | $(HO-C_2H_4)_2N-$ | $(HO-C_2H_4)_2N-$ |
| 70) | 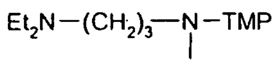 | TMP-NH- | TMP-NH- |
| 71) | 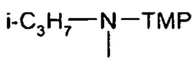 | PMP-NH- | PMP-NH- |
| 72) | 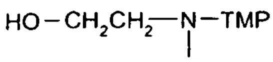 | 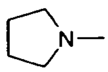 | 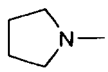 |
| 73) | 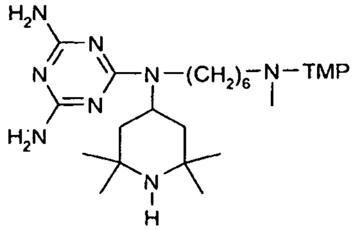 | $H_2N-$ | $H_2N-$ |
| 74) | 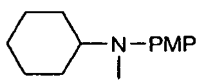 | TMP-NH- | TMP-NH- |

(fortgesetzt)

| Nr | 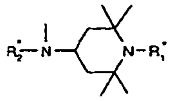 | 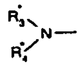 | 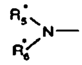 |
|---|---|---|---|
| 75) | 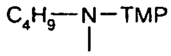 | 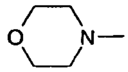 | 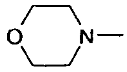 |
| 76) | 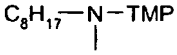 | TMP-NH- | TMP-NH- |
| 77) | 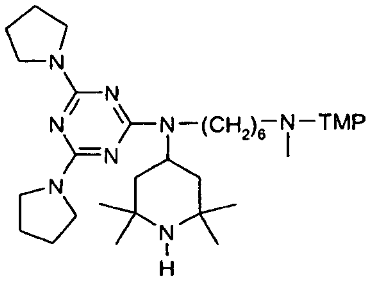 | 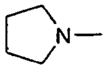 | 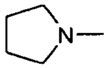 |
| 78) | 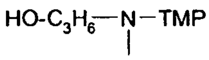 | TMP-NH- | TMP-NH- |
| 79) | 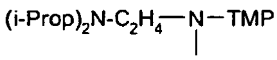 | $(i\text{-}Pr)_2N\text{-}C_2H_4\text{-}NH\text{-}$ | $(i\text{-}Pr)_2N\text{-}C_2H_4\text{-}NH\text{-}$ |
| 80) | 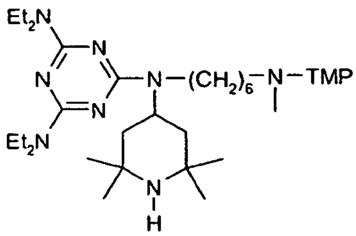 | $Et_2N$- | $Et_2N$- |
| 81) | 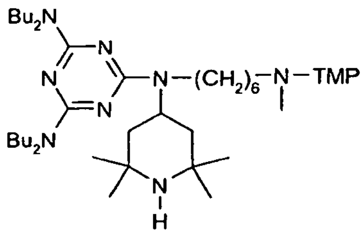 | $Bu_2N$- | $Bu_2N$- |
| 82) | 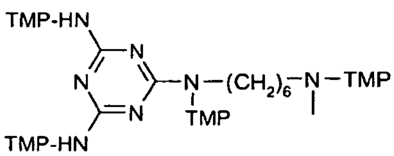 | TMP-NH- | TMP-NH- |
| 83) | 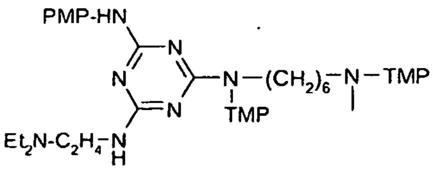 | TMP-NH- | $Et_2N\text{-}C_2H_4\text{-}NH\text{-}$ |
| 84) | $(TMP_2)N$- | $(i\text{-}Pr)_2N\text{-}C_2H_4\text{-}NH\text{-}$ | $(i\text{-}Pr)_2N\text{-}C_2H_4\text{-}NH\text{-}$ |
| 85) | TMPNH- | $Et_2N\text{-}C_2H_4\text{-}NH\text{-}$ | $Et_2N\text{-}C_2H_4\text{-}NH\text{-}$ |

(fortgesetzt)

| Nr | 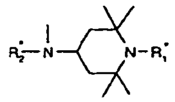 | 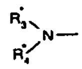 | 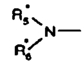 |
|---|---|---|---|
| 86) | 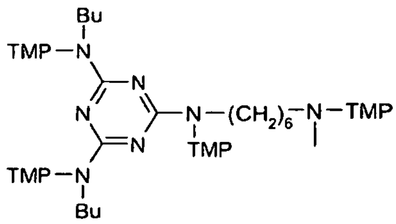 | TMP-N(nBu)- | TMP-N(nBu)- |

Erläuterungen :

TMP = 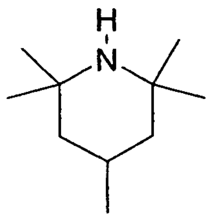 PMP = 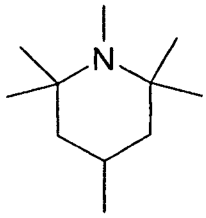

Me = Methyl;
Et = Ethyl; Pr = Propyl; Bu = Butyl.

Weitere in Frage kommende Verbindungen sind:

87)

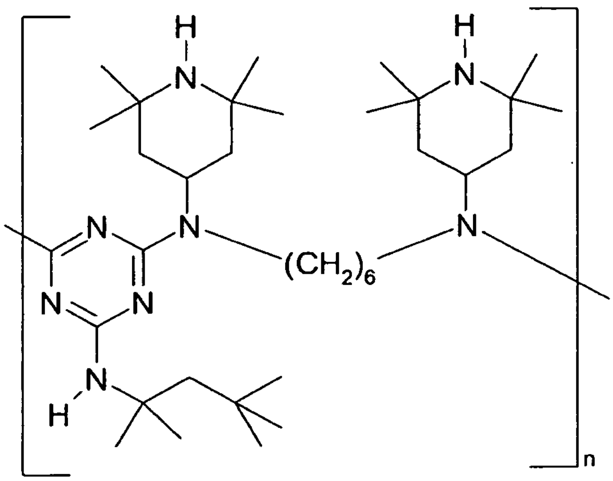

(n=2–10)

88)

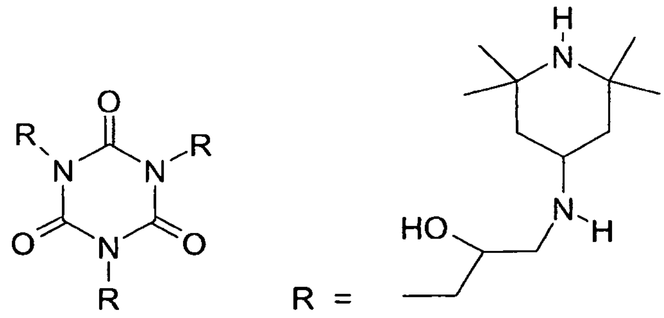

89)

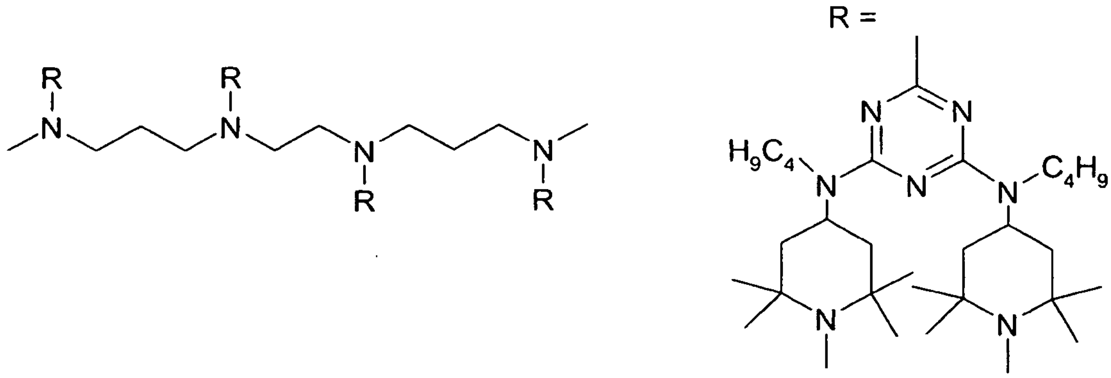

90)

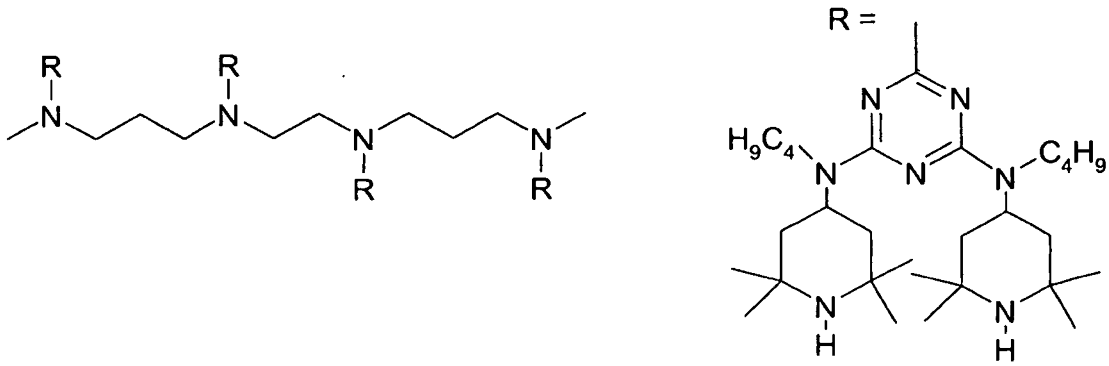

91)

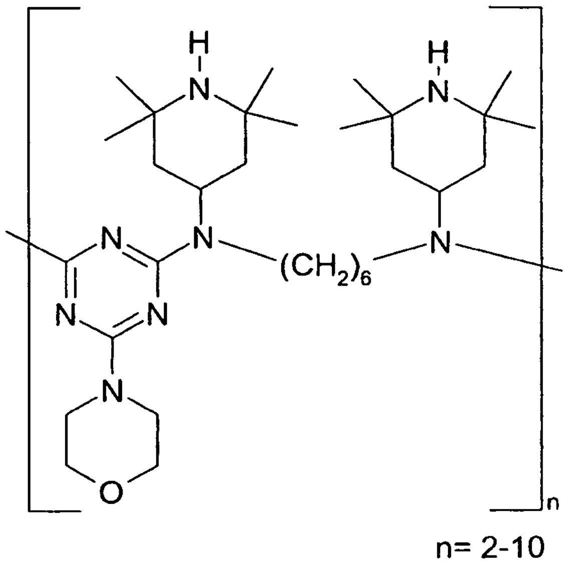

91)

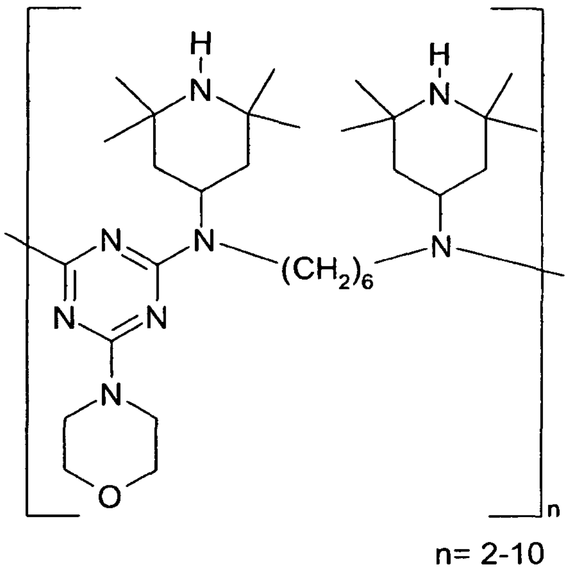

92)

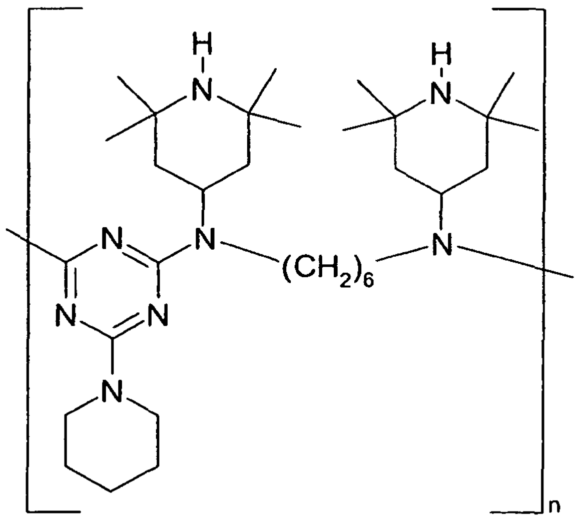

n= 2-10

93)

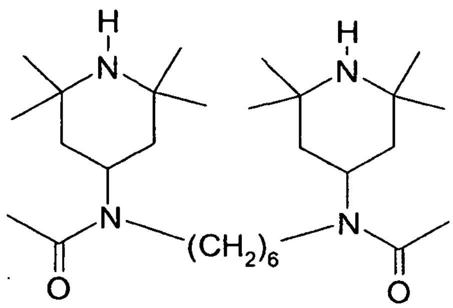

94)

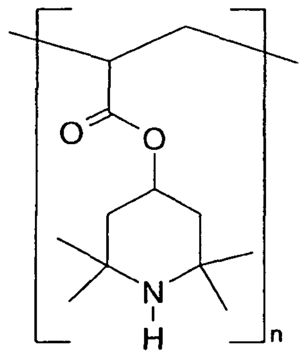

Polymer aus:

95)

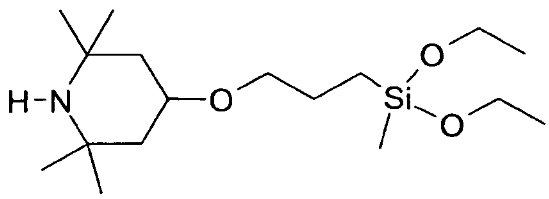

96)

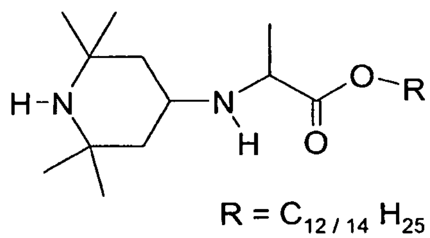

$R = C_{12/14} H_{25/29}$

97)

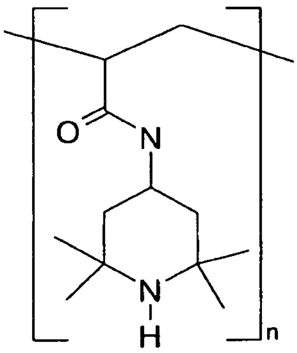

98) 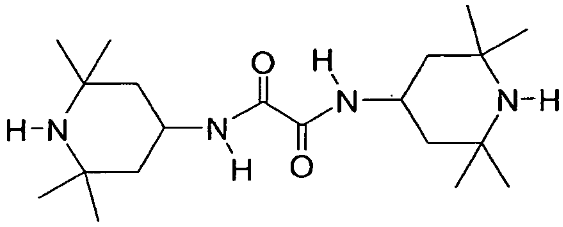

99)

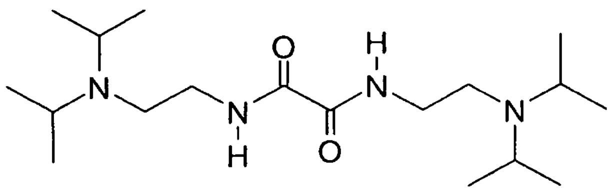

100)

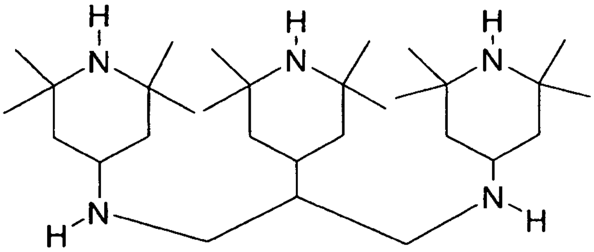

101)

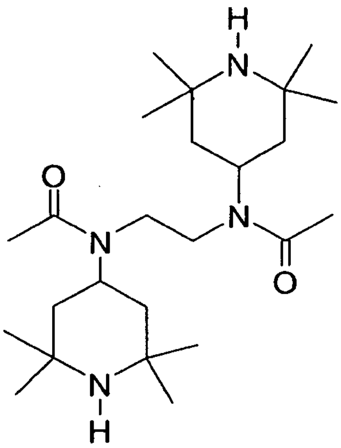

102) 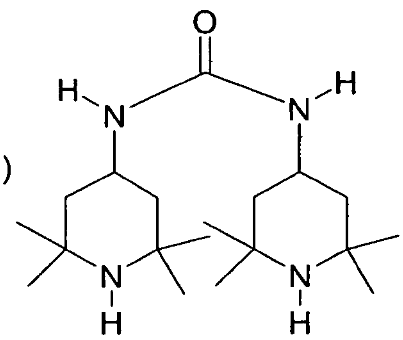

103)

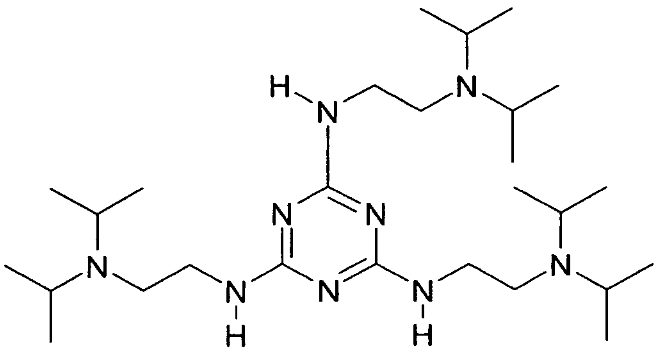

104)

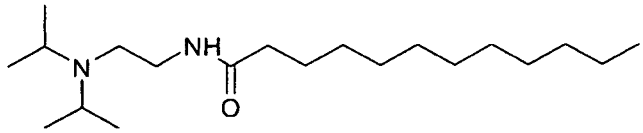

105)

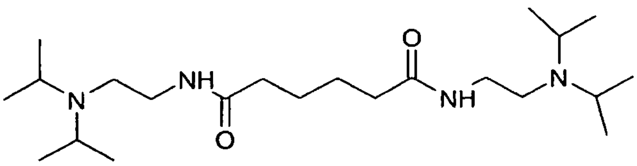

106)

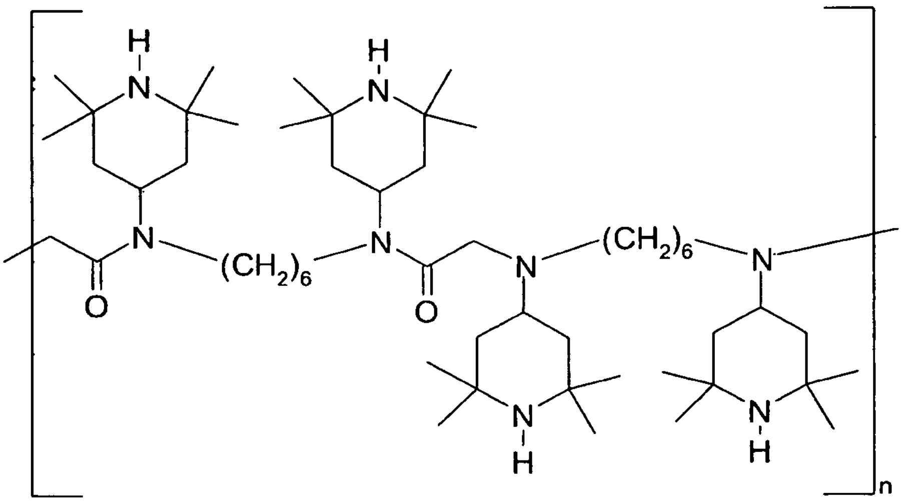

107)

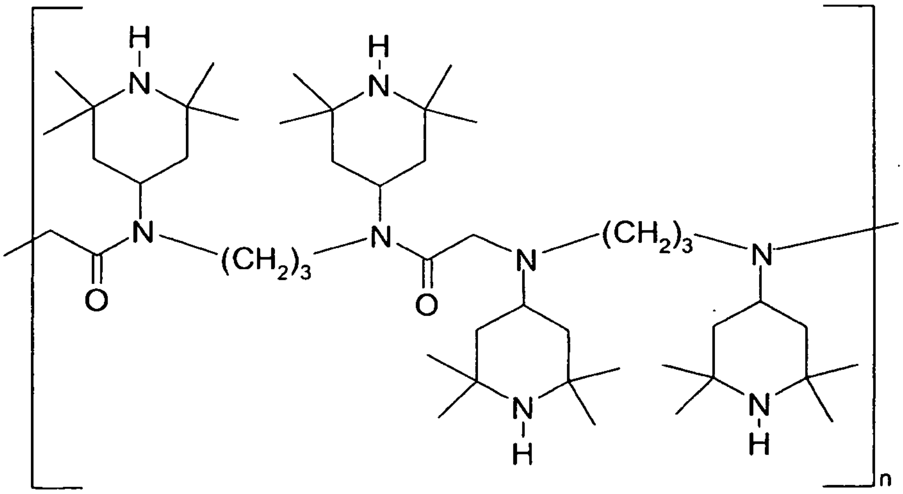

108)

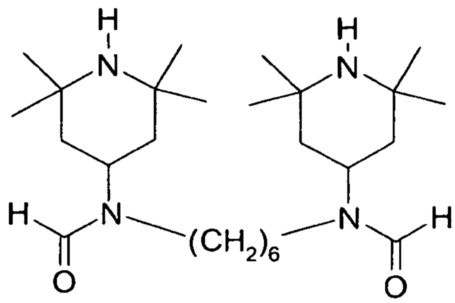

109)

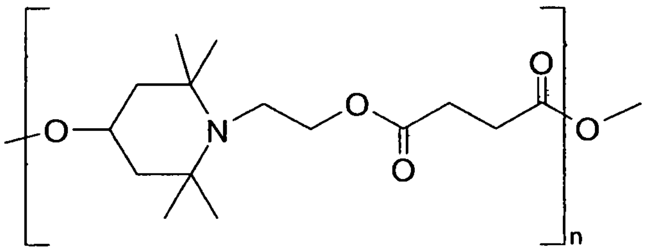

110)

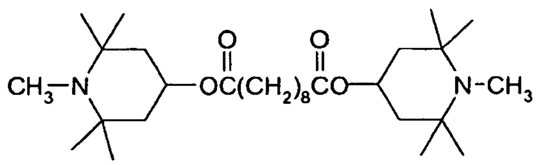

111)

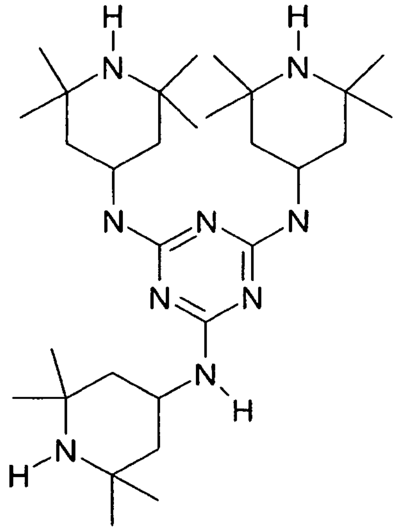

112)

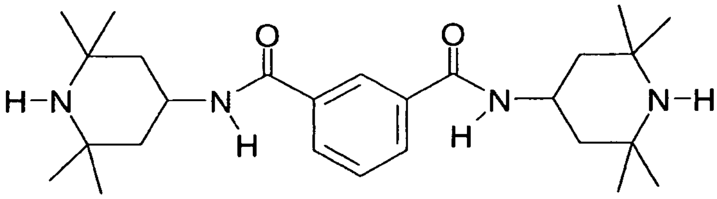

113)

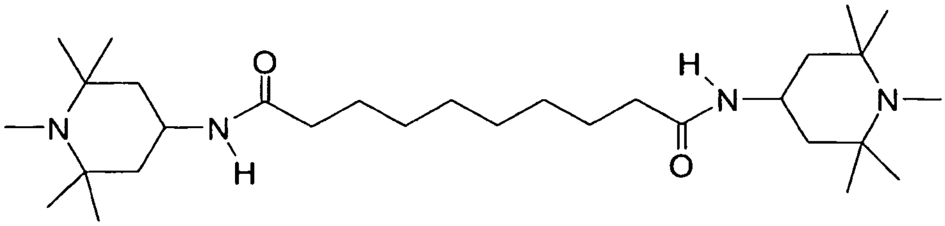

114)

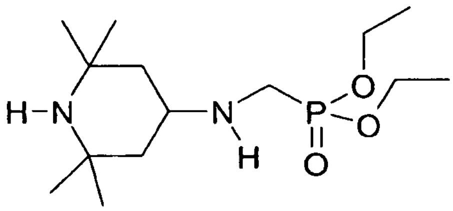

115)

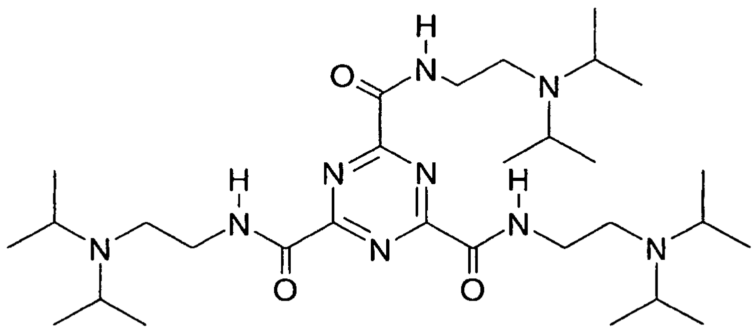

116)

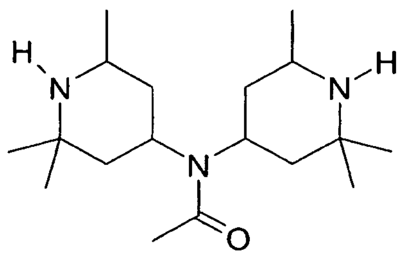

117)

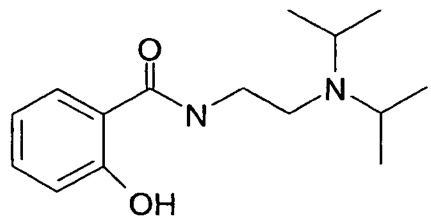

118)

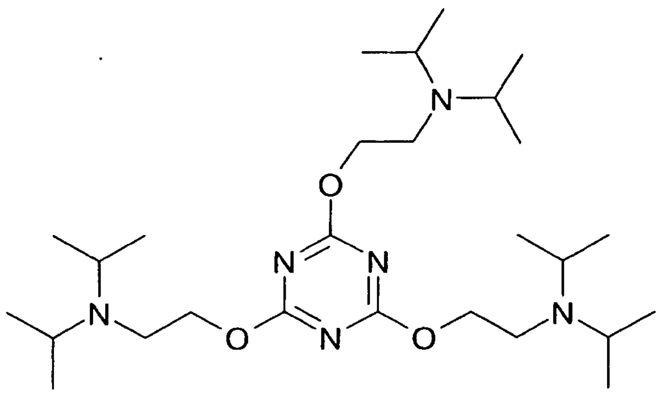

119)

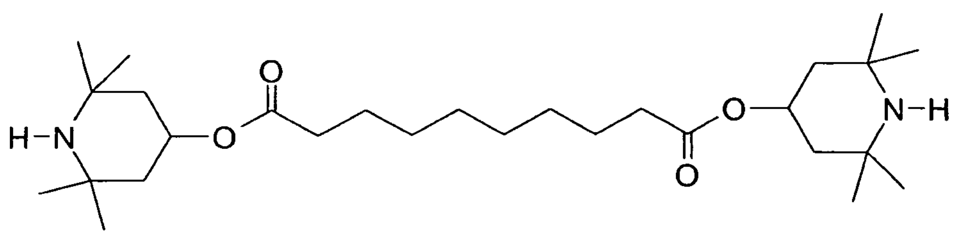

Weitere Beispiele sind:

120)

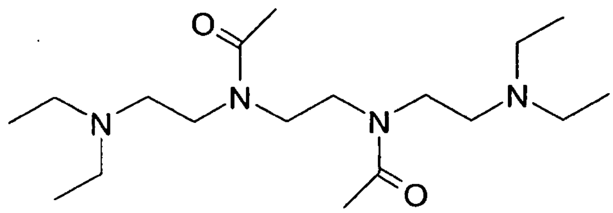

121)

$^{iso}Pr_2N-CH_2CH_2-NH-CO-CH_2CH_2-]_2$

122)

$^{so}Pr_2N-CH_2CH_2CH_2-NH-CO-]_2$

123)

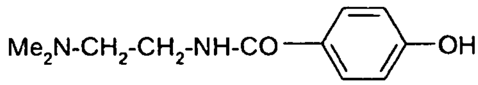

124)

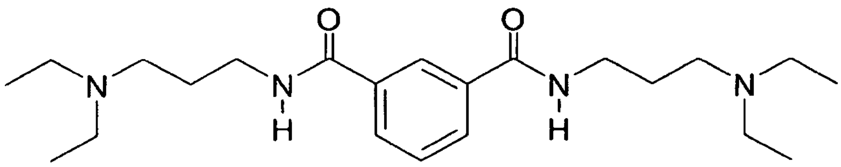

125)

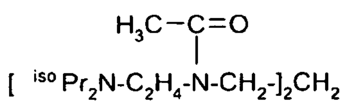

126)

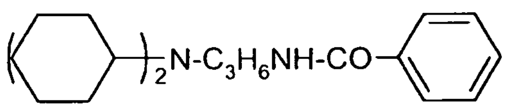

127)

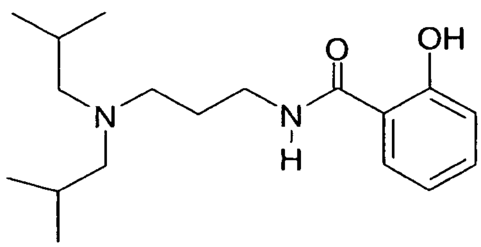

128) $^{tert}Bu_2N-C_3H_6-NH)_2CO$

129)

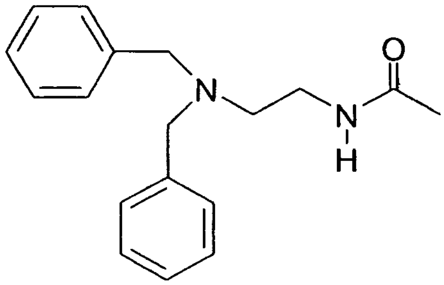

130) $t_2N-C_2H_4-NH-CO-)_2$

131)

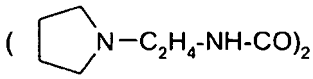

132)

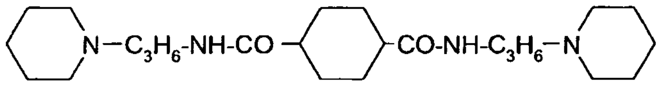

133) $^{iso}Pr_2N-C_2H_4-NH-CO-CH(OH)]_2$

134) $(Et_2N-C_3H_6-N(CH_3)-CO-CH_2-)_2$

135) $^{iso}Pr'N-C_3H_6-)_2N-CO-CH_3$

136)

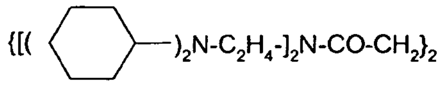

137)

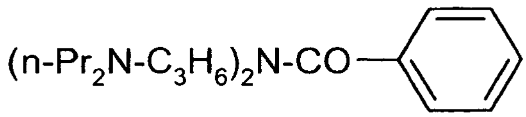

138)

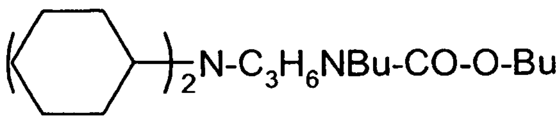

139)

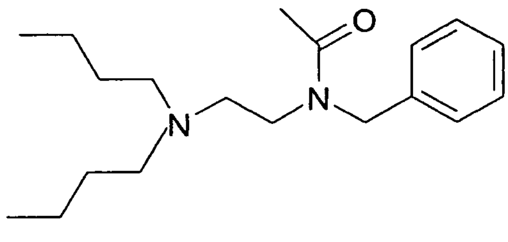

sowie Verbindungen der Struktur **(G-4)**

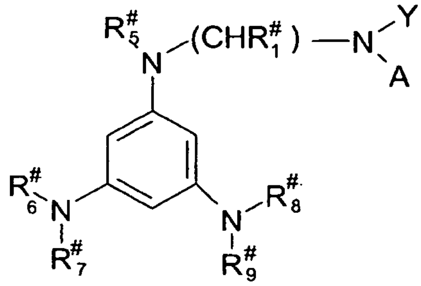

**(G-4)**

Beispiele für Verbindungen der Formel **(G-4)** sind:

| Nr | **$AYN-CHR^{\#}{}_{1})_{m}-NR^{\#}{}_{5}-$** | **$R^{\#}{}_{6}R^{\#}{}_{7}N-$** | **$R^{\#}{}_{8}R^{\#}{}_{9}N-$** |
|---|---|---|---|
| | | | |
| 140 | $Et_2N-C_2H_4-NH-$ | $-NH_2$ | $-NH_2$ |
| 141 | $Et_2N-C_2H_4-NH-$ | $Et_2N-C_2H_4-NH-$ | $Et_2N-C_2H_4-NH-$ |
| 142 | $^{n}Pr_2N-C_3H_6-NH-$ | $HO-C_2H_4-NH-$ | $HO-C_2H_4-NH-$ |
| 143 | $^{n}Pr_2N-C_2H_4-NH-$ | $(HO-C_2H_4)_2N-$ | $(HO-C_2H_4)_2N-$ |
| 144 | 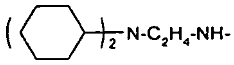 | Ec-NH- | 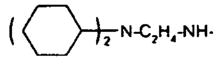 |
| 145 | 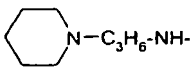 | 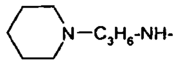 | 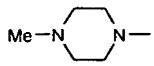 |
| 146 | 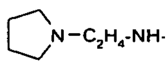 | 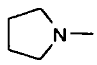 | 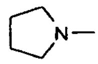 |
| 147 | 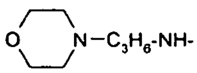 | 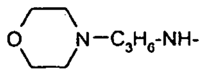 | 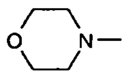 |
| 148 | $^{iso}Pr_2N-C_2H_4-NH-$ | $^{iso}Pr_2N-C_2H_4-NH-$ | $^{iso}Pr_2N-$ |
| 149 | $^{iso}Pr_2N-C_2H_4-NH-$ | $^{iso}Pr_2N-C_2H_4-NH-$ | $^{iso}PrNEt-$ |
| 150 | $Et_2N-C_2H_4-NH-$ | $Et_2N-C_2H_4-NH-$ | 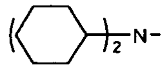 |
| Dabei sind Me = Methyl, Bu = Butyl, $^{tert}Bu$ = tertiär-Butyl, $^{iso}Pr$ = Isopropyl, $^{n}Pr$ = nonnal-Propyl, Ac = Acetyl | | | |

Sowie NOR-HALS-Verbindungen mit der Gruppe

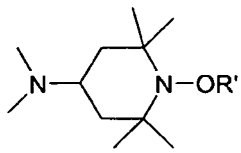

**(G-5)**

wie

151)

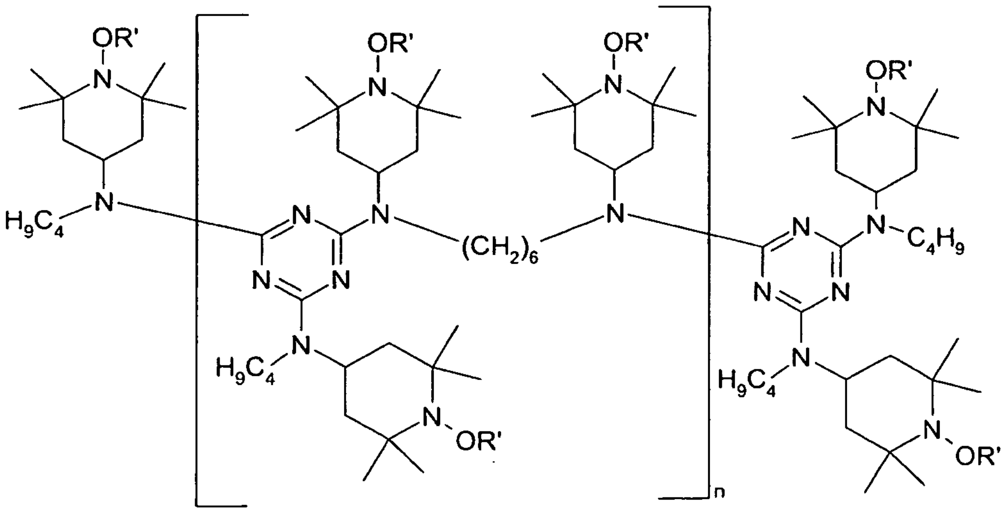

mit R' = $CH_3$, n-$C_4H_9$, oder c-$C_6H_{11}$

152)

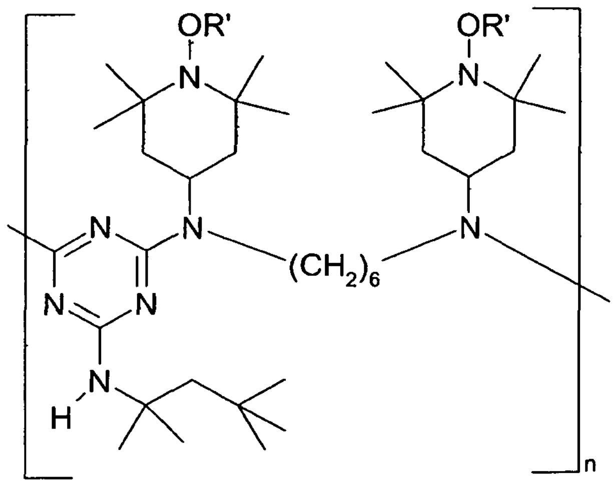

(n = 2-10)

mit R' = $CH_3$, n-$C_4H_9$, oder c-$C_6H_{11}$

153)

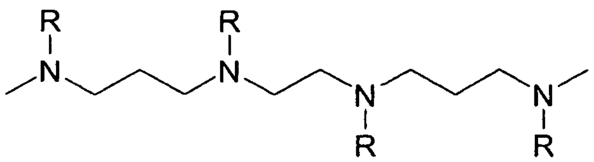

R =

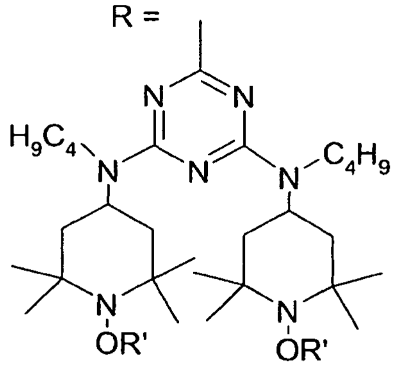

mit R' = $CH_3$, n-$C_4H_9$, oder c-$C_6H_{11}$

154)

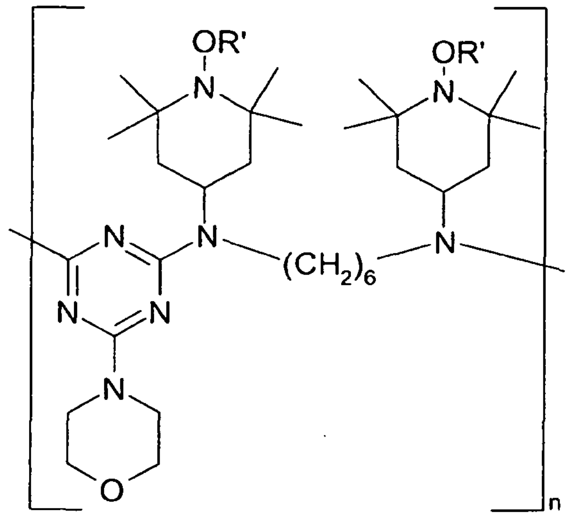

n= 2-10

mit R' = $CH_3$, n-$C_4H_9$, oder c-$C_6H_{11}$

155)

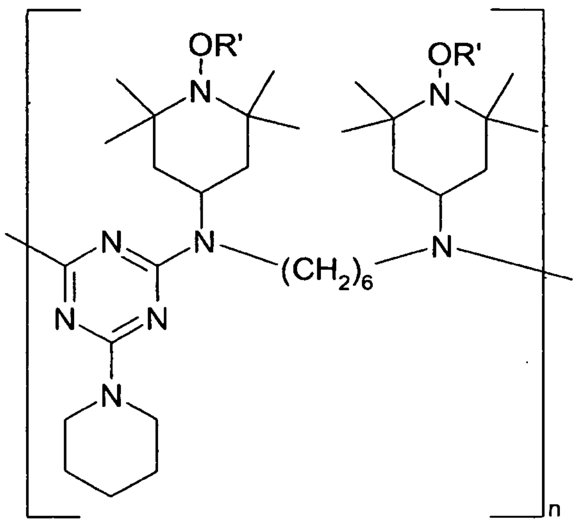

n= 2-10

mit R' = $CH_3$, n-$C_4H_9$, oder c-$C_6H_{11}$

156) TINUVIN® NOR 371 FF

157) TINUVIN® XT 833

158) TINUVIN® XT 850

Bevorzugt sind triazinbasierte NOR-HALS-Verbindungen.

Weiterhin bevorzugt sind die Verbindungen 1, 1a, 1b, 3, 4, 6, 9, 16, 41, 87, 88, 91, 92, 93, 103, 106, und 111.

Besonders bevorzugt sind 1, 1b, 2, 6, 9, 16, 41, 87, 88, 92, 93, 103, 111, 151, 152, 153, 154,155 und 156, 157,

158.

Ganz besonders bevorzugt sind 41, 87, 93, 103, 151, 152, 154, 156 und 157.

Die Verbindungen der Komponenten **(G-1)-(G-5)** werden zur Stabilisierung im chlorhaltigen Polymer zweckmäßig zu 0,01 bis 10, vorzugsweise zu 0,05 bis 5, insbesondere zu 0,1 bis 3 Teilen auf 100 Teile Polymer eingesetzt.

Anstelle eines einzelnen sterisch gehinderten Amins kann im Rahmen der vorliegenden Erfindung auch ein Gemisch verschiedener sterisch gehinderter Amine verwandt werden.

Die genannten Amine sind häufig bekannte Verbindungen; viele davon sind kommerziell erhältlich. Die Verbindungen können im Polymer zu 0,005 bis 5, bevorzugt zu 0,01 bis 2 und insbesondere zu 0,01 bis 1% vorhanden sein.

Ein weiterer bevorzugter Gegenstand der Erfindung sind Mischungen aus Glycidylverbindung **(D)** oder Cyanamid **(E)** - insbesondere Melamin- mit einer Stabilisator-Komponente **(A-1)**, mit mindestens einer weiteren Cokomponente **(B-1)**, **(B-2)**, **(C-1)** und **(C-2)** denen zusätzlich ein HCl-Scavenger, bevorzugt gecoatetes oder ungecoatetes Calciumhydroxid und wahlweise eine weitere Cokomponente **(G-1)** oder **(G-2)** oder eine Antistatikum-Komponente **(F)** zugesetzt wird. Alternativ sind auch Systeme bevorzugt, die **(A-1)** und Scavenger enthalten. Diese Systeme dienen vor allem der Grundstabilisierung. Diesen Abmischungen können weitere Additive zugesetzt werden.

Bevorzugt sind als weitere Komponentengruppen Polyole und Disaccharid-alkohole, β-Diketone, Thiophosphite und Thiophosphate, Mercaptocarbonsäureester, Hydroxycarboxylat-Metallsalze, Füllstoffe, Gleitmittel, Weich-macher, Pigmente, Antioxidantien, UV-Absorber, Lichtschutzmittel, optische Aufheller, Treibmittel, Antistatika, Biozide (Antimikrobika), Antifogging-Agents, Schlagzähmodifikatoren, Verarbeitungshilfen, Geliermittel, Flammschutzmittel, Metalldesaktivatoren und Kompatibilisatoren.

Es können außerdem noch weitere Additive wie Haftmittel, Kalandrierhilfen, Form(Trennmittel), Schmiermittel sowie Duftmittel und Colorants zugegen sein. Beispiele für solche zusätzlichen Komponenten sind weiter unten aufgeführt und erläutert (vgl. "Handbook of PVC-Formulating" von E. J. Wickson, John Wiley & Sons, New York 1993).

*Polyole und Zuckeralkohole*

Als Verbindungen dieses Typs kommen beispielsweise in Betracht: Pentaerythrit, Dipentaerythrit, Tripentaerythrit, Trimethylolethan, Bistrimethylolpropan, Inosit, Polyvinylalkohol, Bistrimethylolethan, Trimethylolpropan, Sorbit, Maltit, Isomaltit, Lycasin, Mannit, Lactose, Leucrose, Tris-(hydroxyethyl)isocyanurat, Palatinit, Tetramethylcyclohexanol, Tetramethylolcyclopentanol, Tetramethylolpyranol, Glycerin, Diglycerin, Polyglycerin, Thiodiglycerin oder 1-O-∝-D-Glycopyranosyl-D-mannit-dihydrat. Bevorzugt sind Disaccharidalkohole. Verwendung finden auch Polyolsirupe wie Sorbit-, Mannit- und Maltitsirup. Die Polyole können in einer Menge von beispielsweise 0,01 bis 20, zweckmäßig von 0,1 bis 20 und insbesondere von 0,1 bis 10 Gew.-Teilen, bezogen auf 100 Gew.-Teile PVC, angewandt werden.

*β-Diketone*

Verwendbare 1,3-Dicarbonylverbindungen sind lineare oder cyclische Dicarbonylverbindungen sein. Bevorzugt werden Dicarbonylverbindungen der Formel $R'_1CO\ CHR_2\text{-}COR'_3$ verwandt, worin $R'_1$ $C_1$-$C_{22}$-Alkyl, $C_5$-$C_{10}$-Hydroxyalkyl, $C_2$-$C_{18}$-Alkenyl, Phenyl, durch OH, $C_1$-$c_4$-Alkyl, $C_1$-$C_4$-Alkoxy oder Halogen substituiertes Phenyl, $C_7$-$C_{10}$-Phenylalkyl, $C_5$-$C_{12}$-Cycloalkyl, durch $C_1$-$C_4$-alkylsubstituiertes $C_5$-$C_{12}$-Cycloalkyl oder eine Gruppe -$R'_5$-S-$R'_6$ oder -$R'_5$-O-$R'_6$ bedeutet; $R'_2$ Wasserstoff, $C_1$-$C_8$-Alkyl, $C_2$-$C_{12}$-Alkenyl, Phenyl, $C_7$-$C_{12}$-Alkylphenyl, $C_7$-$C_{10}$-Phenylalkyl oder eine Gruppe -CO-$R'_4$ bedeutet; $R'_3$ eine der für $R'_1$ gegebenen Bedeutungen hat oder $C_1$-$C_{18}$-Alkoxy bedeutet, $R'_4$ $C_1$-$C_4$-Alkyl oder Phenyl bedeutet; $R'_5$ $C_1$-$C_{10}$-Alkylen bedeutet und $R'_6$ $C_1$-$C_{12}$-Alkyl, Phenyl, $C_7$-$C_{18}$-Alkylphenyl oder $C_7$-$C_{10}$-Phenylalkyl bedeutet.

Hierzu gehören die Hydroxylgruppen enthaltenden Diketone PS - EP 0.346.279 A1 und die Oxa- und Thiadiketone in PS - EP 0.307.358 A1 ebenso wie die auf Isocyansäure basierenden Ketoester in PS - US 4,339,383.

$R'_1$ und $R'_3$ als Alkyl können insbesondere $C_1$-$C_{18}$-Alkyl sein, z. B. Methyl, Ethyl, n-Propyl, Isopropyl, n-Butyl, tert Butyl, Pentyl, Hexyl, Heptyl, Octyl, Decyl, Dodecyl oder Octadecyl.

$R'_1$ und $R'_3$ als Hydroxyalkyl stellen insbesondere eine Gruppe $-(CH_2)_n$-OH dar, worin n 5, 6 oder 7 ist.

$R'_1$ und $R'_2$ als Alkenyl können beispielsweise Vinyl, Allyl, Methallyl, 1-Butenyl, 1-Hexenyl oder Oleyl bedeuten, vorzugsweise Allyl.

$R'_1$ und $R'_3$ als durch OH, Alkyl, Alkoxy oder Halogen substituiertes Phenyl können beispielsweise Tolyl, Xylyl, tert Butylphenyl, Methoxyphenyl, Ethoxyphenyl, Hydroxyphenyl, Chlorphenyl oder Dichlorphenyl sein.

$R'_1$ und $R'_3$ als Phenylalkyl sind insbesondere Benzyl. $R'_2$ und $R'_3$ als Cycloalkyl oder Alkylcycloalkyl sind insbesondere Cyclohexyl oder Methylcyclohexyl.

$R'_2$ als Alkyl kann insbesondere $C_1$-$C_4$-Alkyl sein. $R'_2$ als $C_2$-$C_{12}$-Alkenyl kann insbesondere Allyl sein. $R'_2$ als Alkylphenyl kann insbesondere Tolyl sein. $R'_2$ als Phenylalkyl kann insbesondere Benzyl sein. Vorzugsweise ist $R'_2$ Wasserstoff. $R'_3$ als Alkoxy kann z.B. Methoxy, Ethoxy, Butoxy, Hexyloxy, Octyloxy, Dodecyloxy, Tridecyloxy, Tetradecyloxy oder Octadecyloxy sein. $R'_5$ als $C_1$-$C_{10}$-Alkylen ist insbesondere $C_2$-$C_4$-Alkylen. $R'_6$ als Alkyl ist insbesondere

$C_4$-$C_{12}$-Alkyl, z. B. Butyl, Hexyl, Octyl, Decyl oder Dodecyl.

R'$_6$ als Alkylphenyl ist insbesondere Tolyl. R'$_6$ als Phenylalkyl ist insbesondere Benzyl.

Beispiele für 1,3-Dicarbonylverbindungen der vorstehenden allgemeinen Formel sowie deren Alkali-, Erdalkali- und Zinkchelate sind Acetylaceton, Butanoylaceton, Heptanoylaceton, Stearoylaceton, Palmitoylaceton, Lauroylaceton, 7-tert.-Nonylthio-heptandion-2,4, Benzoylaceton, Dibenzoylmethan, Lauroylbenzoylmethan, Palmitoylbenzoylmethan, Stearoylbenzoylmethan, Isooctylbenzoylmethan, 5-Hydroxycapronylbenzoylmethan, Tribenzoylmethan, Bis(4-methylbenzoyl)methan, Benzoyl-p-chlorbenzoylmethan, Bis(2-hydroxybenzoyl)methan, 4-Methoxybenzoylbenzoylmethan, Bis(4-methoxybenzoyl)methan, 1-Benzoyl-1-acetylnonan, Benzoyl-acetylphenylmethan, Stearoyl-4-methoxybenzoylmethan, Bis(4-tert-butylbenzoyl)methan, Benzoylformylmethan, Benzoyl-phenylacetylmethan, Bis-cyclohexanoyl-methan, Di-pivaloyl-methan, 2-Acetyl-cyclo-pentanon, 2-Benzoylcyclopentanon, Diacetessigsäuremethyl-, -ethyl- und -allylester, Benzoyl-, Propionyl- und Butyryl-acetessigsäuremethyl- und -ethylester, Triacetylmethan, Acetessigsäuremethyl-, - ethyl-, -hexyl-, -octyl-, -dodecyl- oder -octadecylester, Benzoyl-essigsäuremethyl-, -ethyl-, -butyl-, -2-ethylhexyl-, -dodecyl- oder -octadecylester, sowie Propionyl- und Butyrylessigsäure-$C_1$-$C_{18}$-alkylester. Stearoylessigsäureethyl-, -propyl-, -butyl-, -hexyl-oder -octylester sowie mehrkernige ß-Ketoester wie in PS - EP-A 0 433 230 beschrieben und Dehydracetsäure sowie deren Zink-, Magnesium- oder Alkalisalze. Bevorzugt sind Ca-, Mg- und Zn-Salze des Acetylacetons und der Dehydracetsäure.

Besonders bevorzugt sind 1,3-Diketoverbindungen der obigen Formel, worin R'$_1$ $C_1$-$C_{18}$-Alkyl, Phenyl, durch OH, Methyl oder Methoxy substituiertes Phenyl, $C_7$-$C_{10}$-Phenylalkyl oder Cyclohexyl ist, R'$_2$ Wasserstoff ist und R'$_3$ eine der für R'$_1$ gegebenen Bedeutungen hat. Ebenso gehören hierzu heterocyklische 2,4-Dione wie N-Phenyl-3-acetylpyrrolidin-2,4-dion. Weitere Vertreter diese Kategorie sind beschrieben in PS - EP 0.734.414 A1. Die 1,3-Diketoverbindungen können in einer Menge von beispielsweise 0,01 bis 10, zweckmäßig 0,01 bis 3 und insbesondere 0,01 bis 2 Gew.-Teilen, bezogen auf 100 Gew.-Teile PVC, angewandt werden.

*Thiophosphite und Thiophosphate*

Unter Thiophosphiten bzw.Thiophosphaten sind Verbindungen vom allgemeinen Typ $(RS)_3P$, $(RS)_3P=O$ bzw. $(RS)_3P=S$ zu verstehen, wie sie in den Druckschriften PS - DE 28.09.492 A1, EP 0.090.770 A1 und EP 0.573.394 A1 beschrieben werden. Beispiele für diese Verbindungen sind Trithiohexylphosphit, Trithiooctylphosphit, Trithiolaurylphosphit, Trithiobenzylphosphit, Trithiophosphorigesäure-tris-(carbo-i-octyloxy)-methylester. Trithiophosphorigsäure-tris-(carbo-trimethylcyclohexyloxy)-methylester, Trithiophosphor-säure-S,S,S-tris-(carbo-i-octyloxy)-methylester, Trithiophosphorsäure-S,S,S-tris-(carbo-2-ethylhexyloxy)-methylester, Trithiophosphorsäure-S,S,S-tris-1-(carbo-hexyloxy)-ethyl-ester, Trithiophosphorsäure-S,S,S-tris-1-(carbo-2-ethylhexyloxy)-ethylester, Trithiophosphorsäure-S,S,S-tris-2-(carbo-2-ethylhexyloxy)-ethylester.

*Mercaptocarbonsäure-Ester*

Beispiele für diese Verbindungen sind Ester der Thioglykolsäure, Thioäpfelsäure, Merkaptopropionsäure, der Mercaptobenzoesäuren bzw. der Thiomilchsäure, Mercaptoethylstearat und -oleat, wie sie in den Druckschriften PS - FR-A 2.459.816, EP 0.090.748 A1, FR-A 2.552.440, EP 0.365.483 A1 beschrieben sind. Die Mercaptocarbonsäureester umfassen auch Polyolester bzw. deren Partialester.

*Hydroxycarboxylatmetallsalze*

Weiterhin können Hydroxycarboxylatmetallsalze zugegen sein, wobei das Metall ein Alkali- oder Erdalkalimetall oder Aluminium sein kann. Bevorzugt sind Natrium, Kalium, Magnesium oder Calcium. Die Hydroxycarbonsäure kann sein Glykol-, Milch-, Äpfel-, Wein- oder Zitronensäure oder Salicyl- bzw. 4-Hydroxybenzoesäure oder auch Glycerin-, Glukon- und Zuckersäure (siehe z.B. PS - GB 1.694.873 sowie EP .303.564 A1).

Weiterhin können andere Schichtgitterverbindungen wie Li-Hydrotalcit eingesetzt werden. Nähere Ausführungen hierzu sind zu finden in PS - EP 0.930.332 A1. Die Synthese von L-CAM-Perchlorat ist beispielweise beschrieben in PS - EP 0.761.756 A1.

*Füllstoffe*

Es werden z.B. Calciumcarbonat, Dolomit, Wollastonit, Magnesiumoxid, Magnesiumhydroxid, Silikate, China-Clay, Talk, Glasfasern, Glaskugeln, Holzmehl, Glimmer, Metalloxide oder Metallhydroxide, Ruß, Graphit, Gesteinsmehl, Schwerspat, Glasfasern, Talk, Kaolin und Kreide verwandt. Bevorzugt ist Kreide (auch gecoated) (HANDBOOK OF PVC FORMULATING E. J. Wickson, John Wiley & Sons, 1993, SS. 393-449) und Verstärkungsmittel (TASCHENBUCH DER KUNSTSTOFFADDITIVE, R. Gächter & H. Müller, Carl Hanser, 1990, S. 549 - 615).

Die Füllstoffe können in einer Menge von vorzugsweise mindestens 1 Teil, beispielsweise 5 bis 200, zweckmäßig 5 bis 150 und insbesondere 5 bis 100 Gew.-Teilen, bezogen auf 100 Gew.-Teile PVC, eingesetzt werden.

*Gleitmittel*

Als Gleitmittel kommen beispielsweise in Betracht: Montanwachse, Fettsäureester, PE- und PP-Wachse, Amidwachse, Chlorparaffine, Glycerinester oder Erdalkaliseifen, ferner Fettketone sowie Kombinationen davon, wie in PS - EP 0.259.783 A1 aufgeführt. Bevorzugt ist Calciumstearat.

*Weichmacher*

Als organische Weichmacher kommen beispielsweise solche aus den folgenden Gruppen in Betracht:

(i) Phthalsäureester wie bevorzugt Di-2-ethylhexyl-, Di-iso-nonyl- und Di-iso-decylphthalat, die auch unter den gebräuchlichen Abkürzungen DOP (Dioctylphthalat, Di-2-ethylhexyl-phthalat), DINP (Diisononylphthalat), DIDP (Diisodecylphthalat) bekannt sind
(ii) Ester aliphatischer Dicarbonsäuren, insbesondere Ester von Adipin-, Azelain- und Sebazinsäure, bevorzugt Di-2-ethylhexyladipat und Di-iso-octyladipat
(iii) Trimellitsäureester, beispielsweise Tri-2-ethylhexyltrimellitat, Tri-iso-decyltrimellitat (Gemisch), Tri-iso-tridecyltrimellitat, Tri-iso-octyltrimellitat (Gemisch) sowie Tri-$C_6$-$C_8$-alkyl, Tri-$C_6$-$C_{10}$-alkyl-, Tri-$C_7$-$C_9$-alkyl- und Tri-$C_9$-$C_{11}$-alkyl-trimellitate; gebräuchliche Abkürzungen sind TOTM
(Trioctyltrimellitat, Tri-2-ethylhexyl-trimellitat), TIDTM (Triisodecyltrimellitat) und TITDTM (Triisotridecyltrimellitat)
(iv) Epoxyweichmacher; in der Hauptsache sind das epoxidierte ungesättigte Fettsäuren z.B. epoxidiertes Sojabohnenöl
(v) Polymerweichmacher: Die gebräuchlichsten Ausgangsmaterialien für ihre Herstellung sind Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglykol und Diethylenglykol, (s. ADMEX®-Typen der Velsicol Corp. und PX-811 der Asahi Denka)
(vi) Phosphorsäureester: Eine Definition dieser Ester ist im weiter vorn genannten " TASCHENBUCH DER KUNSTSTOFFADDITIVE " Kapitel 5.9.5, SS. 408 - 412, zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-diphenylphosphat, Kresyldi-phenylphosphat, Triphenylphosphat, Trikresylphosphat und Trixylenylphosphat; bevorzugt sind Tri-2-ethylhexyl-phosphat sowie Reofos® 50 und 95 (Ciba Spezialitätenchemie)
(vii) Chlorierte Kohlenwasserstoffe (Paraffine)
(viii) Kohlenwasserstoffe
(ix) Monoester, z.B. Butyloleat, Phenoxyethyloleat, Tetrahydrofurfuryloleat und Alkylsulfonsäureester
(x) Glykolester, z.B. Diglykolbenzoate
(xi) Citronensäureester, z.B. Tributylcitrat und Acetyltributylcitrat wie in PS - WO 02/05206 beschrieben
(xii) Perhydrophthal-, -isophthal- und -terephthalester sowie Perhydroglykol- und diglykolbenzoatester; bevorzugt ist Perhydro-diisononylphthalat (Hexamoll® DINCH - Hersteller BASF) wie in PS - DE 197.56.913 A1, DE 199.27.977 A1, DE 199.27.978 A1 und DE 199.27.979 A1 beschrieben.
(xiii) Rizinussöl basierte Weichmacher (Soft-N-Safe®, Hersteller Fa. DANISCO)
(xiv) Terpolymere Keton-Ethylen-Ester Elvaloy® KEE, (Elvaloy® 741, Elvaloy® 742, Hersteller Fa. DuPont)

Eine Definition dieser Weichmacher und Beispiele für solche sind in " TASCHENBUCH DER KUNSTSTOFFADDITIVE ", R. Gächter/H. Müller, Carl Hanser Verlag, 3. Aufl., 1989, Kapitel 5.9.6, Seiten 412-415, sowie in "PVC TECHNOLOGY ", W.V. Titow, 4th. Ed., Elsevier Publ., 1984, Seiten 165-170 angegeben. Es können auch Mischungen unterschiedlicher Weichmacher verwandt werden. Die Weichmacher können in einer Menge von beispielsweise 5 bis 50 Gew.-Teilen, zweckmäßig 10 bis 45 Gew.-Teilen, bezogen auf 100 Gew.-Teile PVC, angewandt werden. Hart- bzw. Halbhart-PVC enthält bevorzugt bis zu 20 %, besonders bevorzugt bis zu 5 % oder keinen Weichmacher.

*Pigmente*

Geeignete Stoffe sind dem Fachmann bekannt. Beispiele für anorganische Pigmente sind $TiO_2$, Pigmente auf Zirkonoxidbasis, $BaSO_4$, Zinkoxid (Zinkweiss) und Lithopone (Zinksulfid/Bariumsulfat), Ruß, Ruß-Titandioxid-Mischungen, Eisenoxidpigmente, $Sb_2O_3$, $(Ti,Ba,Sb)O_2$, $Cr_2O_3$, Spinelle wie Kobaltblau und Kobaltgrün, Cd(S,Se), Ultramarinblau. Organische Pigmente sind z.B. Azopigmente, Phthalocyaninpigmente, Chinacridonpigmente, Perylenpigmente, Diketo-pyrrolopyrrolpigmente und Anthrachinonpigmente. Bevorzugt ist $TiO_2$ auch in mikronisierter Form. Eine Definition

und weitere Beschreibungen finden sich im "HANDBOOK OF PVC FORMULATING", E. J.Wickson, John Wiley & Sons, New York, 1993.

*Antioxidantien*

Dazu zählen sterisch gehinderte Phenol, wie alkylierte Monophenole, z. B. 2,6-Di-tert-butyl-4-methylphenol, Alkylthiomethylphenole, z.B. 2,4-Di-octylthiomethyl-6-tert-butylphenol, alkylierte Hydrochinone, z. B. 2,6-Di-tert-butyl-4-methoxyphenol, hydroxylierte Thiodiphenylether, z. B. 2,2'-Thio-bis-(6-tert-butyl-4-methylphenol), Alkyliden-Bisphenole, z.B. 2,2'-Methylen-bis-(6-tert-butyl-4-methylphenol), Benzylverbindungen, z.B. 3,5,3',5'-Tetra-tert-butyl-4,4'-di-hydroxydibenzylether, hydroxybenzylierte Malonate, z.B. Dioctadecyl-2,2-bis-(3,5-di-tert-butyl-2-hydroxy-benzyl)-malonat, Hydroxybenzyl-Aromaten, z.B. 1,3,5-Tris-(3,5-di-tert-butyl-4-hydroxybenzyl)-2,4,6-trimethylbenzol, Triazinverbindungen, z.B. 2,4-Bis-octyl-mercapto-6-(3,5-di-tert-butyl-4-hydroxyanilino)1,3,5-triazin, Phosphonate und Phosphonite, z.B. Dimethyl-2,5-di-tert-butyl-4-hydroxybenzylphosphonat, Acylamino-phenole, z.B. 4-Hydroxy-laurinsäureanilid, Ester der beta-(3,5-Di-tert-butyl-4-hydroxyphenyl)-propionsäure, der beta-(5-tert-Butyl-4-hydroxy-3-methylphenyl)-propionsäure, der beta-(3,5-Dicyclohexyl-4-hydroxyphenyl)-propionsäure, Ester der 3,5-Di-tert-butyl-4-hydroxy-phenylessigsäure mit ein- oder mehrwertigen Alkoholen, Amide der beta-(3,5-Di-tert-butyl-4-hydroxyphenyl)-propionsäure, z.B. N,N'-Bis-(3,5-di-tert-butyl-4-hydroxyphenyl-propionyl)-hexamethylendiamin, Vitamin E (Tocopherol) und Abkömmlinge sowie D,L-Ascorbinsäure. Die Antioxidantien können in einer Menge von beispielsweise 0,01 bis 10 Gew.-Teilen, zweckmäßig 0,1 bis 10 Gew.-Teilen und insbesondere 0,1 bis 5 Gew.-Teilen, bezogen auf 100 Gew.-Teile PVC, angewandt werden.

*UV-Absorber und Lichtschutzmittel*

Beispiele dafür sind Benzotriazolderivate wie beispielsweise 2-(2'-Hydroxyphenyl)-benztriazole-1,2,3, z.B. 2-(2'-Hydroxy-5'-methyl-phenyl)-benztriazol, 2-(2'-Hydroxy-5'-methyl-phenyl)-5-methyl-benztriazol, 2-(2'-Hydroxy-3', 5'-di-tert.-butyl-phenyl)-benztri-azol, 2-(2'-Hydroxy-3', 5'-di-tert.-butyl-phenyl)-5-chlor-benztriazol. Weitere Beispiele sind 2-Hydroxybenzophenone, Ester von gegebenenfalls substituierten Benzoesäuren, z.B. 4-tert-Butyl-phenylsalicylat, Phenylsalicylat, Acrylate, Nickelver-bindungen, Oxalsäurediamide, z.B. 4,4'-Di-octyloxy-oxanilid, 2,2'-Di-octyloxy-5,5'-di-tert-butyl-oxanilid, 2-(2-Hydroxyphenyl)-1,3,5-triazine, z.B. 2,4,6-Tris(2-hydroxy-4-octyloxyphenyl)-1,3,5-triazin, 2-(2-Hydroxy-4-octyloxyphenyl)-4,6-bis-(2,4-dimethyl-phenyl)-1,3,5-triazin, sterisch gehinderte Amine auf Basis von Tetramethylpiperidin bzw. Tetramethylpiperazinon oder Tetramethylmorpholinon, z.B. Bis(2,2,6,6-tetramethyl-piperidin-4-yl)-sebazat, Bis(2,2,6,6-tetramethyl-piperidin-4-yl)-succinat sowie Benzoxazinone wie 1,4-Bis-benzoxazinonyl-benzol.

*Optische Aufheller*

Beispiele hierfür sind Bis-benzol(1,4)-oxazole, Phenylkumarine und Bis-styryl-biphenyle wie 4-Methyl-7-diethylaminokumarin, 3-Phenyl-7-(4-methyl-6-butoxybenzoxazol)-kumarin, 4,4'-Bis-(benzoxazol-2-yl)-stilben und 1,4-Bis(-benzoxazol-2-yl)-naphthalin. Bevorzugt sind Lösungen optischer Aufheller in einem Weichmacher, beispielweise DOP.

*Treibmittel*

Treibmittel sind z.B. organische Azo- und Hydrazoverbindungen, Tetrazole, Oxazine, Isatinsäureanhydrid, N-Methylisatinsäureanhydrid, sowie Soda und Natriumbicarbonat. Bevorzugt sind Azodicarbonamid und Natriumbicarbonat sowie deren Mischungen. Ganz besonders bevorzugt ist Isatinsäureanhydrid oder N-Methylisatinsäureanhydrid speziell in Weich-PVC oder PVC-Halbhart.

*Antistatika*

Antistatika werden eingeteilt in nichtionische(a), anionische(b), kationische(c) und amphotere(d) Klassen. Zu (a) gehören Fettsäureethoxylate, Fettsäureester, ethoxylierte Fettalkylamine, Fettsäurediethanolamide und ethoxylierte Phenole und Alkohole sowie Polyglykolmonofettsäureester. Zu (b) gehören Alkalifettalkansulfonate und Phosphorsäure-bis-fettalkoholester-alkalisalze. Zu (c) gehören quaternäre Fettalkylammoniumsalze und zu (d) gehören Fettalkylbetaine und Fettalkylimidazolinbetaine. Einzelne bevorzugte Verbindungen sind Laurinsäurediethanolamid, Myristyldiethanolamin, Na-octadecyl-sulfonat und Na-bis-octadecylphosphat. Das Vorhandensein von Komponente **(A-1)** gestattet in vielen Fällen aufgrund der Inhärenzeigenschaften eine Reduktion der Einsatzmenge von teuren Antistatika.

Definitionen und Beispiele für weitere Zusätze wie Schlagzähmodifikatoren und Verarbeitungshilfen, Geliermittel, Biozide, Metalldesaktivatoren, Flammschutzmittel, Antifogging-Agents sowie Kompatibilisatoren sind beschrieben in "HANDBUCH DER KUNSTSTOFFADDITIVE", R. Gächter/H. Müller, Carl Hanser Verlag, 3. Aufl., 1989, sowie 4. Aufl.

2001 und im "HANDBOOK OF POLYVINYL CHLORIDE FORMULATING" E. J. Wickson, J. Wiley & Sons, 1993, sowie in "PLASTICS ADDITIVES" G. Pritchard, Chapman & Hall, London, 1st Ed., 1998. Schlagzähmodifikatoren sind ferner ausführlich beschrieben in "IMPACT MODIFIERS FOR PVC", J. T. Lutz/D. L. Dunkelberger, John Wiley & Sons, 1992.

Weitere Stabilisatoren können sein 2-Phenylindol, 2-Pyrrolcarbonsäure(ester), 2,4-Diphenylpyrrol und 2-Alkyl-4-phenyl-pyrrol-3-carbonsäure-ester sowie 3-Amino-4-alkyl/phenyl-pyrrol-3-carbonester (siehe hierzu EP 1.299.466 A1)

Bevorzugt sind auch Stabilisatorsysteme, die zusätzlich ein substituiertes Indol oder einen Harnstoff bzw. ein Anilinderivat enthalten. Beispiele für geeignete Verbindungen sin 2-Phenyllaurylindol und N,N'-Diphenylthioharnstoff sowie Phenylharnstoff. Weitere Beispiele sind in PS - DE 101.07.329 A1 beschrieben. Siehe hierzu auch PS-EP 0.768.336 A1, EP 0.174.412, EP 0.967.245 A1, EP 0.967.209 A1, EP 0.967.208 A1, EP 0.962.491 A1, EP 1.044.968 A1, WO 02/072 684 und WO 02/048 249.

Eine besondere Bevorzugung liegt in der Kombination der Abmischungen **(A-1)/ (B-1)**, **(B-2), (C-1), (C-2)** + **SCV** oder **AS** (insbesondere **(D)**, **(E)** und **(F))** mit Phosphitestern, wobei das zusätzliche Phosphit Distearylpentaerythritdiphosphit, Triphenylphosphit, Trisnonylphenylphosphit, Phenyldidecylphosphit, Poly(dipropylenglykol)phenylphosphit, Tetraphenyl-dipropylenglykoldiphosphit, Tetraisodecyl(dipropylenglykol)diphosphit, Trisdipropylenglykolphosphit, Decyldiphenylphosphit, Trioctylphosphit, Trilaurylphosphit oder (Nonylphenyl$_{1,5}$-$C_{12}$/$C_{13}$-alkyl)$_{1,5}$-phosphit ist.

Bei den erfindungsgemäßen Zusammensetzungen sind die Verbindungen der allgemeinen Formeln **(B-1/B-2)** oder **(C-1/C-2)** + **SCV** oder **AS** zur Erzielung der Stabilisierung im chlorhaltigen Polymer zweckmäßig zu 0,01 bis 10, vorzugsweise zu 0,05 bis 5, bezogen auf 100 Gew.-Teile Polymer, zu verwenden. Der Innerkomplex **(A-1)** wird in einer Menge von beispielsweise 0,001 bis 10, zweckmäßig 0,01 bis 5, besonders bevorzugt 0,01 bis 3 Gew.-Teilen, bezogen auf 100 Gew.-Teile Polymer, angewandt werden. Bevorzugt sind Zusammensetzungen, bei denen das Verhältnis von der Verbindung der allgemeinen Formeln (**B**) und (**C**) zu Innerkomplex **(A-1)**, bezogen auf das Gewicht, im Bereich von 4:8:1 bis 6:30:1 liegt.

Vorzugsweise sind Zusammensetzungen mit 0,01 bis 10 Gew.-Teilen sterisch gehindertem Amin und/oder NOR-HALS-Verbindung **(G1-G5)** und/oder UV-Absorber und/oder Titandioxid enthalten.

Bevorzugte Zusammensetzungen enthalten bezogen auf 100 Gew.-Teile chlorhaltiges Polymer 0,01 - 10 Gew.-Teile der Verbindung **(B)** und 0,01 - 10 Gew.-Teile der Verbindung **(C)** auf 0,001 - 1 Gew.Teil des Innerkomplexes **(A-1)**.

Beispiele für die zu stabilisierenden chlorhaltigen Polymere sind Polymere des Vinylchlorids, Vinylidenchlorids, Vinylharze enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methacrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymere Ester der Acrylsäure und der alpha-substituierten Acrylsäure; Polymere von chlorierten Styrolen, zum Beispiel Dichlorstyrol; Chlorkautschuke; chlorierte Polymere des Ethylens; Polymere und nachchlorierte Polymere von Chlorbutadiens und deren Copolymere mit Vinylchlorid, chlorierte Natur- und Synthesekautschuke, sowie Mischungen der genannten Polymere unter sich oder mit anderen polymerisierbaren Verbindungen. Im Rahmen dieser Erfindung sind unter PVC auch Copolymerisate des Vinylchlorids mit polymerisierbaren Verbindungen wie Acrylnitril, Vinylacetat oder ABS zu verstehen, wobei es sich um Suspensions-, Masse- oder Emulsionspolymerisate handeln kann.

Bevorzugt ist ein PVC-Homopolymer, auch in Kombination mit Polyacrylaten oder Polymethacrylaten.

Ferner kommen auch Pfropfpolymerisate von PVC mit EVA, ABS und MBS in Betracht, ebenso Pfropfpolymerisate von PVC mit PMMA. Bevorzugte Substrate sind auch Mischungen der vorstehend genannten Homo- und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen, insbesondere aus der Gruppe ABS, NBR, NAR, SAN und EVA. Die verwandten Abkürzungen für die Copolymerisate sind dem Fachmann geläufig und bedeuten folgendes: ABS Acrylnitril-Butadien-Styrol; SAN Styrol-Acrylnitril; NBR Acrylnitril-Butadien; NAR Acrylnitril-Acrylat; EVA EthylenVinylacetat. Es kommen insbesondere auch Styrol-Acrylnitril-Copolymerisate auf AcrylatBasis (ASA) in Betracht. Bevorzugt als Komponente sind in diesem Zusammenhang Polymerzusammensetzungen, die als Komponenten (i) und (ii) eine Mischung aus 25-75 Gew.-% PVC und 75-25 Gew.-% der genannten Copolymerisate enthalten. Von besonderer Bedeutung sind als Komponente Zusammensetzungen aus (i) 100 Gewichtsteilen PVC und (ii) 0-300 Gewichtsteilen ABS und/oder mit SAN modifiziertes ABS und 0-80 Gewichtsteilen der Copolymeren NBR, NAR und/oder EVA, insbesondere jedoch EVA.

Weiterhin kommen zur Stabilisierung im Rahmen dieser Erfindung auch insbesondere Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat. Ein weiterer Einsatz

der erfindungsgemäßen Stabilisatorkombinationen beruht darin, dass dem Fertigartikel aus Hart- oder Weich-PVC antistatische Eigenschaften verliehen werden können. Auf diese Weise ist es möglich, den Einsatz teurer Antistatika zu reduzieren. Bevorzugt für diese Anwendung ist Weich-PVC oder PVC-Halbhart.

Ein weiterer Gegenstand der vorliegenden Erfindung ist eine Zusammensetzung enthaltend Weich-PVC und ein Stabilisatorsystem, das 1,4-Cyclohexandimethanoldiglycidylether enthält.

Die mitverwendbaren Verbindungen sowie die chlorhaltigen Polymeren sind dem Fachmann allgemein bekannt und werden detailliert beschrieben in "HANDBUCH DER KUNSTOFFADDITIVE", R. Gächter/H. Müller, Carl Hanser Verlag, 3. Aufl., 1989 und 4. Aufl. 2001, in PS - DE 197.41.778 A1 und EP 0.967.245 A1 auf welche hiermit ausdrücklich Bezug genommen wird.

Die erfindungsgemäße Stabilisierung eignet sich insbesondere für chlorhaltige Polymerzusammensetzungen, die nicht weichgemachte bzw. weichmacherfreie oder im Wesentlichen weichmacherfreie Zusammensetzungen darstellen, als auch für weichgemachte Zusammensetzungen. Besonderes bevorzugt sind Anwendungen in Hart-PVC bzw. PVC-Halbhart.

Die erfindungsgemäßen Zusammensetzungen eignen sich insbesondere, in Form von Hart-Rezepturen, für Hohlkörper (Flaschen), Verpackungsfolien (Tiefziehfolien), Blasfolien, "Crash Pad"-Folien (Automobile), Rohre, Schaumstoffe, Schwerprofile (Fensterrahmen), Lichtwandprofile, Bauprofile, Folien, Blisterpackungen (auch hergestellt nach dem Luvithermverfahren), Profile, Sidings, Fittings, Bürofolien, Margarinebecher, Pralinenverpackungen und Apparategehäuse, Isolatoren, Computergehäuse und Bestandteile von Haushaltsgeräten sowie für Elektronikanwendungen insbesondere im Halbleiterbereich. Ganz besonders geeignet sind diese zur Herstellung von Fensterprofilen mit hohem Weißgrad und Oberflächenglanz.

Bevorzugte andere Zusammensetzungen in Form von Halbhart- und Weich-Rezepturen sind für Drahtummantelungen, Kabelisolierungen, Dekorationsfolien, Dachfolien, Schaumstoffe, Agrarfolien, Schläuche, Dichtungsprofile, Fußböden, Tapeten, KFZ-Teile, Weich-Folien, Spritzgussteile (Blasformen,), Bürofolien und Folien für Traglufthallen geeignet. Beispiele für die Anwendung der erfindungsgemäßen Zusammensetzungen als Plastisole sind Spielwaren (Rotationsformen), Kunstleder, Fußböden, Textilbeschichtungen, Tapeten, Coil-Coatings und Unterbodenschutz für Kraftfahrzeuge, Beispiele für Sinter-PVC-Anwendungen der erfindungsgemäßen Zusammensetzungen sind Slush, Slush Mould und Coil-Coatings sowie in E-PVC für Folien hergestellt nach dem Luvithermverfahren. Näheres hierzu siehe " KUNSTSTOFFHANDBUCH PVC", Band 2/2, W. Becker/H. Braun, 2. Aufl. 1985, Carl Hanser Verlag, S. 1236-1277.

Die Komponenten **(A-1)** und **(B-1)/(B-2)** und/oder **(C-1)/(C-2)** können zusammen mit anderen Stabilisatoren oder Additiven bzw. PVC-Substrat vorgemischt werden, wobei bevorzugt als weitere Stabilisatoren Erdalkalihydroxide, Zeolithe, Hydrotalcite, Glycidylverbindungen oder Melamin zugegen sein können. Ganz besonderes bevorzugt werden hierbei sogenannte Heißmischer, die in einem Temperaturbereich von 80°C bis zu 120°C arbeiten. Hierbei wird eine optimale Homogenisierung erreicht. In Gegenwart von PVC-Pulver diffundieren hierbei Stabilisatoren und weitere Additive in das PVC-Korn. Eine Variante besteht darin, dass man den Mischvorgang in einer Gleitmittelschmelze, die Ca-Stearat oder Mg-Laurat bzw. -Stearat oder (Hydroxy)Stearinsäure enthalten kann, in Gegenwart eines Ca- bzw. Mg-Hydroxids, eines basischen Mg-, Ca- oder Al-Salzes bzw. von "overbased" Verbindungen des Magnesiums und Calciums oder eines Polyols oder eines Zeoliths durchführt, wobei Maltit, Lactit, Palatinit oder Zeolith-A, Ca-Hydroxid, ein basisches Ca- oder Mg-Salz bzw. eine "overbased" Verbindung von Magnesium oder Calcium bevorzugt wird.

Besonderes bevorzugt ist die Ausführungsform in welcher in dieser Schmelze die Komponenten **(B-1)/(B-2)** oder/und **(C-1)/(C-2)**+ **SCV** (insbesondere **(D), (E)** und Calciumhydroxyd oder Melamin) vorgelegt werden und die Komponente **(A-1)** zudosiert wird, wobei die Komponenten **(F)** und **(G)** in der Vormischung enthalten sein können.

Zweckmäßig kann die Einarbeitung der Stabilisatoren in einer anderen Variante nach folgenden Methoden erfolgen: als Emulsion oder Dispersion (eine Möglichkeit ist z.B. die Form einer pastösen Mischung, ein Vorteil der erfindungsgemäßen Systems besteht bei dieser Darreichungsform in der Stabilität der Paste); als Trockenmischung während des Vermischens von Zusatzkomponenten oder Polymermischungen; durch direktes Zugeben in die Verarbeitungsapparatur (z.B. Kalander, Mischer, Kneter, Extruder und dergleichen) oder als Lösung oder Schmelze bzw. als Flakes oder Pellets in staubfreier Form als One-Pack.

Besonderes bevorzugt werden Vormischungen der Komponenten **(A-1)** mit **(B-1)/(B-2)** oder **(C-1)/(C-2)** mit **SCV** (insbesondere **(D)**, **(E)** und Calciumhydroxyd oder Melamin) sowie wahlweise **(F)** oder/und **(G)** in kompaktierter Form, hergestellt in Granulierungsapparaturen, wobei ein nichtstaubendes, nichtklebendes, freifließendes Granulat erhalten wird, das sich beim Abmischen mit z.B. PVC und während des Verarbeitungsvorganges sehr leicht aufschließen läßt. Von großem Vorteil ist es, während der Konfektionierung (Kompaktier- oder Sprühvorgang) Bindemittel zuzusetzen, die bevorzugt aus Celluloseethern oder -estern (hauptsächlich Hydroxyethyl-, Hydroxypropyl- und Hydroxypropyl-methylcellulose bzw. Carboxymethylcellulose) bestehen. Alternativ kann auch Polyvinylalkohol oder Polyvinylpyrrolidon zugegeben werden.

Neben der Nassgranulierung ist die Trockengranulierung bevorzugt, die in Gegenwart von fettsaueren Mg- oder Ca-Salzen bzw. metallfreien Gleitmitteln auf Ester- bzw. Kohlenwasserstoffbasis zu einem nichtstaubenden freifließenden Zylindergranulat führen. In Gegenwart von Gleitmitteln, bevorzugt Esterwachsen, werden bei der Schmelzgranulierung Flakes, Schuppen oder Pastillen erhalten, die in PVC sehr leicht dispergierbar sind.

Das erfindungsgemäß stabilisierte Polymer, kann in an sich bekannter Weise hergestellt werden, wozu man unter Verwendung an sich bekannter Vorrichtungen, wie der oben genannten Verarbeitungsapparaturen, die erfindungsgemäße Stabilisatormischung und gegebenenfalls weitere Zusätze mit dem Polymer vermischt. Hierbei können die Stabilisatoren einzeln oder in Mischung zugegeben werden oder auch in Form sogenannter Masterbatches.

Das nach vorliegender Erfindung stabilisierte Polymer kann auf bekannte Weisen in die gewünschte Form gebracht werden. Solche Verfahren sind beispielsweise Mahlen, Kalandrieren, Extrudieren, Spritzgießen oder Spinnen, ferner Extrusions-Blasen. Das stabilisierte Polymer kann auch zu Schaumstoffen verarbeitet werden. Gegenstand der Erfindung ist somit auch ein Verfahren zur Stabilisierung chlorhaltiger Polymere durch Zusatz der erfindungsgemäßen Stabilisatormischung zu einem chlorhaltigen Polymer, wie auch Gegenstände, die PVC enthalten, das durch die erfindungsgemäßen Stabilisatormischungen stabilisiert ist.

Ein weiterer Gegenstand der Erfindung ist ein Verfahren zur Stabilisierung von chlorhaltigen Polymeren durch Zusatz eines erfindungsgemäßen Stabilisatorsystems zu einem chlorhaltigen Polymer, insbesondere zu Weich-PVC oder Pasten-PVC. Das Weich-PVC kann für die Herstellung von Fußböden, KFZ-Teilen, Wandtapeten, Weichfolien, Schläuchen, Spritzgussteilen oder bevorzugt für Drahtummantelungen (Kabel) geeignet sein. Alternativ kann das chlorhaltige Polymer ein Hart-PVC sein. Das chlorhaltige Polymer kann auch für die Herstellung von Folien (auch Luvitherm), PVC-Rohren oder Profilen, bevorzugt von Fensterprofilen dienen.

Der erfindungsgemäße Innerkomplex kann in Methanol, Ethanol, Propanol, Triethanolamin oder Wasser hergestellt werden, wobei das Lösungsmittel sowie eventuelles Reaktionswasser destillativ entfernt werden. Der Destillationsrückstand kann anschließend in einem unpolaren Solvens digeriert und durch Filtration abgetrennt werden. Alternativ kann die Synthese in einem Alkohol erfolgen und das Reaktionsprodukt dann durch Zugabe eines unpolaren Lösungsmittels ausgefällt werden.

## Beispiele

Diese erläutern die Erfindung näher. Teilangaben beziehen sich -wie auch in der übrigen Beschreibung- sofern nicht anders angegeben, auf das Gewicht.

## 1. Synthesebeispiele

### 1.1 Triethanolaminperchlorato-Innerkomplexe

#### 1.1.1 TEA-Perchlorato-Natrium (TEAP) - [(TEA)Na($OClO_3$)]

In einem 1L-Birnenkolben werden 35,2g Natriumperchlorat-Monohydrat (NaP $*$ $H_2O$, 0,25mol) und 37,3g Triethanolamin (TEA, 0,25mol) in 100ml Methanol gelöst. Das Reaktionsgemisch wird am Rotationsverdampfer bei 72°C (zum Schluß am Vakuum) zur Trockene eingeengt, wobei auch das Hydratwasser entfernt wird. Dabei fällt die wasserfreie Verbindung in kristalliner Form an. Das erhaltene Produkt wird i.Vak. getrocknet. Ausbeute 67g (quantitativ), Fp.: 131°C (scharf).

Es können auch wässrige NaP-Lösungen zum Einsatz kommen, wobei stöchiometrische TEA-Mengen, gelöst in Methanol, Ethanol, Isopropanol, THF, Aceton oder Wasser zugemischt werden. Eine andere Alternative besteht darin, NaP(.$H_2O$)-Suspensionen in organischen Solventien, wie Aceton, THF, Glykolethern (Dimethoxyethan), Isopropanol, Dioxan, DMF, DMA, Acetonitril etc. zu verwenden.

Die Aufarbeitung kann ebenfalls modifiziert werden, indem die TEA-Innerkomplexe aus o.g. Lösungen durch Zugabe von unpolareren Solventien, wie Essigestern, Kohlenwasserstoffen (aromatisch oder aliphatisch), chlorierten Kohlenwasserstoffen, Ethern (MTBE), in Form von büschelförmigen Kristallen ausgefällt werden können (s. Abb. 1). Diese Modifikationen können auch auf die nachfolgenden Beispiele übertragen werden.

### 1.2. Dihydropyridin-Verbindungen (DHPs)[2)]

#### 1.2.1 4-Dihydro-2,6-dimethylpyridin-3,5-dicarbonsäure-dimethylester (Mono-DHP)

In einem 1L-Rundkolben werden 73,5 g Methyl-β-aminocrotonat, (MAC; 0,64mol) und 30g Formalin (37%ig) (1,1mol) in 500ml Isopropanol gelöst und 1h bei 60°C gerührt. Anschließend wird 6h am Rückfluß erhitzt, wobei sich ein gelber Feststoff bildet. Die Suspension wird anschließend in Wasser eingerührt und der Niederschlag abfiltriert. Dieser wird mit Wasser, anschließend mit Aceton gewaschen und i.Vak. getrocknet.
Ausbeute: 57,4g (entspr. 80 % d.Th.), Fp.: 224-225°C

[2] In Anlehnung an PS-EP286887

**1.2.2 Bis-[1,4-dihydro-2,6-dimethylpyridin-3,5-dicarbonsäure]-1,4-butandioldiester (Bis-DHP)**

In einem 1L-Rundkolben werden 64,1g 1,4-Butandiol-bis-3-aminocrotonat (BAC; 0,25mol) mit 57,6g Methyl-β-aminocrotonat, (MAC; 0,5mol) und 75g Formalin (37%ig) in 500ml Isopropanol gelöst und 1h bei 60°C gerührt. Anschließend wird 6h am Rückfluß erhitzt, wobei sich ein gelber Feststoff bildet. Die Suspension wird anschließend in Wasser eingerührt und der Niederschlag abfiltriert. Dieser wird mit Wasser, anschließend mit Aceton gewaschen und i.Vak. getrocknet.
Ausbeute: 81g (entspr. 73 % d.Th.), Fp.: 192-194°C

**1.2.3 Bis-[1,4-dihydro-2,6-dimethylpyridin-3,5-dicarbonsäure]-thio-diethylenglykol-diester (Bis-Thio-DHP)**

In einem 1L-Rundkolben werden 72,1 g Thiodiglykol-bis-aminocrotonat (TAC; 0,25mol) mit 57,6g Methyl-β-aminocrotonat (MAC; 0,5mol) und 75g Formalin (37%ig) in 500ml Isopropanol gelöst und 1h bei 60°C gerührt. Anschließend wird 6h am Rückfluß erhitzt, wobei sich ein gelber Feststoff bildet. Die Suspension wird anschließend in Wasser eingerührt und der Niederschlag abfiltriert. Dieser wird mit Wasser, anschließend mit Aceton gewaschen und i.Vak. getrocknet.
Ausbeute: 64,5g (entspr. 56 % d.Th.), Fp.: 148-152 °C

**1.2.4 Poly-[1,4-dihydro-2,6-dimethylpyridin-3,5-dicarbonsäure]-1,4-butandiolester (Poly-DHP)**

In einem 1L-Rundkolben werden 76,4g 1,4-Butandiol-bis-3-aminocrotonat (BAC; 0,298mol) mit 4,9g Methyl-β-aminocrotonat (MAC; 0,0426mol) und 30g Formalin (37%ig) in 500ml Isopropanol gelöst und 1h bei 60°C gerührt. Anschließend wird 6h am Rückfluß erhitzt, wobei sich ein gelber Feststoff bildet. Die Suspension wird anschließend in Wasser eingerührt und der Niederschlag abfiltriert. Dieser wird mit Wasser, anschließend mit Aceton gewaschen und i.Vak. getrocknet.
Ausbeute: 63,9g (entspr. 80% d.Th.), Fp.: 218-220°C

**1.2.5 Poly-[1,4-dihydro-2,6-dimethylpyridin-3,5-dicarbonsäure-thiodiethylenglykol-ester] (Poly-Thio-DHP)**

In einem 1L-Rundkolben werden 86,5g Thiodiglykol-bis-aminocratonat (TAC; 0,30mol) mit 4,9g Methyl-β-aminocrotonat (MAC; 0,0426mol) und 30g Formalin (37%ig) in 500ml Isopropanol gelöst und 1h bei 60°C gerührt. Anschließend wird 6h am Rückfluß erhitzt, wobei sich ein gelber Feststoff bildet. Die Suspension wird anschließend in Wasser eingerührt und der Niederschlag abfiltriert. Dieser wird mit Wasser, anschließend mit Aceton gewaschen und i.Vak. getrocknet.
Ausbeute: 76,3g (entspr. 85% d.Th.), Fp.: 168-170°C

**2. Anwendungstechnische Beispiele**

**2.1 Untersuchungen zur Dehydrochlorierung (DHC)**

**2.1.1 Herstellung der Pulverproben**

In einem 1L-Birnenkolben werden 5 oder 10g (entspr. 100 phr) PVC[a] vorgelegt und gemäß den Tabellenbeispielen die Additive zugegeben. Die Mischungen bestehen aus 1,6 phr HCl-Fänger **(SCV)**, 0,4 phr Anfangsfarbenverbesserer **(AFV)** und den entsprechenden Mengen an TEAP-Booster (0,16 phr). Anschließend fügt man 50ml Methanol zu und engt diese Aufschlämmung am Rotationsverdampfer bei 72°C/Vakuum zur Trockene ein. Die erhaltenen Pulvermischungen werden im Achatmörser homogenisiert. (Die Methode wird bevorzugt bei einem oder zwei flüssigen Additiven. Sind sämtliche Additive fest, kann alleinige Homogenisierung im Achatmörser erfolgen und auf das Verfahren der MeOH-Aufschlämmung verzichtet werden.)

**2.1.2 Durchführung der Dehydrochlorierungsmessungen**

Die DHC ist ein Maß für die HCl-Abspaltung von PVC, die bei thermischer Belastung stattfindet. Die abgespaltene Salzsäure wird mit Stickstoffgas in eine Vorlage mit dest. Wasser gespült und dort der Anstieg der Leitfähigkeit in Mikrosiemens pro Zentimeter (μS/cm) gemessen. Als Kennzahlen dienen die zugehörigen Minutenwerte (min). Je länger das Zeitintervall zur Erreichung einer bestimmten Leitfähigkeit, desto thermostabiler ist die PVC-Probe.

Gerätetyp: PVC Thermomat 763 (Fa. Metrohm)

Die Messungen erfolgen nach DN 53381 Teil 1, Verfahren B: Leitfähigkeitsmessung.

| Parameter: | Probeneinwaage: | 500 ± 5mg |
|---|---|---|
| | Temperatur: | 180°C |
| | Flow: | 71/h (Stickstoff 5.0) |
| | Absorptionsvol.: | 60ml (VE-Wasser) |
| | Auswertung: | $t_{10}$, $t_{50}$ und $t_{200}$ (Leitfähigkeit von 10, 50 und 200 µS/cm - Angabe in Minutenwerten) |

Messung: Nach Einwaage der Pulverproben in die Reaktionsgefäße werden die Meßgefäße mit VE-Wasser gefüllt und mit Leitfähigkeitselektroden bestückt. Nach Erreichen der Meßtemperatur (180°C) werden die verschlossenen Reaktionsgefäße in den Heizblock überführt, über die entsprechenden Schlauchverbindungen mit den Meßgefäßen gekoppelt und die Messung gestartet. Als Stabilitätskriterien dienen, die $t_{10}$-, $t_{50}$- und $t_{200}$-Werte.

### 2.1.3 Beispiele

#### 2.1.3.1 Wirkung von (A-1) als singulärer PVC-Stabilisator (Tab.1)

Versuch 1: 100 phr PVC[3)] ohne Stabilisator (Booster)
Versuch 2: 100 phr PVC[3)] + Booster

[3)] Vinnolit S 3160, K-Wert 60

Tab. 1

| Versuch Nr. | $t_{10}$ [min] | $t_{50}$ [min] | $t_{200}$ [min] | TEAP[4)] [phr] |
|---|---|---|---|---|
| 1 | 6 | 19 | 44 | - |
| 2 | 30 | 59 | 154 | 0,16 |
| [4)] Triethanolaminperchlorato-Natrium (Synthesebeispiel 1.1.1) | | | | |

Es ist ersichtlich, dass die erfindungsgemäße Formulierung (Versuch 2) im Vergleich zum unstabilisierten PVC einen drastischen Anstieg in der Thermostabilisierung aufweist ($t_{10}$ = 400%, $t_{50}$ = 210% und $t_{200}$ = 250 %).

#### 2.1.3.2 Wirkung von (A-1) als PVC-Stabilisator (in Gegenwart von HCl-Fänger-SCV)

##### 2.1.3.2.1 Anorganische (mineralische) Verbindungen als SCV (Tab.2)

**Tab.2**

| Versuch Nr. | SCV | $t_{10}$ [min] | $t_{50}$ [min] | $t_{200}$ [min] | TEAP [phr] |
|---|---|---|---|---|---|
| 3 | CaH (u)[5)] | 130 | 201 | 398 | 0,16 |
| 4 | CaH (c)[6)] | 168 | 252 | 444 | 0,16 |
| 5 | CaH (u)[5)] | 37 | 58 | 124 | - |
| 6 | CaH (c)[6)] | 34 | 46 | 75 | - |
| | | | | | |
| Die Ergebnisse zeigen, dass die Wirkung von ungecoatetem und gecoatetem Calciumhydroxid durch Zusatz katalytischer TEAP-Mengen in Hinblick auf Anfangs-, Mittel- und Endstabilität in hocheffizienter Weise verbessert wird. | | | | | |
| | | | | | |

(fortgesetzt)

| Versuch Nr. | SCV | $t_{10}$ [min] | $t_{50}$ [min] | $t_{200}$ [min] | TEAP [phr] |
|---|---|---|---|---|---|
| 7 | Hytal [7)] | 89 | 125 | 235 | 0,16 |
| 8 | Hytal [7)] | 43 | 56 | 88 | - |
| 9 | Sorbacid 939 [8)] | 76 | 116 | 238 | 0,16 |
| 10 | Sorbacid 911 [8)] | 114 | 146 | 251 | 0,16 |
| 11 | Sorbacid 939 [8)] | 29 | 43 | 88 | - |
| 12 | Sorbacid 911 [8)] | 55 | 66 | 94 | - |
| 13 | Pural MG63HT[9)] | 128 | 170 | 331 | 0,16 |
| 14 | Pural MG63HT[9)] | 55 | 65 | 93 | - |
| 14a | DASC 265[9a)] | 100 | 166 | 343 | 0,16 |
| 14b | DASC 265[9a)] | 34 | 52 | 100 | - |
| | | | | | |
| Es zeigt sich, dass im Handel erhältliche Mg-Al-Hydroxocarbonate (Hydrotalcite, LDH's, anionic clays) in ihrer Performance durch TEAP-Zusatz stark verbessert werden. | | | | | |
| | | | | | |
| 15 | NaZA [10)] | 80 | 112 | 228 | 0,16 |
| 16 | NaZA [10)] | 26 | 38 | 73 | - |
| | | | | | |
| Die Befunde lassen erkennen, dass kommerziell erhältlicher Natrium-Zeolith A bei TEAP-Zusatz in seiner Thermostabilisatorwirkung stark verbessert wird. | | | | | |
| | | | | | |
| 17 | MgH [11)] | 43 | 113 | 163 | 0,16 |
| 18 | MgH [11)] | 13 | 22 | 46 | - |
| 19 | CaAcac [12)] | 111 | 170 | 326 | 0,16 |
| 20 | CaAcac [12)] | 50 | 69 | 118 | - |
| 21 | MgAcac [13)] | 92 | 112 | 166 | 0,16 |
| 22 | MgAcac [13)] | 79 | 87 | 115 | - |
| | | | | | |
| Auch hier ist durch TEAP-Zugabe eindeutig ein starker Anstieg der Thermostabilität zu erzielen. | | | | | |
| [5)] Calciumhydroxid (ungecoatet)<br>[6)] Calciumhydroxid (gecoatet mit 7 % Edenor L2SMGS -Fa. Cognis)<br>[7)] Hydrotalcit (ALDRICH)<br>[8)] Hydrotalcit (Fa. Südchemie)<br>[9)] Hydrotalcit (Fa. Sasol)<br>[9a)] Dihydroxy-Aluminium-Sodium-Carbonate Type A 265 (Fa. BK Giulini)<br>[10)] Na-Zeolith A (Molekularsieb, 4A, Pulver <5Mikron, aktiviert - ALDRJCH)<br>[11)] Magnesiumhydroxid (FLUKA)<br>[12)] Calcium-Acetylacetonat ( Fa. MCC)<br>[13)] Magnesium-Acetylacetonat (ALDRICH) | | | | | |

**2.1.3.2.1.1 Vergleich mit Stand der Technik (SdT[14)]) - Tab.3**

[14)] allgemeiner Stand der Technik

Tab.3

| Versuch Nr. | SCV | $t_{10}$ [min] | $t_{50}$ [min] | $t_{200}$ [min] | NaP[15] [phr] |
|---|---|---|---|---|---|
| 23 | CaH(u) [5] | 73 | 126 | 267 | 0,08 |
| 24 | Hytal[7] | 82 | 109 | 182 | 0,08 |
| 25 | NaZA [10] | 48 | 75 | 156 | 0,08 |
| [15] Natriumperchlorat-Monohydrat (MERCK) | | | | | |

Ein Vergleich des Versuchs 23 (CaH mit Natriumperchlorat) mit Versuch 3 (CaH mit TEAP, molgleiche Basis NaP) zeigt, dass bei Verwendung von TEAP im $t_{10}$-Wert ein 78%iger, im $t_{50}$-Wert ein 60%iger und im $t_{200}$-Wert ein 49%iger Anstieg zu verzeichnen ist. Ferner zeigt der Vergleich der Versuche 24 und 25 (Hytal+NaP bzw. NaZA+NaP) mit en Versuchen 7 und 15 (Hytal+TEAP bzw. NaZA+TEAP) eine deutliche Verbesserung der Thermostabilität bei Verwendung von TEAP als Booster.

**2.1.3.2.1.2 SdT-1[16]**

In PS - DE 10124734A1 (SdT-1) ist beschrieben, wäßrige Natriumperchlorat-Lösungen in Gegenwart von Calciumhydroxid auf Calciumoxid aufzutragen, wobei das Lösungswasser gemäß:

$$CaO + H_2O \rightarrow Ca(OH)_2$$

abgebunden wird; dadurch resultiert ein Feststoff, der als Komponenten $NaClO_4$ (bzw. $NaClO_4 * H_2O$) und $Ca(OH)_2$ enthält.

[16] spezieller Stand der Technik 1

Diese Substanzen werden als PVC-Thermo-(Co-)Stabilisatoren eingesetzt. In einer Serie wurden die, nach angegebenen Verfahren erhaltenen Produkte mit CaH/TEAP (1,6/0,16 phr) mengengleich, CaH-mengengleich, $ClO_4$-(mol)gleich gegenübergestellt, wobei folgende Resultate erhalten wurden (Tab.4).

Tab.4

| Versuch Nr. | Stabilisatorsystem Substanz / (Menge) [phr] | Σ Stab. [phr] | $t_{10}$ [min] | $t_{50}$ [min ] | $t_{200}$ [min] | Bemerkung |
|---|---|---|---|---|---|---|
| 26 | TEAP (Referenz)<br>CaH (1,6)<br>TEAP (0,16)[17] | 1,760 | 146 | 220 | 403 | erfindungsgemäß, gelb verfärbt |
| 27 | VP-1[18] (CaH-gleich)<br>CaH (1,6)<br>NaP (0,16) | 1,760 | 85 | 143 | 279 | gemäß SDT-1, orange verfärbt |
| 28 | VP-1 [18] (NaP-gleich)<br>CaH (0,648)<br>NaP (0,072) | 0,72 | 39 | 70 | 164 | gemäß SDT-1, orange verfärbt |
| 29 | CaH/NaP (extern)<br>CaH (1,6)<br>NaP (0,072) | 1,672 | 91 | 166 | 344 | nicht patentgemäß, gelb verfärbt |
| 30 | VP-2 [18] (CaH-/NaP-gleich)<br>CaH (1,6)<br>NaP (0,072) | 1,672 | 85 | 149 | 300 | gemäß SDT-1, orange verfärbt |
| [17] 0,16 phr TEAP entsprechen 0,072 phr $NaClO_4$ x $H_2O$ ($ClO_4$-gleich)<br>[18] VP-1,2 = Versuchsprodukte gemäß SdT PS DE 10124734A1 (Beispiel 3) | | | | | | |

Die PS-gemäßen (SdT-1)-DHC-Werte sind über mehrere Versuche gemittelt. Der Vergleich von Versuch 26

mit Versuch 27 zeigt bei gleicher Gesamtstabilisatormenge ($\Sigma$ Stab.) (1,76phr) und CaH-Gleichheit (1,6 phr) ein Anstieg der $t_{10,\ 50,\ 200}$-Werte um 72%, 54% und 44%. Hinzu kommt, dass der NaP-Anteil bei Versuch 27 um den Faktor 2 erhöht ist, was den anteiligen Kostenfaktor stark erhöht. Ein Vergleich der PS-gemäßen SdT-1 internen Mischungen mit nicht PS-gemäßen externen Mischungen (Versuch 27, 29) zeigt bei ersterer (PS-gemäß) eine schlechtere Performance. Eine Gegenüberstellung belegt, dass bei CaH- und NaP-Gleichheit (Versuch 26 gegenüber dem PS-gemäßen Versuch 30) eine Wirkungsverbesserung in Bezug auf die $t_{10,\ 50,\ 200}$-Werte um 72%, 48% und 34% erfolgt. Ferner zeigen die PVC-Pulverproben nach Versuchende bei den PS-gemäßen (SdT-1) Versuchen (27, 28, 29) eine deutlich dunklere Verfärbung, obwohl die thermische Belastung (180°C) der SdT-Proben mit 279, 164 und 300 min wesentlich geringer war als bei dem erfindungsgemäßen Versuch 26, der über einen Zeitraum von 403 belastet wurde. Ebenso weist der nicht patentgemäße Versuch 29 eine deutlich hellere Gelbverfärbung nach längerer thermischer Belastung auf.

**2.1.3.2.1.3 SdT-2[19)]**

In PS - DE 10160662A1 und DE 10214152A1 (SdT-2) werden Onium-(Ammonium)-Perchloratsalze als Hitze-(Co-)Stabilisatoren beansprucht. In einer Serie wurden die nächstliegenden Verbindungen (SdT-2) mit erfindungsgemäßem CaH/TEAP-System einsatzmengengleich (CaH+Booster= 1,6+0,16 phr) verglichen (Tab.5 und 6)

Tab.5

| Substanz | Name | Synonym /Kürzel | $ClO_4$-Gehalt [$\%_{bcr.}$] | M.W. [g/mol] | F.p. [°C] |
|---|---|---|---|---|---|
| 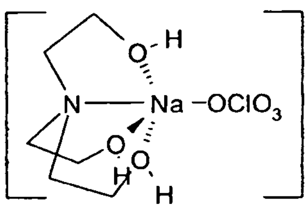 | Triethanolaminperchlorato-Natrium | TEAP | 36,6 | 271,7 | 132 |
| 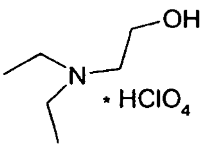 | Monohydroxyethyl-diethylammoniumperchlorat | MEHAP | 45,7 | 217,7 | <RT |
| 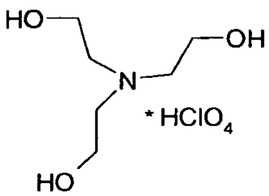 | Trihydroxyethylammonium perchlorat | TREHAP | 39,9 | 249,7 | 40 |
| 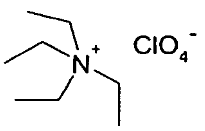 | Tetraethylammonium perchlorat | TEHAP | 43,3 | 229,8 | >300 |

Tab.6

| Versuch Nr. | Substanz (Tab.5) | $t_{10}$ [min] | $t_{50}$ [min] | $t_{200}$ [min] | Bemerkung |
|---|---|---|---|---|---|
| 31 | TEAP (Referenz) | 152 | 228 | 420 | kein Aminperchlorat gelb verfärbt |
| 32 | MEHAP | 108 | 167 | 327 | Aminperchlorat gelborange verfärbt |
| 33 | TREHAP | 64 | 106 | 206 | Aminperchlorat orangebraun verfärbt |
| 34 | TEHAP | 38 | 71 | 152 | kein Aminperchlorat hellbraun verfärbt |

[19] spezieller Stand der Technik 2

Die Gütefaktoren (Performance-Verbesserung) betragen für das erfindungsgemäße System (Versuch 31) im Vergleich zu Versuch 32 41%, 37% und 28%; im Vergleich zu Versuch 33 38%, 115% und 104% und im Vergleich zu Versuch 34 (alle SdT-2) 300%, 221% und 176% bzgl. der $t_{10, 50, 200}$-Werte. Hiermit ist eine eindeutige Überlegenheit gegenüber SdT-2 belegt. Weiterhin sind die Proben gemäß SdT-2 nach der thermischen Belastung stärker verfärbt als die erfindungsgemäßen Proben, obwohl die Belastungszeiten mit 327, 206 und 152 min deutlich geringer sind als mit 420 min bei Versuch 31.

Auffällig ist der mäßige Befund von 33 (TREHAP), das formal dem TEAP ähnelt (Austausch von H gegen Na). Die Performance-Verbesserung hierzu ist oben angegeben. Versuch 34 (TEHAP) fällt in der Wirksamkeit noch weiter ab, was wahrscheinlich daran liegt, dass es sich nicht um ein Aminperchlorat, sondern um ein (echtes) (Amm)oniumperchlorat handelt und die Oniumsalz-Struktur einen gegenläufigen (destabilisierenden) Effekt ausübt.

Die Aminperchlorate 31 und 32 sind als NH-Perchlorate in der Handhabung kritisch, da schlagempfindlich und explosiv. Ebenso ist zu ihrer Herstellung Perchlorsäure zwingend notwendig, die als Gefahrstoff mit dem Symbol für ätzend und dem R-Satz 5-8-35 kennzeichnungspflichtig ist.

### 2.1.3.2.2 Organische Verbindungen als SCV (Tab.7 und 8)

Tab.7

| Versuch Nr. | SCV Cyanamide | $t_{10}$ [min] | $t_{50}$ [min] | $t_{200}$ [min] | TEAP [phr] |
|---|---|---|---|---|---|
| 35 | Didi-f[20] | 59 | 64 | 75 | - |
| 36 | Didi-n[21] | 56 | 61 | 70 | - |
| 37 | Didi-f[20] | 82 | 99 | 132 | 0,16 |
| | | | | | |
| Es ist ersichtlich, dass TEAP-Zusatz zu Cyanguanidin eine deutliche Verbesserung der Thermostabilität ergibt ($t_{10}$ = 39%, $t_{50}$ = 55%, $t_{200}$ = 76%) | | | | | |
| | | | | | |
| 38 | Mel-n[22] | 61 | 65 | 79 | - |
| 39 | Mel-f[23] | 49 | 53 | 65 | - |
| 40 | Mel-f[23] | 145 | 175 | 265 | 0,16 |
| 41 | ACEGA[24] | 31 | 35 | 44 | - |
| 42 | ACEGA[24] | 113 | 146 | 240 | 0,16 |

[20] Dyhard 100SH, Cyanguanidin (Dicyandiamid), feinkörnig (Fa, Degussa)
[21] Cyanguanidin(Dicyandiamid), normalkörnig (Fa. Degussa)
[22] Melamin - normalkörnig (ALDRICH)
[23] Melamin 003 feinkörniges Produkt (Fa. DSM)
[24] Acetoguanamin (ALDRICH)

Es zeigt sich, dass die erfindungsgemäße Kombination von Aminotriazin/TEAP (Versuch 40) gegenüber der nicht erfindungsgemäßen Formulierung (Versuch 39) einen relevanten Verbesserungsschub in der Thermostabilisierung ergibt ($t_{10}$ = 196%, $t_{50}$ = 230%, $t_{200}$ = 308%). Ferner ist ersichtlich, dass die Kombination von Acetoguanamin/TEAP (Versuch 42) im Vergleich zu Versuch 41 (ohne TEAP) drastisch thermostabiler ist ($t_{10}$ = 265%, $t_{50}$ = 317%, $t_{200}$ = 445%).

Tab.8

| Versuch Nr. | SCV Epoxide | $t_{10}$ [min] | $t_{50}$ [min] | $t_{200}$ [min] | NaP [phr] | TEAP [phr] |
|---|---|---|---|---|---|---|
| 43 | BADGE [25] | 18 | 34 | 74 | - | - |
| 44 | BADGE [25] | 42 | 84 | 234 | - | 0,16 |
| 45 | BADGE [25] | 19 | 40 | 110 | 0,08 | - |

(fortgesetzt)

| Versuch Nr. | SCV Epoxide | $t_{10}$ [min] | $t_{50}$ [min] | $t_{200}$ [min] | NaP [phr] | TEAP [phr] |
|---|---|---|---|---|---|---|
| 46 | BFDGE [26)] | 16 | 30 | 68 | - | - |
| 47 | BFDGE [26)] | 39 | 77 | 205 | - | 0,16 |
| 48 | BFDGE [26)] | 22 | 44 | 115 | 0,08 | - |
| 49 | Epikote 828[27)] | 14 | 28 | 67 | - | - |
| 50 | Epikote 828 [27)] | 68 | 124 | 276 | - | 0,16 |
| 51 | Epikote 828 [27)] | 28 | 58 | 154 | 0,08 | - |
| 52 | Epikote 1002 [28)] | 14 | 28 | 72 | - | - |
| 53 | Epikote 1002 [28)] | 36 | 62 | 150 | - | 0,16 |
| 54 | Epikote 1002 [28)] | 25 | 74 | 117 | 0,08 | - |
| 55 | Hexdge [29)] | 35 | 52 | 92 | - | - |
| 56 | Hexdge [29)] | 122 | 150 | 270 | - | 0,16 |
| 57 | Hexdge [29)] | 46 | 66 | 133 | 0,08 | - |
| 57a | c-Hexdge[29a] | 128 | 153 | 246 | - | 0,16 |
| 57b | c-Hexdge[29a] | 25 | 43 | 101 | 0,08 | - |
| 58 | Glydi [30)] | 40 | 57 | 89 | - | - |
| 59 | Glydi [30)] | 103 | 130 | 201 | - | 0,16 |
| 60 | Glydi [30)] | 37 | 61 | 127 | 0,08 | - |
| 61 | Glytri [31)] | 25 | 44 | 82 | - | - |
| 62 | Glytri [31)] | 70 | 100 | 186 | - | 0,16 |
| 63 | Glytri [31)] | 37 | 60 | 128 | 0,08 | - |
| 64 | TEPC [32)] | 64 | 100 | 156 | - | - |
| 65 | TEPC [32)] | 185 | 240 | 374 | - | 0,16 |
| 66 | TEPC [32)] | 119 | 173 | 260 | 0,08 | - |
| 67 | LankL [33)] [3,2 phr] | 17 | 37 | 93 | - | - |
| 68 | LankL [33)] [3,2 phr] | 34 | 56 | 146 | - | 0,16 |
| 69 | LankL [33)] [3,2 phr] | 24 | 44 | 116 | 0,08 | - |
| 70 | Lank07 [34)] [3,2 phr] | 16 | 31 | 71 | - | - |
| 71 | Lank07 [34)] [3,2phr] | 31 | 56 | 151 | - | 0,16 |
| 72 | Lank07 [34)] [3,2 phr] | 23 | 46 | 127 | 0,08 | - |
| 73 | Card [35)] [3,2 phr] | 25 | 39 | 83 | - | - |
| 74 | Card [35)] [3,2 phr] | 41 | 72 | 197 | - | 0,16 |

(fortgesetzt)

| Versuch Nr. | SCV Epoxide | $t_{10}$ [min] | $t_{50}$ [min] | $t_{200}$ [min] | NaP [phr] | TEAP [phr] |
|---|---|---|---|---|---|---|
| 75 | Card [35] [3,2 phr] | 38 | 68 | 179 | 0,08 | - |

[25] Bisphenol A-Diglycidylether (ALDRICH)
[26] Bisphenol F-Diglycidylether (ALDRICH)
[27] Bisphenol A-Diglycidylether - flüssig (Fa. Resolution)
[28] Bisphenol A-Diglycidylether - fest (Fa. Resolution)
[29] Hexandiol-1,6-diglycidylether (Grilonit RV 1812, Fa. EMS - Primid)
[29a] 1,4-Cyclohexandimethanol-diglycidylether(POLYPOX R11, Fa. UPPC-AG)
[30] Glycerindiglycidylether (ALDRICH)
[31] Glycerintriglycidylether (Glycidether 100, ROTH)
[32] Tris-(2,3-epoxypropyl)-isocyanurat (ALDRICH) - Triglycidylisocyanurat
[33] Lankroflex L ( Fa.Akzo Nobel) - epoxidiertes Leinöl
[34] Lankroflex 2307 (Fa. Akzo Nobel) - ESBO
[35] Cardura E10P (Fa.Resolution) - Glycidylneodecanoat

Es zeigt sich, dass sämtliche Epoxyverbindungen bei TEAP-Zugabe eine wesentliche Verbesserung der $t_{10}$-Werte von 144% (Versuch 46 vs. 47) bis 189% (Versuch 64 vs. 65), der $t_{50}$-Werte von 104% (Versuch 55 vs. 56) bis 343% (Versuch 49 vs. 50) und der $t_{200}$-Werte von 108% (Versuch 52 vs. 53) bis 312% (Versuch 49 vs. 50) erbringen.

**2.1.3.2.3 Metallseifen als SCV (Tab. 9-A)**

Tab.9-A

| Versuch Nr. | SCV Metallseifen | $t_{10}$ [min] | $t_{50}$ [min] | $t_{200}$ [min] | TEAP [phr] |
|---|---|---|---|---|---|
| 76-A | AldiSt [36] [3,2 phr] | 11 | 20 | 41 | - |
| 77-A | AldiSt [36] [3,2 phr] | 21 | 41 | 113 | 0,16 |
| 78-A | MgSt [37] [3,2 phr] | 14 | 26 | 65 | - |
| 79-A | MgSt [37] [3,2 phr] | 34 | 54 | 117 | 0,16 |
| 80-A | CaSt [38] [3,2 phr] | 24 | 37 | 70 | - |
| 81-A | CaSt [38] [3,2 phr] | 50 | 74 | 151 | 0,16 |
| 82-A | Ca/Zn-1 [39] | 13 | 15 | 26 | - |
| 83-A | Ca/Zn-1 [39] | 37 | 43 | 61 | 0,16 |
| 84 | Ca/Zn-2 [40] | 28 | 38 | 74 | - |
| 85 | Ca/Zn-2 [40] | 41 | 51 | 92 | 0,16 |

[36] Aluminiumdistearat (Fa. Peter Greven Fettchemie)
[37] Magnesiumstearat (Fa. Nitika Chemicals)
[38] Calciumstearat ( Fa. Nitika Chemicals)
[39] Bäropan MC 8383 FP ( Fa. Bärlocher)
[40] Astab CZB ( Fa. Sun Ace)

Wie ersichtlich, ist bei Einsatz kommerziell verfügbarer Stabilisatorsysteme auf Basis von Calcium/Zink-Seifen (mixed metals) eine deutliche Wirkungssteigerung durch TEAP-Zugabe erreichbar.

**2.1.3. Wirkung von (A-1) als PVC-Stabilisator (in Gegenwart von Anfangsfarbenverbesserer-AFV) - Tab. 9-B**

Tab. 9-B

| Versuch Nr. | AFV Diverse | $t_{10}$ [min] | $t_{50}$ [min] | $t_{200}$ [min] | TEAP [phr] |
|---|---|---|---|---|---|
| 76-B | CADMU [44)] | 37 | 65 | 162 | 0,16 |
| 77-B | CADMU [44)] | 14 | 25 | 54 | - |
| 78-B | DMAU [43)] | 30 | 58 | 137 | 0,16 |
| 79-B | DMAU [43)] | 16 | 25 | 41 | - |
| 80-B | AC-1 [41)] | 37 | 64 | 141 | 0,16 |
| 81-B | AC-1 [41)] | 17 | 31 | 55 | - |
| 82-B | M-DHP-1 [46)] | 46 | 58 | 130 | 0,16 |
| 83-B | M-DHP-1 [46)] | 19 | 41 | 91 | - |

Es ist klar ersichtlich, dass die diversen Anfangsfarbverbesserer durch TEAP-Zugabe eine Performance Verbesserung stattfindet und zwar findet ein Steigerung der $t_{10}$-, $t_{50}$- und $t_{200}$-Werte von 88 - 164%, 41 - 160% und 43 - 200% statt.

### 2.1.3.4 Wirkung von (A-1) als PVC-Stabilisator (in Gegenwart von SCV + AFV)

#### 2.1.3.4.1 Anorganische (mineralische) Verbindungen als SCV ( Tab.10)

Tab.10

| Versuch Nr. | SCV | AFV | $t_{10}$ [min] | $t_{50}$ [min] | $t_{200}$ [min] | NaP [phr] | TEAP [phr] |
|---|---|---|---|---|---|---|---|
| 86 | CaH (u) [5)] | AC-1 [41)] | 46 | 56 | 70 | - | - |
| 87 | CaH (u) [5)] | AC-1 [41)] | 119 | 145 | 213 | - | 0,16 |
| 88 | CaH (u) [5)] | AC-2 [42)] | 106 | 131 | 197 | - | 0,16 |
| 89 | CaH (u) [5)] | DMAU [43)] | 30 | 37 | 50 | - | - |
| 90 | CaH (u) [5)] | DMAU [43)] | 67 | 84 | 122 | 0,08 | - |
| 91 | CaH (u) [5)] | DMAU [43)] | 119 | 158 | 260 | - | 0,16 |
| 92 | CaH (u) [5)] | CADMU [44)] | 29 | 37 | 50 | - | - |
| 93 | CaH (u) [5)] | CADMU [44)] | 117 | 148 | 226 | - | 0,16 |
| 94 | CaH (u) [5)] | M-DHP-1 [46)] | 121 | 160 | 265 | - | 0,16 |
| 95 | CaH (u) [5)] | M-DHP-2 [47)] | 93 | 146 | 317 | - | 0,16 |
| 96 | CaH (c) [6)] | AC-1 [41)] | 52 | 59 | 71 | - | - |
| 97 | CaH (c) [6)] | AC-1 [41)] | 107 | 126 | 160 | 0,08 | - |
| 98 | CaH (c) [6)] | AC-1 [41)] | 161 | 188 | 244 | - | 0,16 |
| 99 | CaH (c) [6)] | AC-2 [42)] | 51 | 58 | 68 | - | - |
| 100 | CaH (c) [6)] | AC-2 [42)] | 156 | 182 | 238 | - | 0,16 |
| 101 | CaH (c) [6)] | DMAU [43)] | 34 | 39 | 49 | - | - |
| 102 | CaH (c) [6)] | DMAU [43)] | 75 | 90 | 124 | 0,08 | - |
| 103 | CaH (c) [6)] | DMAU [43)] | 133 | 176 | 283 | - | 0,16 |
| 104 | CaH (c) [6)] | CADMU [44)] | 121 | 155 | 228 | - | 0,16 |
| 105 | CaH (c) [6)] | Naf[45)] | 52 | 61 | 77 | - | - |

(fortgesetzt)

| Versuch Nr. | SCV | AFV | $t_{10}$ [min] | $t_{50}$ [min] | $t_{200}$ [min] | NaP [phr] | TEAP [phr] |
|---|---|---|---|---|---|---|---|
| 106 | CaH (c) 6) | Naf45) | 142 | 218 | 406 | - | 0,16 |
| 107 | CaH (c) 6) | M-DHP-1 46) | 96 | 113 | 137 | - | - |
| 108 | CaH (c) 6) | M-DHP-1 46) | 135 | 198 | 345 | - | 0,16 |
| 109 | CaH (c) 6) | M-DHP-2 47) | 60 | 70 | 84 | - | - |
| 110 | CaH (c) 6) | M-DHP-2 47) | 86 | 130 | 262 | 0,08 | - |
| 111 | CaH (c) 6) | M-DHP-2 47) | 147 | 217 | 419 | - | 0,16 |
| | | | | | | | |
| Im Vergleich zu Versuchen ohne **AFV** und ohne TEAP (Versuche 5 und 6) ergibt sich ein positiver Einfluß auf die Thermostabilität, der insbesondere bei Versuchen 91, 94, 121 und 100, 103, 106, 108 sowie 111 stark hervortritt. | | | | | | | |
| | | | | | | | |
| CaH(u) und CaH ( c) zeigen in Kombination von **AFV** mit TEAP gegenüber den Versuchen ohne TEAP (87 vs. 86, 91 vs. 89, 93 vs. 92, 98 vs. 96, 100 vs. 99, 103 vs. 101, 106 vs. 105, 108 vs. 107 und 111 vs. 109) eine drastische Steigerung der $t_{10}$-, $t_{50}$- und $t_{200}$-Werte um 41 - 303%, 75 - 351%, und 152 - 478 %. Die TEAP-Kombinationen zeigen gegenüber den molgleichen Natriumperchlorat-Kombinationen (NaP $*$ $H_2O$) 91 vs. 90, 98 vs. 97, 103 vs. 102 und 111 vs. 110), die dem SdT entsprechen, ebenfalls sehr deutliche Steigerungen der $t_{10}$-, $t_{50}$- und $t_{200}$-Werte und zwar um 50 - 78 %, 49 - 96 % und 53 - 128 %. | | | | | | | |
| | | | | | | | |
| 112 | Hytal 7) | AC-1 41) | 54 | 60 | 73 | - | - |
| 113 | Hytal 7) | AC-1 41) | 136 | 160 | 209 | - | 0,16 |
| 114 | Hytal 7) | AC-2 42) | 119 | 147 | 200 | - | 0,16 |
| 115 | Hytal 7) | DMAU 43) | 42 | 48 | 58 | - | - |
| 116 | Hytal 7) | DMAU 43) | 70 | 79 | 94 | 0,08 | - |
| 117 | Hytal 7) | DMAU 43) | 97 | 111 | 136 | - | 0,16 |
| 118 | Hytal 7) | CADMU 44) | 79 | 87 | 101 | 0,08 | - |
| 119 | Hytal 7) | CADMU 44) | 104 | 120 | 148 | - | 0,16 |
| 120 | Hytal 7) | Naf45) | 107 | 143 | 273 | - | 0,16 |
| 121 | Hytal 7) | M-DHP-1 46) | 116 | 162 | 281 | - | 0,16 |
| 122 | Hytal 7) | M-DHP-2 47) | 102 | 137 | 233 | - | 0,16 |
| 123 | Pural 9) | Naf 45) | 110 | 142 | 266 | - | 0,16 |
| 124 | Pural 9) | M-DHP-247) | 75 | 83 | 100 | - | - |
| 125 | Pural 9) | M-DHP-2 47) | 113 | 139 | 220 | 0,08 | - |
| 126 | Pural 9) | M-DHP-2 47) | 131 | 161 | 251 | - | 0,16 |
| 127 | Sorbacid911 8) | AC-1 41) | 73 | 80 | 95 | - | - |
| 128 | Sorbacid911 8) | AC-1 41) | 107 | 119 | 146 | 0,08 | - |
| 129 | Sorbacid911 8) | AC-1 41) | 146 | 165 | 205 | - | 0,16 |
| 130 | Sorbacid911 8) | AC-2 42) | 142 | 162 | 205 | - | 0,16 |
| 131 | Sorbacid911 8) | Naf 45) | 103 | 129 | 220 | - | 0,16 |
| 132 | Sorbacid911 8) | M-DHP-2 47) | 61 | 65 | 76 | - | - |
| 133 | Sorbacid911 8) | M-DHP-2 47) | 107 | 134 | 218 | 0,08 | - |

(fortgesetzt)

| Versuch Nr. | SCV | AFV | $t_{10}$ [min] | $t_{50}$ [min] | $t_{200}$ [min] | NaP [phr] | TEAP [phr] |
|---|---|---|---|---|---|---|---|
| 134 | Sorbacid911 [8)] | M-DHP-2 [47)] | 137 | 170 | 270 | - | 0,16 |
| 135 | Sorbacid939 [8)] | AC-1 [41)] | 110 | 137 | 196 | - | 0,16 |
| 136 | Sorbacid939 [8)] | AC-2 [42)] | 101 | 129 | 192 | - | 0,16 |
| 136a | DASC 265 [9a)] | DMAU [43)] | 99 | 119 | 143 | - | 0,16 |
| 136b | DASC 265 [9a)] | DMAU [43)] | 81 | 101 | 175 | 0,08 | - |
| 136c | DASC 265[9a)] | DMAU[43)] | 34 | 42 | 53 | - | - |
| | | | | | | | |
| Auch im System Hytal zeigen Kombinationen von **AFV** mit TEAP gegenüber den Versuchen ohne TEAP ( 113 vs. 112, 117 vs. 115, 126 vs. 124, 129 vs. 127 und 134 vs. 132) eine sehr deutliche Steigerung der $t_{10}$-, $t_{50}$- und $t_{200}$-Werte um 75 - 152%, 94 - 167% und 116 - 255%. | | | | | | | |
| | | | | | | | |
| Die TEAP-Kombinationen weisen gegenüber den möglichen NaP-Kombinationen (117 vs. 116, 119 vs. 118, 126 vs. 125, 129 vs. 128 und 134 vs. 133), die-dem SdT entsprechen, ebenfalls eine deutliche Steigerung der $t_{10}$-, $t_{50}$- und $t_{200}$-Werte und zwar um 16 - 39%, 16 - 41 % und 14 - 45% auf. | | | | | | | |
| | | | | | | | |
| 137 | NaZA [10)] | AC-1 [41)] | 40 | 51 | 71 | - | - |
| 138 | NaZA [10)] | AC-1 [41)] | 91 | 117 | 185 | - | 0,16 |
| 139 | NaZA [10)] | AC-2 [42)] | 83 | 110 | 178 | - | 0,16 |
| 140 | NaZA [10)] | DMAU [43)] | 31 | 39 | 52 | - | - |
| 141 | NaZA [10)] | DMAU [43)] | 75 | 99 | 131 | 0,08 | - |
| 142 | NaZA [10)] | DMAU [43)] | 81 | 110 | 158 | - | 0,16 |
| 143 | NaZA [10)] | CADMU [44)] | 37 | 46 | 58 | - | - |
| 144 | NaZA [10)] | CADMU [44)] | 67 | 87 | 131 | 0,08 | - |
| 145 | NaZA [10)] | CADMU [44)] | 81 | 109 | 161 | - | 0,16 |
| 146 | NaZA [10)] | Naf [45)] | 38 | 118 | 226 | - | 0,16 |
| 147 | NaZA [10)] | M-DHP-1 [46)] | 52 | 77 | 119 | - | - |
| 148 | NaZA [10)] | M-DHP-1 [46)] | 71 | 105 | 205 | 0,08 | - |
| 149 | NaZA [10)] | M-DHP-1 [46)] | 91 | 124 | 220 | - | 0,16 |
| 150 | NaZA [10)] | M-DHP-2 [47)] | 75 | 106 | 221 | - | 0,16 |
| | | | | | | | |
| Auch im System NaZA zeigen Kombinationen von **AFV** mit TEAP gegenüber Versuchen ohne TEAP (138 vs. 137, 142 vs. 140, 145 vs. 143 und 149 vs. 147) eine sehr deutliche Steigerung der $t_{10}$-, $t_{50}$- und $t_{200}$-Werte um 75 - 161%, 61 - 182 und 185 - 204%. Die TEAP-Kombinationen weisen gegenüber den molgleichen NaP-Kombinationen (142 vs. 141, 145 vs. 144 und 149 vs. 148), die dem SdT entsprechen, ebenfalls eine Steigerung der $t_{10}$-, $t_{50}$- und $t_{200}$-Werte auf und zwar bis 28%, bis 25% und bis 23%. | | | | | | | |
| | | | | | | | |
| 151 | MgH [11)] | AC-1 [41)] | 52 | 73 | 120 | 0,08 | - |
| 152 | MgH [11)] | AC-1 [41)] | 67 | 96 | 143 | - | 0,16 |
| 153 | MgH [11)] | AC-2 [42)] | 44 | 63 | 115 | 0,08 | - |

(fortgesetzt)

| Versuch Nr. | SCV | AFV | $t_{10}$ [min] | $t_{50}$ [min] | $t_{200}$ [min] | NaP [phr] | TEAP [phr] |
|---|---|---|---|---|---|---|---|
| 154 | MgH [11)] | AC-2 [42)] | 76 | 88 | 144 | - | 0,16 |
| 155 | MgH [11)] | DMAU [43)] | 42 | 59 | 106 | 0,08 | - |
| 156 | MgH [11)] | DMAU [43)] | 79 | 99 | 139 | - | 0,16 |
| 157 | MgH [11)] | CADMU [44)] | 48 | 70 | 105 | 0,08 | - |
| 158 | MgH [11)] | CADMU [44)] | 70 | 87 | 124 | - | 0,16 |
| 159 | Mg [11)] | Naf [45)] | 49 | 75 | 163 | - | 0,16 |
| 160 | MgH [11)] | M-DHP-1 [46)] | 53 | 77 | 142 | - | 0,16 |
| 161 | MgH [11)] | M-DHP-2 [47)] | 46 | 67 | 130 | - | 0,16 |
| 162 | MgAcac [13)] | AC-1 [41)] | 90 | 98 | 115 | - | - |
| 163 | MgAcac [13)] | AC-1 [41)] | 109 | 119 | 145 | 0,08 | - |
| 164 | MgAcac [13)] | AC-1 [41)] | 121 | 130 | 154 | - | 0,16 |
| 165 | MgAcac [13)] | AC-2 [42)] | 84 | 87 | 95 | - | - |
| 166 | MgAcac [13)] | AC-2 [42)] | 89 | 95 | 111 | 0,08 | - |
| 167 | MgAcac [13)] | AC-2 [42)] | 107 | 119 | 146 | - | 0,16 |
| 168 | MgAcac [13)] | DMAU [43)] | 89 | 101 | 128 | - | 0,16 |
| 169 | MgAcac [13)] | CADMU [44)] | 82 | 95 | 128 | - | 0,16 |
| 170 | MgAcac [13)] | Naf [45)] | 70 | 90 | 143 | - | 0,16 |
| 171 | MgAcac [13)] | M-DHP-1 [46)] | 95 | 86 | 111 | - | - |
| 172 | MgAcac [13)] | M-DHP-1 [46)] | 101 | 112 | 148 | 0,08 | - |
| 173 | MgAcac [13)] | M-DHP-1 [46)] | 103 | 122 | 178 | - | 0,16 |
| 174 | MgAcac [13)] | M-DHP-2 [47)] | 101 | 120 | 173 | - | 0,16 |
| 175 | CaAcac [12)] | AC-1 [41)] | 49 | 64 | 76 | - | - |
| 176 | CaAcac [12)] | AC-1 [41)] | 119 | 140 | 167 | 0,08 | - |
| 177 | CaAcac [12)] | AC-1 [41)] | 132 | 167 | 236 | - | 0,16 |
| 178 | CaAcac [12)] | AC-2 [42)] | 60 | 69 | 77 | - | - |
| 179 | CaAcac [12)] | AC-2 [42)] | 116 | 131 | 152 | 0,08 | - |
| 180 | CaAcac [12)] | AC-2 [42)] | 140 | 179 | 240 | - | 0,16 |
| 181 | CaAcac [12)] | DMAU [43)] | 98 | 137 | 240 | - | 0,16 |
| 182 | CaAcac [12)] | CADMU [44)] | 91 | 141 | 222 | - | 0,16 |
| 183 | CaAcac [12)] | Naf [45)] | 98 | 145 | 272 | - | 0,16 |
| 184 | CaAcac [12)] | M-DHP-1 [46)] | 107 | 176 | 304 | - | 0,16 |
| 185 | CaAcac [12)] | M-DHP-2 [47)] | 95 | 141 | 298 | - | 0,16 |

[41)] 1,4-Butylenglycol-bis-3-aminocrotonat (Fa. Lonza)
[42)] Thiodiglycol-bis-3-aminocrotonat (Fa. Lonza)
[43)]1,3-Dimethyl-6-Aminouracil
[44)] N-Cyanacetyl-N,N'-Dimethylharnstoff
[45)] 2-Naphthol (ALDRICH)
[46)] Mono-Dihydropyridin (1,4-Dihydro-2,6-dimethylpyridin-3,5-dicarbonsäure-dimethylester - Synthesebeispiel 1.2.1)
[47)] Mono-Dihydropyridin (Stavinor® D507 - Fa. Arkema)

Auch hier die Steigerungsrate bei TEAP-Zusatz in Vgl. zu Versuchen ohne TEAP sehr beeindruckend, die Steigerungsraten gegenüber NaP-Zusatz sind beträchtlich.

### 2.1.3.4.2 Organische Verbindungen als HCl-Fänger (Tab. 11 und 12)

Tab.11

| Versuch Nr. | SCV Epoxide | AFV | $t_{10}$ [min] | $t_{50}$ [min] | $t_{200}$ [min] | NaP [ph] | TEAP [phr] |
|---|---|---|---|---|---|---|---|
| 186 | TEPC 32) | AC-1 41) | 130 | 140 | 158 | - | - |
| 187 | TEPC 32) | AC-1 41) | 205 | 218 | 256 | - | 0,16 |
| 188 | TEPC 32) | AC-2 42) | 137 | 143 | 161 | - | - |
| 189 | TEPC 32) | AC-2 42) | 196 | 211 | 251 | - | 0,16 |
| 190 | TEPC 32) | DMAU 43) | 131 | 137 | 149 | - | - |
| 191 | TEPC 32) | DMAU 43) | 142 | 157 | 188 | - | 0,16 |
| 192 | TEPC 32) | CADMU 44) | 125 | 132 | 146 | - | - |
| 193 | TEPC 32) | CADMU 44) | 147 | 158 | 196 | 0,08 | - |
| 194 | TEPC 32) | CADMU 44) | 169 | 184 | 222 | - | 0,16 |
| 195 | TEPC 32) | Naf 45) | 85 | 97 | 118 | - | - |
| 196 | TEPC 32) | Naf 45) | 161 | 208 | 308 | 0,08 | - |
| 197 | TEPC 32) | Naf 45) | 182 | 216 | 318 | - | 0,16 |
| 198 | TEPC 32) | M-DHP-1 46) | 205 | 236 | 329 | - | 0,16 |
| 199 | TEPC 32) | M-DHP-2 47) | 115 | 138 | 175 | - | - |
| 200 | TEPC 32) | M-DHP-2 47) | 180 | 224 | 316 | 0,08 | - |
| 201 | TEPC 32) | M-DHP-2 47) | 205 | 241 | 345 | - | 0,16 |
| | | | | | | | |
| Auch hier sind die Steigerungsraten vorhanden (201 vs. 199 und 201 vs. 200), sie betragen für die $t_{10}$-, $t_{50}$- und $t_{200}$-Werte 78%, 75% und 97% bzw. 14% $t_{10}$-Wert. | | | | | | | |
| | | | | | | | |
| 202 | Hexdge 29) | AC-1 41) | 66 | 73 | 86 | - | - |
| 203 | Hexdge 29) | AC-1 41) | 132 | 148 | 191 | - | 0,16 |
| 204 | Hexdge 29) | AC-2 42) | 64 | 71 | 83 | - | - |
| 205 | Hexdge 29) | AC-2 42) | 111 | 127 | 164 | 0,08 | - |
| 206 | Hexdge 29) | AC-2 42) | 133 | 148 | 182 | - | 0,16 |
| 207 | Hexdge 29) | DMAU 43) | 57 | 61 | 69 | - | - |
| 208 | Hexdge 29) | DMAU 43) | 125 | 134 | 155 | - | 0,16 |
| 208a | c-Hexdge 29a) | DMAU 43) | 130 | 140 | 164 | - | 0,16 |
| 209 | Hexdge 29) | CADMU 44) | 56 | 58 | 65 | - | - |
| 210 | Hexdge 29) | CADMU 44) | 119 | 134 | 184 | 0,08 | - |
| 211 | Hexdge 29) | CADMU 44) | 129 | 143 | 182 | - | 0,16 |
| 212 | Hexdge 29) | Naf 45) | 96 | 122 | 214 | - | 0,16 |
| 213 | Hexdge 29) | M-DHP-1 46) | 65 | 76 | 92 | - | - |

(fortgesetzt)

| Versuch Nr. | SCV Epoxide | AFV | $t_{10}$ [min] | $t_{50}$ [min] | $t_{200}$ [min] | NaP [ph] | TEAP [phr] |
|---|---|---|---|---|---|---|---|
| 214 | Hexdge 29) | M-DHP-1 46) | 80 | 104 | 176 | 0,08 | - |
| 215 | Hexdge 29) | M-DHP-1 46) | 148 | 173 | 263 | - | 0,16 |
| 216 | Hexdge 29) | M-DHP-2 47) | 95 | 121 | 212 | - | 0,16 |
| | | | | | | | |
| Hier sind ebenfalls deutliche Steigerungsrate vorhanden (206 vs. 204 und 215 vs. 213) mit Werten von 108 - 128%, 108 - 128% und 119 - 197% sowie für 206 vs. 205 und 215 vs. 214 mit Werten von 20 - 88%, 17 - 66% und 11 - 49%. | | | | | | | |
| | | | | | | | |
| 217 | Glydi 30) | AC-1 41) | 52 | 74 | 86 | - | - |
| 218 | Glydi 30) | AC-1 41) | 115 | 133 | 163 | 0,08 | - |
| 219 | Glydi 30) | AC-1 41) | 161 | 173 | 204 | - | 0,16 |
| 220 | Glydi 30) | AC-2 42) | 144 | 158 | 193 | - | 0,16 |
| 221 | Glydi 30) | DMAU 43) | 70 | 73 | 80 | - | - |
| 222 | Glydi 30) | DMAU 43) | 115 | 131 | 155 | 0,08 | - |
| 223 | Glydi 30) | DMAU 43) | 128 | 139 | 166 | - | 0,16 |
| 224 | Glydi 30) | CADMU 44) | 72 | 75 | 82 | - | - |
| 225 | Glydi 30) | CADMU 44) | 130 | 141 | 167 | - | 0,16 |
| 226 | Glydi 30) | Naf 45) | 88 | 116 | 210 | - | 0,16 |
| 227 | Glydi 30) | M-DHP-1 46) | 64 | 101 | 124 | - | - |
| 228 | Glydi 30) | M-DHP-1 46) | 78 | 111 | 182 | 0,08 | - |
| 229 | Glydi 30) | M-DHP-1 46) | 140 | 167 | 240 | - | 0,16 |
| 230 | Glydi 30) | M-DHP-2 47) | 92 | 120 | 200 | - | 0,16 |
| | | | | | | | |
| Hier betragen die Steigerungsraten (219 vs. 217, 223 vs. 221 und 229 vs. 227 sowie 219 vs. 218, 223 vs. 222 und 229 vs. 228) mit Steigerungsraten von 83 - 210%, 65 - 134% und 94 - 137% sowie bis 79% bis 50% und bis 32%. | | | | | | | |
| | | | | | | | |
| 231 | DiGlAn 48) | AC-2 42) | 98 | 108 | 131 | - | 0,16 |
| 232 | DiGlAn 48) | AC-2 42) | 115 | 119 | 131 | - | 0,16 |
| 233 | DiGlAn 48) | DMAU 43) | 59 | 62 | 70 | - | - |
| 234 | DiGlAn 48) | DMAU 43) | 79 | 86 | 103 | 0,08 | - |
| 235 | DiGlAn 48) | DMAU 43) | 90 | 99 | 121 | - | 0,16 |
| 236 | DiGlAn 48) | CADMU 44) | 101 | 110 | 137 | - | 0,16 |
| 237 | DiGlAn 48) | Naf 45) | 97 | 107 | 133 | - | 0,16 |
| 238 | DiGlAn 48) | M-DHP-1 46) | 135 | 141 | 152 | - | 0,16 |
| 239 | DiGlAn 48) | M-DHP-2 47) | 100 | 109 | 130 | - | 0,16 |
| 240 | TriGlOxAn 49) | AC-2 42) | 103 | 112 | 133 | - | 0,16 |
| 241 | TriGlOxAn 49) | AC-2 42) | 121 | 125 | 139 | - | 0,16 |
| 242 | TriGlOxAn 49) | DMAU 43) | 82 | 85 | 94 | - | - |
| 243 | TriGlOxAn 49) | DMAU 43) | 104 | 110 | 125 | 0,08 | - |

(fortgesetzt)

| Versuch Nr. | SCV Epoxide | AFV | $t_{10}$ [min] | $t_{50}$ [min] | $t_{200}$ [min] | NaP [ph] | TEAP [phr] |
|---|---|---|---|---|---|---|---|
| 244 | TriGlOxAn [49)] | DMAU [43)] | 116 | 121 | 135 | - | 0,16 |
| 245 | Tn»GlOxAn [49)] | CADMU [44)] | 119 | 125 | 142 | - | 0,16 |
| 246 | TriGlOxAn [49)] | Naf [45)] | 98 | 105 | 121 | - | 0,16 |
| 247 | TriGlOxAn [49)] | M-DHP-1 [46)] | 116 | 121 | 134 | - | 0,16 |
| 248 | TriGlOxAn [49)] | M-DHP-2[47)] | 104 | 110 | 139 | - | 0,16 |
| | | | | | | | |
| Hier betragen die Steigerungsraten (235 vs. 233 und 244 vs. 242 sowie 235 vs. 234 und 244 vs. 243) 41 - 53%, 42 - 40% und 44 - 73% sowie bis 14%, bis 15% und bis 17%. | | | | | | | |
| | | | | | | | |
| 249 | BADGE [25)] | AC-1 [41)] | 87 | 140 | 166 | - | - |
| 250 | BADGE [25)] | AC-1 [41)] | 133 | 155 | 193 | - | 0,16 |
| 251 | BADGE [25)] | AC-2 [42)] | 125 | 150 | 185 | - | 0,16 |
| 252 | BADGE [25)] | DMAU [43)] | 56 | 62 | 70 | - | - |
| 253 | BADGE [25)] | DMAU [43)] | 132 | 143 | 164 | - | 0,16 |
| 254 | BADGE [25)] | CADMU [44)] | 124 | 156 | 186 | - | 0,16 |
| 255 | BADGE [25)] | Naf [45)] | 46 | 84 | 202 | - | 0,16 |
| 256 | BADGE [25)] | M-DHP-1 [46)] | 89 | 142 | 323 | - | 0,16 |
| 257 | BADGE [25)] | M-DHP-2 [47)] | 48 | 88 | 201 | - | 0,16 |
| 258 | BFDGE [26)] | AC-1 [41)] | 61 | 112 | 131 | - | - |
| 259 | BFDGE [26)] | AC-14 [41)] | 91 | 132 | 175 | 0,08 | - |
| 260 | BFDGE [26)] | AC-1 [41)] | 154 | 166 | 193 | - | 0,16 |
| 261 | BFDGE [26)] | AC-2 [42)] | 145 | 158 | 191 | - | 0,16 |
| 262 | BFDGE [26)] | DMAU [43)] | 63 | 67 | 74 | - | - |
| 263 | BFDGE [26)] | DMAU [43)] | 105 | 136 | 156 | 0,08 | - |
| 264 | BFDGE [26)] | DMAU [43)] | 128 | 140 | 164 | - | 0,16 |
| 265 | BFDGE [26)] | CADMU [44)] | 121 | 146 | 175 | - | 0,16 |
| 266 | BFDGE [26)] | Naf [45)] | 49 | 86 | 199 | - | 0,16 |
| 267 | BFDGE [26)] | M-DHP-1 [46)] | 77 | 125 | 217 | - | 0,16 |
| 268 | BFDGE [26)] | M-DHP-2 [47)] | 48 | 88 | 194 | - | 0,16 |
| | | | | | | | |
| Hier (260 vs. 258 und 264 vs. 262 sowie 260 vs. 259 und 264 vs. 263) liegen die Steigerungsraten bei 103 - 152%, 48 - 109% und 47 - 122% sowie bis 69%, bis 35% und bis 10%. | | | | | | | |
| | | | | | | | |
| 269 | Epikote828 [27)] | AC-1 [41)] | - 102 | 145 | 211 | - | 0,16 |
| 270 | Epikote828 [27)] | AC-2 [42)] | 118 | 153 | 203 | - | 0,16 |
| 271 | Epikote828 [27)] | DMAU [43)] | 122 | 150 | 175 | - | 0,16 |
| 272 | Epikote828 [27)] | CADMU [44)] | 54 | 60 | 67 | - | - |
| 273 | Epikote828 [27)] | CADMU [44)] | 89 | 126 | 174 | - | 0,16 |

(fortgesetzt)

| Versuch Nr. | SCV Epoxide | AFV | $t_{10}$ [min] | $t_{50}$ [min] | $t_{200}$ [min] | NaP [ph] | TEAP [phr] |
|---|---|---|---|---|---|---|---|
| 274 | Epikote828 [27)] | Naf [45)] | 53 | 103 | 248 | - | 0,16 |
| 275 | Epikote828 [27)] | M-DHP-1 [46)] | 40 | 68 | 157 | - | 0,16 |
| 276 | Epikote828 [27)] | M-DHP-2 [47)] | 56 | 101 | 218 | - | 0,16 |
| 277 | Epikote1002 [28)] | AC-1 [41)] | 19 | 36 | 59 | - | - |
| 278 | Epikote1002 [28)] | AC-1 [41)] | 56 | 77 | 145 | - | 0,16 |
| 279 | Epikote1002 [28)] | AC-2 [42)] | 16 | 38 | 68 | - | - |
| 280 | Epikote1002 [28)] | AC-2 [42)] | 60 | 79 | 133 | - | 0,16 |
| 281 | Epikote1002 [28)] | DMAU [43)] | 16 | 29 | 45 | - | - |
| 282 | Epikote1002 [28)] | DMAU [43)] | 44 | 76 | 142 | - | 0,16 |
| 283 | Epikote1002 [28)] | CADMU [44)] | 20 | 31 | 49 | - | - |
| 284 | Epikote1002 [28)] | CADMU [44)] | 52 | 85 | 153 | - | 0,16 |
| 285 | Epikote1002 [28)] | Naf [45)] | 19 | 31 | 55 | - | - |
| 286 | Epikote1002 [28)] | Naf [45)] | 26 | 50 | 139 | - | 0,16 |
| 287 | Epikote1002[28)] | M-DHP-1 [46)] | 22 | 46 | 100 | - | - |
| 288 | Epikote1002 [28)] | M-DHP-1 [46)] | 32 | 55 | 140 | - | 0,16 |
| 289 | Epikote1002 [28)] | M-DHP-2 [47)] | 20 | 38 | 74 | - | - |
| 290 | Epikote1002 [28)] | M-DHP-2 [47)] | 42 | 73 | 181 | - | 0,16 |

[48)] N,N-Diglycidylanilin (ALDRICH)
[49)] N,N-Diglycidyl-4-glycidyloxyanilin (ALDRICH)

Auch aus dieser Darstellung ist besonders der posititve Effekt bei zusätzlicher TEAP-Zugabe auf den $t_{10}$-Wert ersichtlich (273 vs. 272, 278 vs. 277, 280 vs. 279, 282 vs. 281, 284 vs. 283 und 290 vs. 289).

Tab. 12

| Versuch Nr. | SCV Cyanamide | AFV | $t_{ind.}$ [50)] [min] | $t_{50}$ [min] | $t_{200}$ [min] | NaP [phr] | TEAP [phr] |
|---|---|---|---|---|---|---|---|
| 291 | Didi-f [20)] | AC-1 [41)] | 75 | 78 | 87 | - | - |
| 292 | Didi-f [20)] | AC-1 [41)] | 86 | 91 | 108 | 0,08 | - |
| 293 | Didi-f [20)] | AC-1 [41)] | 113 | 119 | 146 | - | 0,16 |
| 294 | Didi-f [20)] | AC-2 [42)] | 113 | 119 | 145 | - | 0,16 |
| 295 | Didi-f [20)] | DMAU [43)] | 69 | 73 | 80 | - | - |
| 296 | Didi-f [20)] | DMAU [43)] | 102 | 107 | 128 | 0,08 | - |
| 297 | Didi-f [20)] | DMAU [43)] | 125 | 131 | 159 | - | 0,16 |
| 298 | Didi-f [20)] | CADMU [44)] | 70 | 74 | 81 | - | - |
| 299 | Didi-f [20)] | CADMU [44)] | 82 | 89 | 111 | 0,08 | - |
| 300 | Didi-f [20)] | CADMU [44)] | 115 | 124 | 154 | - | 0,16 |
| 301 | Didi-f [20)] | Naf [45)] | 68 | 74 | 89 | - | - |
| 302 | Didi-f [20)] | Naf [45)] | 98 | 111 | 143 | 0,08 | - |
| 303 | Didi-f [20)] | Naf [45)] | 112 | 128 | 172 | - | 0,16 |

(fortgesetzt)

| Versuch Nr. | SCV Cyanamide | AFV | $t_{ind.}$ [50] [min] | $t_{50}$ [min] | $t_{200}$ [min] | NaP [phr] | TEAP [phr] |
|---|---|---|---|---|---|---|---|
| 304 | Didi-f [20] | M-DHP-1 [46] | 83 | 86 | 95 | - | - |
| 305 | Didi-f [20] | M-DHP-1 [46] | 107 | 118 | 145 | 0,08 | - |
| 306 | Didi-f [20] | M-DHP-1 [46] | 126 | 142 | 185 | - | 0,16 |
| 307 | Didi-f [20] | M-DHP-2 [47] | 129 | 142 | 180 | - | 0,16 |
| | | | | | | | |
| Hier (293 vs. 291, 297 vs. 295, 300 vs. 298, 303 vs. 301 und 306 vs. 304 sowie 293 vs. 292, 297 vs. 296, 300 vs. 299, 303 vs. 302 und 306 vs. 305 liegen die Steigerungsraten bei 51 - 81%, 53 - 79% und 68 - 99% sowie bei 14 - 40%, 15 - 39% und 20 - 39%. | | | | | | | |
| | | | | | | | |
| 308 | Mel-f [23] | AC-1 [41] | 68 | 71 | 80 | - | - |
| 309 | Mel-f [23] | AC-1 [41] | 124 | 133 | 157 | 0,08 | - |
| 310 | Mel-f [23] | AC-1 [41] | 142 | 154 | 184 | - | 0,16 |
| 311 | Mel-f [23] | AC-2 [42] | 134 | 150 | 187 | - | 0,16 |
| 312 | Mel-f [23] | DMAU [43] | 67 | 70 | 76 | - | - |
| 313 | Mel-f [23] | DMAU [43] | 80 | 112 | 129 | 0,08 | - |
| 314 | Mel-f [23] | DMAU [43] | 136 | 149 | 169 | - | 0,16 |
| 315 | Mel-f [23] | CADMU [44] | 58 | 62 | 76 | - | - |
| 316 | Mel-f [23] | CADMU[44] | 100 | 115 | 148 | 0,08 | - |
| 317 | Mel-f [23] | CADMU [44] | 159 | 168 | 202 | - | 0,16 |
| 318 | Mel-f [23] | Naf [45] | 67 | 72 | 88 | - | - |
| 319 | Mel-f [23] | Naf [45] | 127 | 152 | 253 | 0,08 | - |
| 320 | Mel-f [23] | Naf [45] | 141 | 165 | 251 | - | 0,16 |
| 321 | Mel-f [23] | M-DHP-1 [46] | 76 | 79 | 90 | - | - |
| 322 | Mel-f [23] | M-DHP-1 [46] | 145 [51] | 187 | 270 | 0,08 | - |
| 323 | Mel-f [23] | M-DHP-1 [46] | 171 [51] | 214 | 298 | - | 0,16 |
| 324 | Mel-f [23] | M-DHP-2 [47] | 86 | 90 | 103 | - | - |
| 325 | Mel-f [23] | M-DHP-2 [47] | 149 | 164 | 248 | 0,08 | - |
| 326 | Mel-f [23] | M-DHP-2 [47] | 173 | 194 | 280 | - | 0,16 |
| [50] Induktionszeit<br>[51] $t_{10}$-Wert | | | | | | | |

Hier (310 vs. 308, 314 vs. 312, 317 vs. 315, 320 vs. 318, 323 vs. 312 und 326 vs. 324) sowie 310 vs. 309, 314 vs. 313, 317 vs. 316, 320 vs. 319, 323 vs. 322 und 326 vs. 325 liegen die Steigerungsraten bei 101 - 174%, 113 - 171% und 122 - 231% sowie bei 11 - 70%, 9 - 46% und 10 - 36%.

**2.1.3.4.3 Sonstige AF-Verbesserer als Cokomponente (Tab.13)**

Tab. 13

| Versuch Nr. | SCV CaH/ Mel | AFV | $ti_{10}$ [min] | $t_{50}$ [min] | $t_{200}$ [min] | TEAP [phr] |
|---|---|---|---|---|---|---|
| 327 | CaH (c) [6)] | B-DHP [52)] | 129 | 171 | 277 | 0,16 |
| 328 | CaH (c) [6)] | B-t-DHP [53)] | 109 | 138 | 225 | 0,16 |
| 329 | CaH (c) [6)] | P-DHP [54)] | 148 | 204 | 334 | 0,16 |
| 330 | CaH (c) [6)] | P-t-DHP [55)] | 122 | 164 | 273 | 0,16 |
| 331 | Mel-f [23)] | B-DHP [52)] | 119 | 146 | 212 | 0,16 |
| 332 | Mel-f [23)] | B-t-DHP [53)] | 111 | 138 | 213 | 0,16 |
| 333 | Mel-f [23)] | P-DHP [54)] | 138 | 161 | 229 | 0,16 |
| 334 | TEPC [32)] | Hyd [56)] | 124 | 145 | 218 | 0,16 |
| 335 | CaH (c) [6)] | Hyd [56)] | 129 | 188 | 344 | 0,16 |
| 336 | Hytal [7)] | Hyd [56)] | 101 | 137 | 244 | 0,16 |
| 337 | Hexdge [29)] | Hyd [56)] | 83 | 112 | 209 | 0,16 |
| 338 | NAZA [10)] | Hyd [56)] | 85 | 89 | 193 | 0,16 |
| 339 | BADGE [25)] | Hyd [56)] | 35 | 66 | 172 | 0,16 |
| 340 | BFDGE [26)] | Hyd [56)] | 39 | 71 | 178 | 0,16 |

[52)] Bis-Dihydropyridin (Bis-[1,4-dihydro-2,6-dimethylpyridin-3,5-dicarbonsäure]-1,4-butandioldiester-Synthesebeispiel 1.2.2)
[53)] Bis-Dihydropyridin (Bis-[1,4-dihydro-2,6-dimethylpyridin-3,5-dicarbonsäure]-thio-diethylenglykoldiester - Synthesebeispiel 1.2.3)
[54)] Poly-Dihydropyridin (Poly-[1,4-dihydro-2,6-dimethylpyridin-3,5-dicarbonsäure]-1,4-butandiolester-Synthesebeispiel 1.2.4)
[55)] Poly-Dihydropyridin (Poly-[1,4-dihydro-2,6-dimethylpyridin-3,5-dicarbonsäure-thio-diethylenglykolester] - Synthesebeispiel 1.2.5)
[56)] Hydantoin (ALDRICH)

Auch hier ist ersichtlich, dass gute Effekte erzielbar sind.

### 2.2 Durchführung des statischen Hitzetests (SHT)

#### 2.2.1 Herstellung der Walzfelle

100 Tle. der nach folgender Zusammenstellung zubereiteter Trockenmischungen werden unter Zusatz von 0,5-0,8 Teilen [57)] eines Gleitmittels auf Paraffinbasis auf einen Collin-Labormeßwalzwerk[58)] jeweils 5 Minuten bei 180°C plastifiziert. Die so erhaltenen Folien (Dicke 0,3mm) werden weiteren Messungen zugeführt.

100,0 Teile Vinnolit S3160 (PVC K-Wert = 60)
0,4 Teile Anfangsfarbenverbesserer **(AFV)**
1,6 Teile HCl-Fänger **(SCV)**
0,16 Teile TEAP (Verb. **A-1**)

#### 2.2.2 Durchführung der Prüfung

Von den nach Beispiel 2.2.1 hergestellten Walzfellen werden Teststreifen (16mm x 300mm) ausgeschnitten. Diese werden in einem Mathis-Thermotester (Typ LTE; Vorschub: 5mm, Grundzeit 5 bzw. 45min, Taktzeit 5min) bei 180°C bis zur Dunkelverfärbung (Verbrennen) belastet. Im Anschluß wird der YI-Wert (Yellowness-Index) nach DIN 53381 bestimmt[12)] und mit dem YI-Wert des unbelasteten Walzfelles verglichen (Nullminutenwert). Die Ergebnisse einiger representativen Vertreter sind in Tab. 14 zusammengefaßt. Je höher der YI-Wert desto gelber (dunkler) die Probe. Je geringer der YI-Wert desto heller die Probe und desto besser das Ergebnis.

### 2.2.3 Beispiele (Yellowness Indices- YI, Tab. 14)

Tabelle 14

| | DMAU (AFV) | | | | | Mono-DHP-1 (AFV) |
|---|---|---|---|---|---|---|
| Beispiel Nr. | 2.2.3.**1** | 2.2.3.**2** | 2.2.3.**3** | 2.2.3.**4** | 2.2.3.**5** | 2.2.3.**6** |
| Minuten | CaH(c) (SCV) + TEAP | NaZA (SCV) + TEAP | Mel (SCV) + TEAP | NaZA (SCV) + NaP | Mel (SCV) + NaP | CaH(c) (SCV) + TEAP |
| 0 | n.b | n.b | n.b | n.b | n.b | n.b |
| 10 | 6,6 | 7,9 | 5,7 | 19,5 | 17,9 | 6,6 |
| 20 | 7,7 | 11,1 | 8,3 | 32,3 | 24,8 | 7,6 |
| 30 | 10,0 | 15,0 | 13,1 | 44,8 | 37,3 | 9,7 |
| 40 | 15,2 | 19,9 | 23,0 | 53,6 | 48,9 | 16,3 |
| 50 | 23,6 | 28,4 | 33,9 | 59,0 | 57,6 | 25,4 |
| 60 | 34,7 | 35,2 | 46,8 | 63,5 | 64,1 | 46,8 |
| 70 | 50,4 | 41,3 | 57,7 | 71,4 | 72,8 | 75,0 |
| 80 | 66,4 | 48,4 | 71,4 | 78,7 | 84,7 | 82,5 |
| 90 | 85,5 | 54,8 | 86,7 | 90,2 | 102,0 | 100 |

[57)] Je nach Klebeneigung
[58)] BJ: 92; Walzentemp. (vorne): 182°C, (hinten): 184°C; Walzendurchmesser: 150mm; Walzenumfang: 0,417m; Drehzahl - Mischen: 15 [U/min]

Es ist klar ersichtlich, dass die Gesamtperformance durch TEAP-Zugabe (Verb. **A-1**) anstelle von NaP sprunghaft verbessert werden kann, wird. So liegen die Steigerungen beim

System NaZA/DMAU/TEAP vs. NaZA/DMAU/NaP (2 vs. 4) die mit einer Anfangsfarbenverbesserung (**AFV**-10Min.) von 147%, mit einer Verbesserung in der Farbhaltung (FH- 30 Min.) von 199% und einer Erhöhung der Langzeitstabilität (LZS -60 Min.) von 80%.

Für das alternative System Mel/DMAU/TEAP vs.. NaZA/DMAU/NaP (3 vs. 4) liegen die Verbesserungen für die AF(10Min.) bei 242%, für die FH (30Min.) bei 242% und für die LZ (60Min.) bei 36%.

Beim System CaH (c) /DMAU/TEAP vs. NaZA/DMAU/NaP (1 vs. 4) liegen die Steigerungsraten für die AF (10Min.) bei 195%, für die FH (30Min.) 348% und für die LZ (60Min.) bei 87%.

Für das ebenfalls alternative System CaH(c)/Mono-DHP-1/TEAP vs. NaZA/DMAU/NaP (6 vs. 4) sind Zuwächse für die AF (10Min.) von 195%, für die FH (30Min.) von 362% und für die LZ (60Min.) von 37% aufzuweisen.

Es zeigt sich eine drastische Verbesserung der Performance.

### Patentansprüche

1. Zusammensetzung enthaltend mindestens ein synthetisches Polymer und mindestens den koordinationspolymeren Triethanolaminperchlorato-Natrium-Innerkomplex mit der Monomereinheit der Formel **(A-1):**

   [(TEA)NaPc] **(A-1)**

   wobei

   TEA = Triethanolamin und Pc = perchlorato ist.

2. Zusammensetzung nach Anspruch 1, **dadurch gekennzeichnet, dass** es sich bei dem synthetischen Polymer um ein halogeniertes Polymer, vorzugsweise um PVC handelt.

3. Stabilisatorsystem zur Thermostabilisierung synthetischer Polymere enthaltend den koordinationspolymeren Triethanolaminperchlorato-Natrium-Innerkomplex mit der Monomereinheit der Formel **(A-1).**

[(TEA)NaPc] **(A-1)**

wobei

TEA = Triethanolamin und Pc = perchlorato ist und wobei zusätzlich ein Linear- und Cycloureid (substituierter Cyanacetylharnstoff, substituierte Iminobarbitursäure, substituiertes Aminouracil, Hydantoin) und/oder ein 3-Aminocrotonsäureester und/oder ein Dihydropyridin-dicarbonsäureester der Formel **(B-1), (B-2), (C-1)** und **(C-2)** enthalten ist:

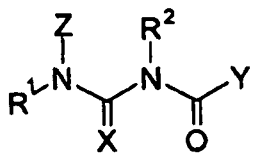

**(B-1)** **und**

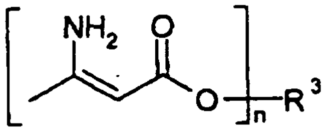

**(B-2)**

sowie

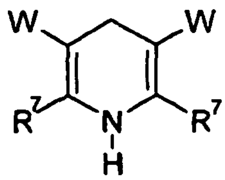

**(C-1)**

und

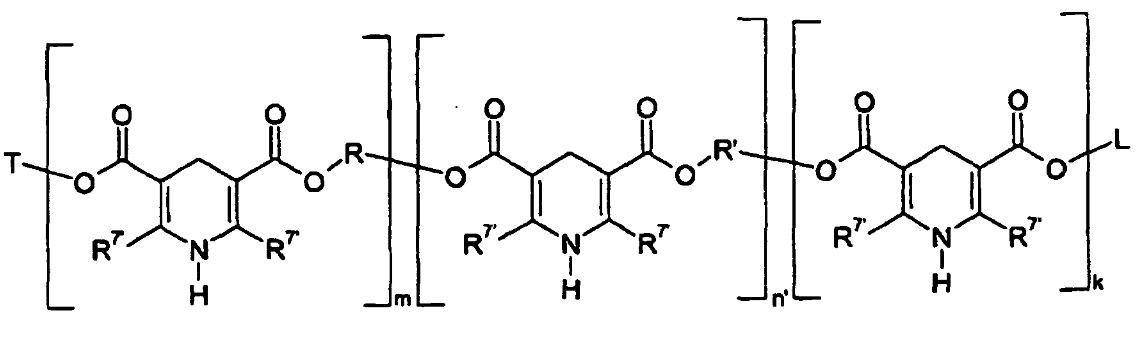

**(C-2)**

mit

**X** = O oder S; **Y** = $CH_2CN$, **Z** = H oder **Y** und **Z** bilden das Brückenglied $CH_2$-C=NH, $CR^5$=C-$NHR^6$ oder $R^1R^2C$.
**$R^1$, $R^2$** unabhängig voneinander H, $C_1$-$C_{22}$-Alkyl, Cyclohexyl, (Meth)allyl, Oleyl, Phenyl, Benzyl, Phenethyl, (Tetrahydro)naphthyl, Meth(oder Eth)oxypropyl(oder ethyl), $CH_2$-CHOH-$R^{1a}$, $CH_2$-CHOH-$CH_2X'R^{1a}$ ;
**X'** = O oder S;
**$R^{1a}$** = H, $C_{1-22}$-alkyl, Cyclohexyl, (Meth)allyl, Oleyl, Phenyl, Benzyl, Phenethyl, (Tetrahydro)naphtyl oder

Meth(oder Eth)oxypropyl(oder ethyl);
**$R^3$** = unverzweigtes oder verzweigtes $C_2$ - $C_{20}$ -Alkylen, das durch 1 bis 4 O - oder S- Atome unterbrochen oder/und durch 1 bis 4 OH-Gruppen substituiert sein kann, oder Dimethylol-cyclohexan-1,4-diyl, Polyethylen(oder-propylen)glykol-$\alpha$, $\omega$-diyl (vorzugsweise ist Poly = Tetra bis Deka), Polyglyceryl -$\alpha$,$\omega$-diyl (vorzugsweise ist Poly = Tetra bis Deka) oder Glycerin-triyl, Trimethylolethan(oder-propan)-triyl, Pentaerythrit-tri(oder-tetra)yl, Bis-trimethylolethan(oder-propan)-tri(oder-tetra)yl, Diglycerin-tri(oder-tetra)yl, Tetrit-tetrayl, Triglycerin-tri(oder-tetra,-penta)yl, Pentit-pentayl, Dipentaerythrit-penta(oder-hexa)yl und Hexit-hexayl;
**n** = 2, 3, 4, 5 oder 6.
**$R^5$** = H oder ($C_3$ - $C_{10}$-Alkyliden)$_{1/2}$; wobei dieses Alkyliden durch bis zu 2 O Atomen unterbrochen sein oder bis zu 2 Substituenten unabhängig ausgewählt aus der Gruppe bestehend aus OH, Phenyl und Hydroxyphenyl aufweisen kann;
**$R^6$** = H, Hydroxy-$C_2$ - $C_4$-alkyl, 3-$C_1$ - $C_{10}$-Alkoxy-2-hydroxypropyl oder Monobis Trihydroxy-, Mono- bis Tri-$C_1$ - $C_4$-alkyl- oder/und Mono- bis Tri- $C_1$-$C_4$-alkoxyphenyl, Allyl, mono- bis trisubstituiertes Phenyl;
**$R^7$, $R^{7'}$** unabhängig voneinander = verzweigtes und unverzweigtes $C_1$ - $C_4$-Alkyl, Phenyl, Cyclohexyl;
**W** = $CO_2CH_3$, $CO_2C_2H_5$, $CO_2{}^nC_{12}H_{25}$ oder $CO_2C_2H_4$-S-$^nC_{12}H_{25}$;
**L, T** = unsubstituiertes $C_{1-12}$-Alkyl;
sowie
**m und n'** ganze Zahlen von 0 bis 20 bedeuten,
**k** 0 oder 1 ist und
**R** und **R'** unabhängig voneinander Ethylen, Propylen, Butylen oder eine Alkylen- oder Cycloalkylenbismethylengruppe des Typ -($C_pH_{2p}$-X"-)$_t$$C_pH_{2p}$- sind, wobei p eine ganze Zahl von 2 bis 8 ist, t eine ganze Zahl von 0 bis 10 ist und **X"** für Sauerstoff oder Schwefel steht.

4. Stabilisatorsystem nach Anspruch 3, **dadurch gekennzeichnet, dass** zusätzlich Magnesium- bzw. Calciumoxid bzw. -hydroxid und/oder eine Magnesium- oder Calciumseife und/oder eine Ca/Zn-Stabilisator und/oder ein (gegebenenfalls Li- oder titanhaltiger) Hydrotalcit und/oder Dawsonit und/oder Natriumzeolith A und/oder ein Ca- Al-Hydroxo-Hydrogenphosphit und/oder eine Glycidylverbindung und/oder ein epoxidierter Fettsäureester und/oder ein Melamin und/oder ein Phosphorigsäureester und/oder 2-Naphthol und/oder ein Cyanamid der Formel **(E)**

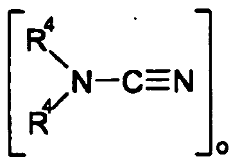

**(E)**

wobei jedes **$R^4$** unabhängig voneinander = H, Nitril, Carbamoyl, $R^1$, $R^2$, $R^1CO$, $R^2CO$, Na, K, $Mg_{1/2}$ und $Ca_{1/2}$ oder **$R_2{}^4$** = Tetra-, Penta- oder Hexamethylen und o = 1, 2 oder 3 ist, zugegeben ist.

5. Stabilisatorsystem nach einem der Ansprüche 3 oder 4, **dadurch gekennzeichnet, dass** ein sterisch gehindertes Amin (HALS) und/oder ein Antioxidans und/oder ein UV-Absorber (Benzotriazolderivat) und/oder Titandioxid und/oder Kreide zugegeben ist.

6. Stabilisatorsystem nach Anspruch 5, **dadurch gekennzeichnet, dass** das sterisch gehinderte Amin (HALS) eine NOR-HALS-Verbindung ist.

7. Stabilisatorsystem nach Anspruch 6, **dadurch gekennzeichnet, dass** die NOR-HALS-Verbindung eine triazinbasierte NOR-HALS-Verbindung ist.

8. Stabilisatorsystem nach einem der Ansprüche 3 bis 7, **dadurch gekennzeichnet, dass** dieses weiterhin einen Glycerinether und/oder, -ester, $R^8OCH_2CH(OH)CH_2OH$ oder $R^8CO_2CH_2CH(OH)CH_2OH$ und/oder ein DEA-derivat $R^9$-[C(O)]$_d$-N($C_2H_4OH$)$_2$ oder $R^8OCH_2CH(OH)CH_2$-[C(O)]$_d$-N($C_2H_4OH$)$_2$ oder $R^9$-N(OH)($CH_2$)$_2$($CH_2$)$_3$-[C(O)]$_d$-N($C_2H_4OH$)$_2$ und/oder ein Paraffinsulfat(oder Sulfonat)-Salz $C_{12}$-$C_{18}$-Alkyl-(O)$_{d'}$-$SO_3$ Na, Li, K und/oder ein Polyoxyalkylen der Formel **(F)**

$$R^8\text{-O-[CH(}R^{10}\text{)-CH}_2\text{-O-]}_a\text{-[CH}_2\text{-[CH(OH)]}_b\text{-CH}_2\text{-O]}_c\text{-[C(O)]}_{d'''}\text{-}R^9 \quad \textbf{(F)}$$

wobei

Jedes **$R^8$** unabhänig = H, $C_1$-$C_{24}$-Alkyl, $C_2$-$C_{24}$-Alkenyl, $CH_2$=CH-C(O) oder $CH_2$=$CCH_3$-C(O);
Jedes **$R^9$** unabhängig = $C_1$-$C_{24}$-Alkyl, $C_2$-$C_{24}$-Alkenyl, $(CH_2)_2OH$, $CH_2$-COOH oder N($C_1$-$C_8$-Alkyl)$_3$Hal,
**$R^{10}$** = H oder $CH_3$,
**Hal** = Cl, Br oder I;
**a** = eine ganze Zahl grösser oder gleich 2,
**b** = eine ganze Zahl von 1 bis 6, und
**c, d, d', d"**, unabhängig voneinander = 0 oder 1

enthält.

**9.** Zusammensetzung enthaltend ein synthetisches Polymer und ein Stabilisatorsystem nach einem der Ansprüche 3 bis 8.

**10.** Zusammensetzung nach Anspruch 9, **dadurch gekennzeichnet, dass** das synthetische Polymer ein chlorhaltiges Polymer, vorzugsweise PVC, ist.

**11.** Zusammensetzung nach Anspruch 10, **dadurch gekennzeichnet, dass** das chlorhaltige Polymer Hart-, Weich-, Suspensions- oder Emulsions-PVC ist.

**12.** Zusammensetzung nach einem der Ansprüche 9 bis 11, **dadurch gekennzeichnet, dass** bezogen auf 100 Gew.-Teile synthetisches Polymer 0,001-1,0 Gew.-Teile des Innerkomplexes **(A)** enthalten sind.

**13.** Zusammensetzung nach einem der Ansprüche 9 bis 12, **dadurch gekennzeichnet, dass** 0,01-10 Gew.-Teile sterisch gehindertes Amin und/oder NOR-HALS-Verbindung und/oder UV-Absorber und/oder Titandioxid enthalten sind.

**14.** Zusammensetzung nach einem der Ansprüche 9 bis 13, **dadurch gekennzeichnet, dass** das synthetische Polymer Weich-PVC und das Stabilisatorsystem 1,4-Cyclohexandimethanoldiglycidylether enthält.

**15.** Verfahren zur Stabilisierung von synthetischen Polymeren durch Zusatz eines Stabilisatorsystems nach einem der Ansprüche 4 bis 9 zu einem synthetischen Polymer.

**16.** Vefahren zur Stabilisierung von synthetischen Polymeren gemäß Anspruch 15, **dadurch gekennzeichnet, dass** das synthetische Polymer ein chlorhaltiges Polymer, vorzugsweise Weich-PVC oder Pasten-PVC, darstellt.

**17.** Verfahren zur Stabilisierung von chlorhaltigen Polymeren gemäß Anspruch 16, **dadurch gekennzeichnet, dass** das Weich-PVC für die Herstellung von Fußböden, KFZ-Teilen, Wandtapeten, Weichfolien, Schläuchen, Spritzgussteilen oder bevorzugt für Drahtummantelungen (Kabel) geeignet ist.

**18.** Verfahren zur Stabilisierung von synthetischen Polymeren gemäß Anspruch 16, **dadurch gekennzeichnet, dass** das chlorhaltige Polymer Hart-PVC ist.

**19.** Verfahren zur Stabilisierung von chlorhaltigen Polymeren gemäß Anspruch 18, **dadurch gekennzeichnet, dass** das Hart-PVC für die Herstellung von Folien (auch Luvitherm), PVC-Rohren oder Profilen, bevorzugt von Fensterprofilen geeignet ist.

## Claims

**1.** Composition comprising at least one synthetic polymer and at least the coordination-polymeric triethanolamineperchloratosodium inner complex comprising the monomer unit of the formula (A-1):

[(TEA)NaPc] (A-1)

where

TEA = triethanolamine and Pc = perchlorato.

2. Composition according to Claim 1, **characterized in that** the synthetic polymer is a halogenated polymer, preferably PVC.

3. Stabilizer system for thermally stabilizing synthetic polymers, comprising the coordination-polymeric triethanolamineperchloratosodium inner complex comprising the monomer unit of the formula **(A-1):**

[(TEA)NaPc] **(A-1)**

where

TEA = trithanolamine and Pc = perchlorato and where additionally present is a linear and cyclic ureide (substituted cyanoacetylurea, substituted iminobarbituric acid, substituted aminouracil, hydantoin) and/or a 3-aminocrotonic ester and/or a dihydropyridinedicarboxylic ester of the formula (B-1). (B-2), (C-1) and (C-2)

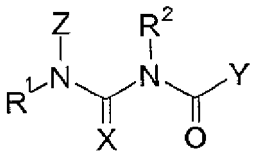

(B-1) and

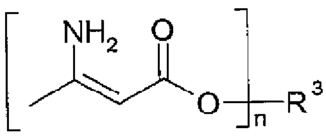

(B-2)

and

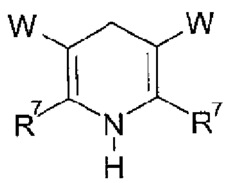

(C-1)

and

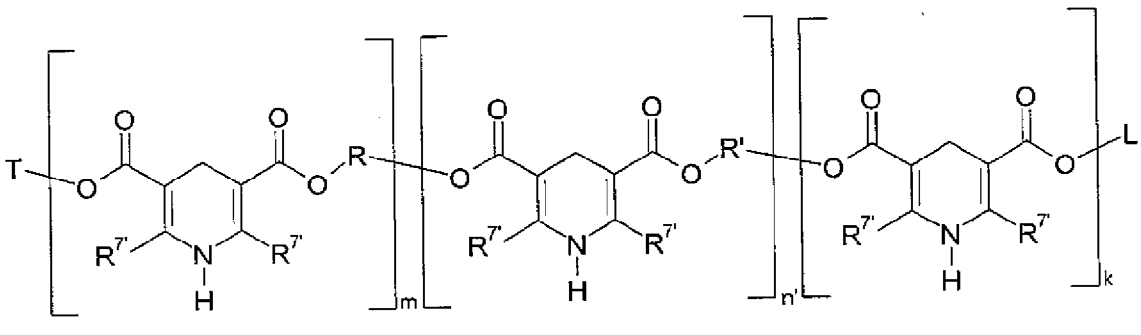

(C-2) where

**X** = 0 or S; **Y** = $CH_2CN$, **Z** = H, or **Y** and **Z** form the bridging member $CH_2$-C=NH, $CR^5$=C-$NHR^6$ or $R^1R^2C$. **$R^1$, $R^2$** are each independently H, $C_1$-$C_{22}$-alkyl, cyclohexyl, (meth)allyl, oleyl, phenyl, benzyl, phenethyl, (tetrahydro)naphthyl, meth(or erh)oxypropyl (or Methyl), $CH_2$-CHOH-$R^{1a}$, $CH_2$-CHOH-$CH_2X'R^{1a}$;
**X'** = O or S;

$R^{1a}$ = H, $C_{1-22}$-alkyl, cyclohexyl, (meth) allyl, oleyl, phenyl, benzyl, phenethyl, (tetrahydro)naphthyl or meth(or eth)oxypropyl (or ethyl);
$R^3$ = unbranched or branched $C_2$-$C_{20}$-alkylene which may be interrupted by 1 to 4 oxygen or sulphur atoms and/or may be substituted by 1 to 4 OH groups, or dimethylolcyclohexane-1,4-diyl, polyethylene(or -propylene) glycol-$\alpha,\omega$-diyl (preferably, poly = tetra to deca), polyglyceryl-$\alpha,\omega$-diyl (preferably, poly = tetra to deca) or glyceroltriyl, trimethylolethane (or -propane)triyl, pentaerythritoltri(or -tetra)yl, bis (trimethylolethane (or -propane)tri(or -tetra)yl, diglyceroltri(or -tetra)yl, tetritoltetrayl, triglyceroltri(or -tetra, -penta)yl, pentitolpentayl, dipentaerythritolpenta (or -hexa)yl and hexitolhexayl;
**n** = 2, 3, 4, 5 or 6;
$R^5$ = H or ($C_3$-$C_{10}$-alkylidene)$_{1/2}$; where this alkylidene may be interrupted by up to 2 oxygen atoms or may have up to 2 substituents selected independently from the group consisting of OH, phenyl and hydroxyphenyl;
$R^6$ = H, hydroxy-$C_2$-$C_4$-alkyl, 3-$C_1$-$C_{10}$-alkoxy-2-hydroxypropyl, or mono- to trihydroxy-, mono- to tri-$C_1$-$C_4$-alkyl- or/and mono- to tri-$C_1$-$C_4$-alkoxyphenyl, allyl, mono- to trisubstituted phenyl;
$R^7$, $R^{7'}$ are each independently branched and unbranched $C_1$-$C_4$-alkyl, phenyl, cyclohexyl;
**W** = $CO_2CH_3$, $CO_2C_2H_5$, $CO_2{}^nC_{12}H_{25}$ or $CO_2C_2H_4$-S-$^nC_{12}H_{25}$;
**L, T =** unsubstituted $C_{1-12}$-alkyl;
and
**m** and **n'** are each integers of 0 to 20,
**k** is 0 or 1 and
**R** and **R'** are each independently ethylene, propylene, butylene or an alkylene- or cycloalkylenebismethylene group of the -($C_pH_{2p}$-X"-)$_t$$C_pH_{2p}$- type where **p** is an integer of 2 to 8, t is an integer of 0 to 10 and **X"** is oxygen or sulphur.

4. Stabilizer system according to Claim 3, **characterized in that** additionally added is magnesium oxide or calcium oxide or magnesium hydroxide or calcium hydroxide and/or a magnesium soap or calcium soap and/or a Ca/Zn stabilizer and/or an (optionally Li- or titanium-containing) hydrotalcite and/or dawsonite and/or sodium zeolite A and/or a calcium aluminium hydroxo hydrogenphosphite and/or a glycidyl compound and/or an epoxidized fatty acid ester and/or a melamine and/or a phosphorous ester and/or 2-naphthol and/or a cyananide of the formula (E)

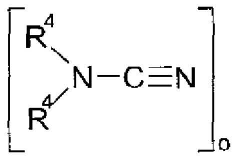

(E)
where each $R^4$ is independently H, nitrile, carbamoyl, $R^1$, $R^2$, $R^1CO$, $R^2CO$, Na, K, $Mg_{1/2}$ and $Ca_{1/2}$, or $R_2{}^4$ = tetra-, penta- or hexamethylene, and o = 1, 2 or 3.

5. Stabilizer system according to either of Claims 3 and 4, **characterized in that** a sterically hindered amine (HALS) and/or an antioxidant and/or a UV absorber (benzotriazole derivative) and/or titanium dioxide and/or chalk is added.

6. Stabilizer system according to Claim 5, **characterized in that** the sterically hindered amine (HALS) is an NOR-HALS compound.

7. Stabilizer system according to Claim 6, **characterized in that** the NOR-HALS compound is a triazine-based NOR-HALS compound.

8. Stabilizer system according to any of Claims 3 to 7, **characterized in that** it further comprises a glyceryl ether and/or ester, $R^8OCH_2CH(OH)CH_2OH$ or $R^8CO_2CH_2CH(OH)CH_2OH$ and/or a DEA derivative $R^9$-[C(O)]$_d$-N($C_2H_4OH$)$_2$ or $R^8OCH_2CH(OH)CH_2$-[C(O)]$_d$-N($C_2H_4OH$)$_2$ or $R^9$-N(OH)($CH_2$)$_2$($CH_2$)$_3$-[C(O)]$_d$-N($C_2H_4OH$)$_2$ and/or a paraffinsulphate (or -sulphonate) salt $C_{12}$-$C_{18}$-alkyl-(O)$_{d'}$-$SO_3$ Na, Li, K and/or a polyoxyalkylene of the formula **(F)**

$$R^8\text{-O-[CH(}R^{10}\text{)-CH}_2\text{-C-]}_a\text{-[CH}_2\text{-[CH(OH)]}_b\text{-CH}_2\text{-O]}_c\text{[C(O)]}_{d''}\text{-}\mathbf{R^9} \qquad \textbf{(F)}$$

where

each **$R^8$** is independently H, $C_1$-$C_{24}$-alkyl, $C_2$-$C_{24}$-Alkenyl, $CH_2$=CH-C(O) or $CH_2$=$CCH_3$-C(O) ;
each **$R^9$** is independently $C_1$-$C_{24}$-alkyl, $C_2$-$C_{24}$-alkenyl, $(CH_2)_2OH$, $CH_2$-COOH or N($C_1$-$C_8$-alkyl)$_3$Hal,
**$R^{10}$ =** H or $CH_3$,
**Hal** = Cl, Br or I;
**a =** an integer greater than or equal to 2,
**b** = an integer of 1 to 6, and
**c, d, d', d"** are each independently 0 or 1.

**9.** Composition comprising a synthetic polymer and a stabilizer system according to any of Claims 3 to 8.

**10.** Composition according to Claim 9, **characterized in that** the synthetic polymer is a chlorinated polymer, preferably PVC.

**11.** Composition according to Claim 10, **characterized in that** the chlorinated polymer is rigid PVC, flexible PVC, suspension PVC or emulsion PVC.

**12.** Composition according to any of Claims 9 to 11, **characterized in that**, based on 100 parts by weight of synthetic polymer, 0.001-1.0 part by weight of the inner complex (A) is present.

**13.** Composition according to any of Claims 9 to 12, **characterized in that** 0.01-10 parts by weight of sterically hindered amine and/or NOR-HALS compound and/or UV absorber and/or titanium dioxide are present.

**14.** Composition according to any of Claims 9 to 13, **characterized in that** the synthetic polymer is flexible PVC and the stabilizer system comprises 1,4-cyclohexanedimethanol diglycidyl ether.

**15.** Process for stabilizing synthetic polymers by adding a stabilizer system according to any of Claims 4 to 9 to a synthetic polymer.

**16.** Process for stabilizing synthetic polymers according to Claim 15, **characterized in that** the synthetic polymer is a chlorinated polymer, preferably flexible PVC or PVC paste.

**17.** Process for stabilizing chlorinated polymers according to Claim 16, **characterized in that** the flexible PVC is suitable for the manufacture of floors, motor vehicle parts, wallpaper, flexible films, pipes, injection mouldings or preferably for wire sheathing (cables).

**18.** Process for stabilizing synthetic polymers according to Claim 16, **characterized in that** the chlorinated polymer is rigid PVC.

**19.** Process for stabilizing chlorinated polymers according to Claim 18, **characterized in that** the rigid PVC is suitable for the production of films (including Luvitherm), PVC pipes or profiles, preferably of window profiles.

## Revendications

**1.** Composition contenant au moins un polymère synthétique et au moins le complexe interne triéthanolamine-perchloratosodium polymère de coordination comportant le motif monomère de formule **(A-1)** :

[[TEA)NaPc] **(A-1)**

dans laquelle
TEA = triéthanolamine et Pc = perchlorato

**2.** Composition selon la revendication 1, **caractérisée en ce que** le polymère synthétique consiste en un polymère halogéné, de préférence en PVC.

**3.** Système stabilisant pour la stabilisation thermique de polymères synthétiques contenant le complexe interne triéthanolamine-perchloratosodium polymère de coordination comportant le motif monomère de formule **(A-1) :**

[(TEA)NaPc] **(A-1)**

dans laquelle

TEA = triéthanolamine et Pc = perchlorato et lequel système contient en outre un uréide linéaire ou cyclique (cyanoacétylurée substituée, acide iminobarbiturique substitué, amino-uracile substitué, hydantoïne) et/ou un ester d'acide 3-aminocrotonique et/ou un ester d'acide dihydropyridine-dicarboxylique de formules **(B-1), (B-2), (C-1)** et **(C-2)**

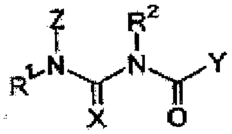

**(B-1)** **et**

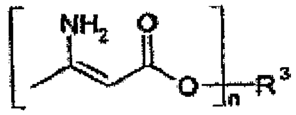

**(B-2)**

ainsi que

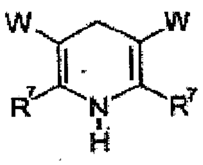

**(C-1)**

et

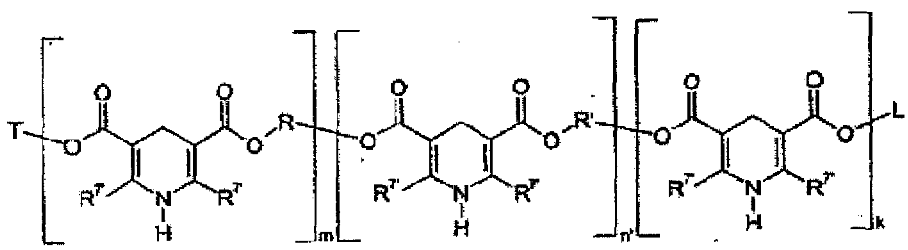

**(C-2)**

où

**X** = O ou S ; **Y** = $CH_2CN$, **Z** = H ou **Y** et **Z** forment le chaînon pontant $CH_2$-C=NH, $CR^5$=C-$NHR^6$ ou $R^1R^2C$.
**$R^1$, $R^2$** représentent, indépendamment l'un de l'autre, H, un groupe alkyle en $C_1$-$C_{22}$, cyclohexyle, (méth)allyle, oléyle, phényle, benzyle, phénéthyle, (tétrahydro)naphtyle, méth(ou éth)oxypropyle(ou -éthyle), $CH_2$-CHOH-$R^{1a}$, $CH_2$-CHOH-$CH_2$X'$R^{1a}$ ;
**X'** = O ou S ;
**$R^{1a}$** représente H, un groupe alkyle en $C_1$-$C_{22}$, cyclohexyle, (méth)allyle, oléyle, phényle, benzyle, phénéthyle, (tétrahydro)naphtyle ou méth(ou éth)oxypropyle(ou -éthyle) ;
**R3** représente un groupe alkylène en $C_2$-$C_{20}$ ramifié ou non ramifié, qui peut être interrompu par 1 à 4 atomes d'oxygène ou de soufre et/ou substitué par 1 à 4 groupes OH, ou un groupe diméthylol-cyclohexan-1,4-diyle, polyéthylène(ou -propylène)glycol-$\alpha,\omega$-diyle (de préférence poly = tétra à déca), polyglycéryl-$\alpha,\omega$-diyle (de préférence poly = tétra à déca) ou glycérol-triyle, triméthyloléthane(ou -propane)-triyle, pentaérythritol-tri(ou -tétra)yle, bis-trimethyloléthane(ou -propane)-tri (ou -tétra)yle, diglycérol-tri (ou -tétra)yle, tétritol-tétrayle, triglycérol-tri(ou -tétra,-penta)yle, pentitol-pentayle, dipentaérythritol-penta(ou -hexa)yle et hexitol-hexayle ;
**n** = 2, 3, 4, 5 ou 6.
**$R^5$** représente H ou un groupe (alkylidène en $C_3$-$C_{10}$)$_{1/2}$, ce groupe alkylidène pouvant être interrompu par 2

atomes d'oxygène ou pouvant porter jusqu'à 2 substituants choisis indépendamment dans l'ensemble constitué par les groupes OH, phényle et hydroxy-phényle ;
**$R^6$** représente H, un groupe hydroxy-alkyle ($C_2$-$C_4$), 3-[alcoxy($C_1$-$C_{10}$)]-2-hydroxypropyle ou mono- à trihydroxy-, mono- à tri-alkyl($C_1$-$C_4$)- et/ou mono- à tri-alcoxy ($C_1$-$O_4$)-phényle, allyle, phényle mono- à trisubstitué ;
**$R^7$, $R^{7'}$** représentent, indépendamment l'un de l'autre, un groupe alkyle en $C_1$-$C_4$ ramifié ou non ramifié, phényle, cyclohexyl, ;
**W** = $CO_2CH_3$, $CO_2C_2H_5$, $CO_2{}^nC_{12}H_{25}$ ou $CO_2C_2H_4$-S-$^nC_{12}H_{25}$ ;
**L, T** représentent un groupe alkyle en $C_1$-$C_{12}$ non substitué ;
et
**m** et **n'** représentent des nombres entiers allant de 0 à 20,
**k** est 0 ou 1 et
**R** et **R'** représentent, indépendamment l'un de l'autre, un groupe éthylène, propylène, butylène ou un groupe alkylène ou cycloalkylène-bisméthylène du type -($C_pH_{2p}$-X"-)$_t$$C_pH_{2p}$-, **p** étant un nombre entier allant de 2 à 8, **t** étant un nombre entier allant de 0 à 10 et **x"** représentant un atome d'oxygène ou de soufre.

4. Système stabilisant selon la revendication 3, **caractérisé en ce qu'**on y ajoute en outre de l'oxyde ou hydroxyde de magnésium ou de calcium et/ou un savon de magnésium ou de calcium et/ou un stabilisant au Ca/Zn et/ou une zéolithe sodique A et/ou une dawsonite et/ou une hydrotalcite (contenant éventuellement du lithium ou du titane) et/ou un hydroxo-hydrogénophosphite de Ca/Al et/ou un composé glycidylique et/ou un ester d'acide gras époxydé et/ou une mélanine et/ou un ester d'acide phosphoreux et/ou du 2-naphtol et/ou un cyanamide de formule **(E)**

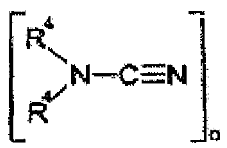

**(E)**

dans laquelle les radicaux **$R^4$** représentent, indépendamment l'un de l'autre, un atome d'hydrogène, un groupe nitrilo, carbamoyle, $R^1$, $R^2$, $R^1CO$, $R^2CO$, Na, K, $Mg_{1/2}$ ou $Ca_{1/2}$ ou **$R_2{}^4$** représente un groupe tétra-, penta- ou hexaméthylène et o est 1, 2 ou 3.

5. Système stabilisant selon l'une quelconque des revendications 3 ou 4, **caractérisé en ce qu'**on y ajoute une amine à empêchement stérique (HALS) et/ou un antioxydant et/ou un absorbant UV (dérivé de benzotriazole) et/ou du dioxyde de titane et/ou de la craie.

6. Système stabilisant selon la revendication 5, **caractérisé en ce que** l'amine à empêchement stérique (HALS) est un composé NOR-HALS.

7. Système stabilisant selon la revendication 6, **caractérisé en ce que** le composé NOR-HALS est un composé à base de triazine.

8. Système stabilisant selon l'une quelconque des revendications 3 à 7, **caractérisé en ce qu'**il contient en outre un éther et/ou ester de glycérol, $R^8OCH_2CH(OH)CH_2OH$ ou $R^8CO_2CH_2CH(OH)CH_2OH$ et/ou un dérivé de DEA
$R^9$-$[C(O)]_d$-$N(C_2H_4OH)_2$ ou
$R^8OCH_2CH(OH)CH_2$-$[C(O)]_d$-$N(C_2H_4OH)_2$ ou
$R^9$-$N(OH)(CH_2)_2(CH_2)_3$-$[C(O)]_d$-$N(C_2H_4OH)_2$ et/ou un sulfate(ou sulfonate) de paraffine
alkyl($C_{12}$-$C_{18}$)-$(O)_d$-$SO_3Na$, Li, K et/ou un polyoxyalkylène de formule **(F)**

$$R^8\text{-O-}[CH(R^{10})\text{-}CH_2\text{-O-}]_a\text{-}[CH_2\text{-}[CH(OH)]_b\text{-}CH_2\text{-O}]_c\text{-}[C(O)]_d\text{-}R^9 \qquad \textbf{(F)}$$

dans laquelle

chaque radical **$R^8$** représente indépendamment un atome d'hydrogène, un groupe alkyle en $C_1$-$C_{24}$, alcényle en $C_2$-$C_{24}$, $CH_2$=CH-C(O) ou $CH_2$=$CCH_3$-C(O) ;
chaque radical **$R^9$** représente indépendamment un groupe alkyle en $C_1$-$C_{24}$, alcényle en $C_2$-$C_{24}$, $(CH_2)_2OH$,

$CH_2$-COOH ou N[alkyl($C_1$-$C_8$)]$_3$Hal,
**$R^{10}$** représente un atome d'hydrogène ou $CH_3$,
**Hal** = Cl, Br ou I ;
a représente un nombre entier supérieur ou égal à 2,
**b** représente un nombre entier allant de 1 à 6, et
**c, d, d', d"** représentent, indépendamment les uns des autres, 0 ou 1.

9. Composition contenant un polymère synthétique et un système stabilisant selon l'une quelconque des revendications 3 à 8.

10. Composition selon la revendication 9, **caractérisée en ce que** le polymère synthétique est un polymère chloré, le PVC de préférence.

11. Composition selon la revendication 10, **caractérisée en ce que** le polymère chloré est un PVC rigide, souple, en suspension ou en émulsion.

12. Composition selon l'une quelconque des revendications 9 à 11, **caractérisée en ce que** 0,001-1,0 parties en poids du complexe interne **(A)** sont contenues par rapport à 100 parties en poids de polymère synthétique.

13. Composition selon l'une quelconque des revendications 9 à 12, **caractérisée en ce que** 0,01-10 parties en poids d'amine à empêchement stérique et/ou de composé NOR-HALS et/ou d'absorbant UV et/ou de dioxyde de titane sont contenus.

14. Composition selon l'une quelconque des revendications 9 à 13, **caractérisée en ce que** le polymère synthétique contient du PVC souple et le système stabilisant contient de l'éther diglycidylique de 1,4-cyclohexanediméthanol.

15. Procédé pour la stabilisation de polymères synthétiques par addition d'un système stabilisant selon l'une quelconque des revendications 4 à 9 au polymère synthétique.

16. Procédé pour la stabilisation de polymères synthétiques selon la revendication 15, **caractérisé en ce que** le polymère synthétique représente un polymère chloré, de préférence un PVC rigide ou un PVC en pâte.

17. Procédé pour la stabilisation de polymères chlorés selon la revendication 16, **caractérisé en ce que** le PVC souple est approprié à la fabrication de sols, de pièces d'automobiles, de papiers de tapisserie murale, de films souples, de tuyaux souples, de pièces moulées par injection ou de préférence pour des gainages de fils métalliques (câbles).

18. Procédé pour la stabilisation de polymères synthétiques selon la revendication 16, **caractérisé en ce que** le polymère chloré est un PVC rigide.

19. Procédé pour la stabilisation de polymères chlorés selon la revendication 18, **caractérisé en ce que** le PVC rigide est approprié à la fabrication de films (également Luvitherm), de profilés ou de tubes en PVC, de préférence de profilés pour fenêtres.

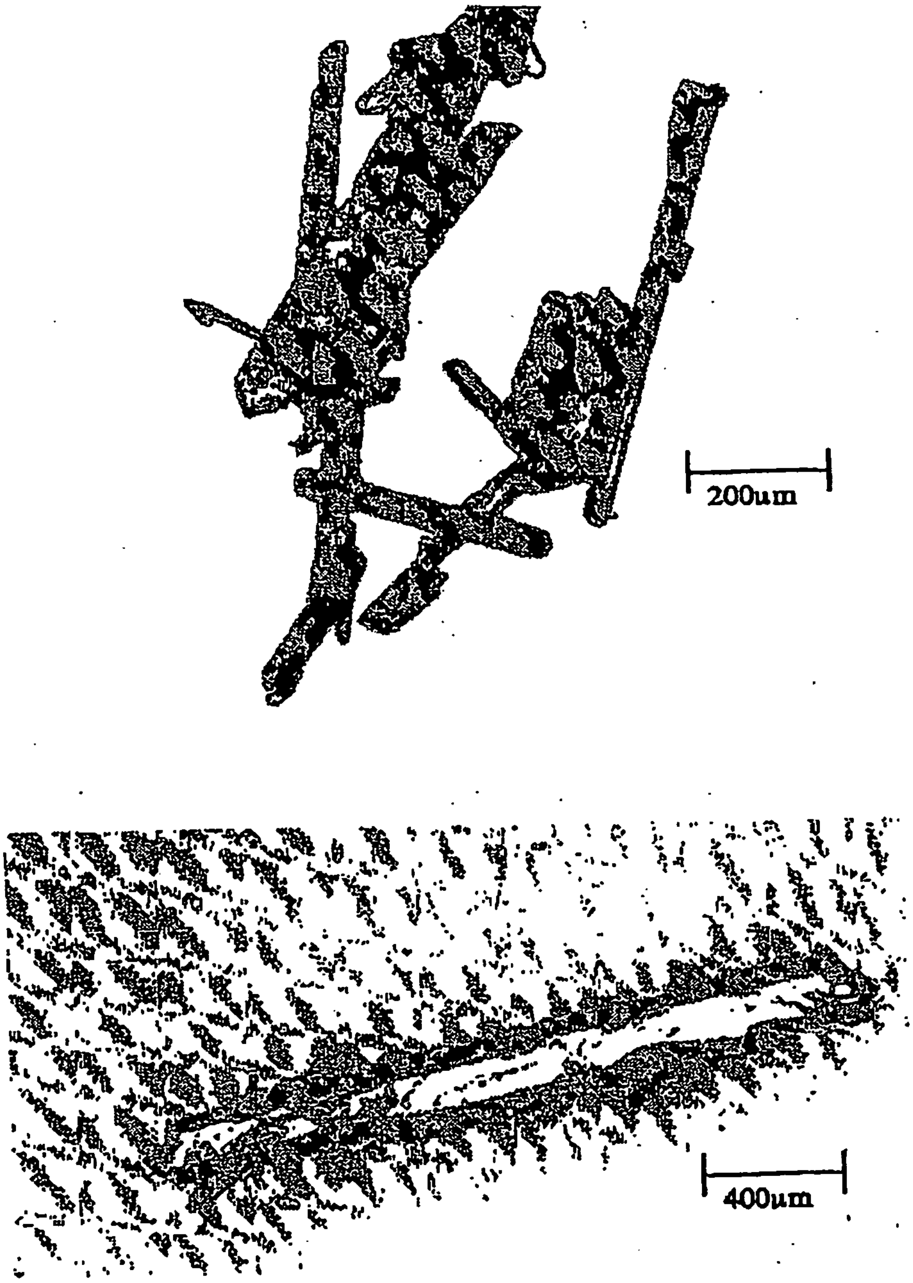


Abbildung 1: TEAP-Kristalle

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 59184240 B
- JP 6219732 B
- JP 03097748 B
- US 4957954 A
- EP 273766 A
- JP 03126745 B
- EP 768336 A2
- EP 522810 A2
- DE 10160662 A1
- DE 10214152 A1
- JP 61009451 B
- JP 1090242 A
- DE 2540655 A
- DE 10124734 A1
- JP 53016750 B
- EP 394547 A2
- WO 0248249 A
- WO 9424200 A
- US 5034443 A
- US 5225108 A
- EP 1404756 A1
- DE 3843581 A1
- US 4000100 A
- EP 0062813 A1
- WO 9320135 A
- DE 10217364 A1
- DE 4425266 A1
- EP 0549340 A1
- JP 0761756 A
- EP 0761756 A1
- DE 4425266 C1
- WO 9521127 A
- EP 0506831 A1
- US 6531533 B
- US 6096820 A
- US 3501264 A
- US 4221771 A
- EP 0394670 A
- US 455055284 B
- EP 0506617 A
- DE 4031818 A1
- EP 0751179 A1
- EP 0346279 A1
- EP 0307358 A1
- US 4339383 A
- EP 0433230 A
- EP 0734414 A1
- DE 2809492 A1
- EP 0090770 A1
- EP 0573394 A1
- FR 2459816 A
- EP 0090748 A1
- FR 2552440 A
- EP 0365483 A1
- GB 1694873 A
- EP 303564 A1
- EP 0930332 A1
- EP 0259783 A1
- WO 0205206 A
- DE 19756913 A1
- DE 19927977 A1
- DE 19927978 A1
- DE 19927979 A1
- EP 1299466 A1
- DE 10107329 A1
- EP 0768336 A1
- EP 0174412 A
- EP 0967245 A1
- EP 0967209 A1
- EP 0967208 A1
- EP 0962491 A1
- EP 1044968 A1
- WO 02072684 A
- WO 02048249 A
- DE 19741778 A1
- EP 286887 A


### In der Beschreibung aufgeführte Nicht-Patentliteratur


- **S. RIETHMAYER.** Gummi, Asbest, Kunststoffe (GAK). 1973, vol. 4, 298-308
- **J.G. VERKADE.** *Inorg. Chem.,* 1994, vol. 33, 2137
- **D.S.VAN ES.** Catalytic Heat Stabilisers: Fact or Fiction?. *Intern. PVC Conf.,* April 2005
- Ullmanns Encyclopedia of Industrial Chemistry. 1985, vol. A16, 361 ff
- **E. J. WICKSON.** Handbook of PVC-Formulating. John Wiley & Sons, 1993
- **E. J. WICKSON.** HANDBOOK OF PVC FORMULATING. John Wiley & Sons, 1993, 393-449

- **R. GÄCHTER ; H. MÜLLER.** TASCHENBUCH DER KUNSTSTOFFADDITIVE. Carl Hanser, 1990, 549-615
- TASCHENBUCH DER KUNSTSTOFFADDITIVE. 408-412
- **R. GÄCHTER ; H. MÜLLER.** TASCHENBUCH DER KUNSTSTOFFADDITIVE. Carl Hanser Verlag, 1989, 412-415
- **W.V. TITOW.** PVC TECHNOLOGY. Elsevier Publ, 1984, 165-170
- **E. J.WICKSON.** HANDBOOK OF PVC FORMULATING. John Wiley & Sons, 1993
- **R. GÄCHTER ; H. MÜLLER.** HANDBUCH DER KUNSTSTOFFADDITIVE. Carl Hanser Verlag, 1989
- **E. J. WICKSON.** HANDBOOK OF POLYVINYL CHLORIDE FORMULATING. J. Wiley & Sons, 1993
- **G. PRITCHARD.** PLASTICS ADDITIVES. Chapman & Hall, 1998
- **J. T. LUTZ ; D. L. DUNKELBERGER.** IMPACT MODIFIERS FOR PVC. John Wiley & Sons, 1992
- **R. GÄCHTER ; H. MÜLLER.** HANDBUCH DER KUNSTOFFADDITIVE. Carl Hanser Verlag, 1989
- **W. BECKER ; H. BRAUN.** KUNSTSTOFFHANDBUCH PVC. Carl Hanser Verlag, 1985, vol. 2/2, 1236-1277